# EUROPEAN PATENT APPLICATION

(11) **EP 2 261 796 A2**
(43) Date of publication of application: **15.12.2010**
(21) Application number: 10179312.3
(22) Date of filing: 14.05.2002
(51) Int. Cl.: G06F 9/06, G06F 13/00, G06F 9/445, H04L 9/10

(54) **System for managing program stored in storage block of mobile terminal**

(30) Priority: 14.05.2001 JP 2001143810
(62) Divisional of application: 02769588.1
(71) Applicant: NTT DoCoMo, Inc., Tokyo 100-6150 (JP)
(72) Inventor: Natsuno, Takeshi, Tokyo 100-6150 (JP); Yamamoto, Masaaki, Tokyo 100-6150 (JP); Washio, Satoshi, Tokyo 100-6150 (JP); Kawabata, Hiroshi, Tokyo 100-6150 (JP)
(74) Representative: HOFFMANN EITLE

(57) **Abstract**

A management server (16) in an application delivery system receives a first and second application to be transmitted to at least one mobile terminal and storing data on the first and second application. At least one mobile terminal (11) receives and stores the first and second application from the management server in combination with the reliability information. The mobile terminal (11) comprises memory controller configured to enable access data and features associated with the first and second application already stored in the mobile terminal as a function of the reliability information of the first and second application. The reliability information is a reliability index and the mobile terminal is configured to compare a value of the reliability index of a first application to a value of the reliability index of a second application, the mobile terminal further configured to enable the first application to access at least one of features and data associated with the second application when the value of the reliability index of the second application is one of equal and less than the value of the reliability index of the first application.

## Description

### Technical Field

The present invention relates to a system for managing programs (including applets) stored in a storage unit, which is installed in or attached to a mobile terminal.

### Background Art

In recent years, mobile terminals, which are equipped with nonvolatility memories of comparatively large storage capacity for storing application programs, which are not stored when the mobile terminals are purchased by their users, and which can execute the application programs, have been developed.

The users of the above-mentioned mobile terminals can delete unnecessary application programs from the nonvolatility memories and write other application programs into the nonvolatility memories. Therefore, the users of mobile terminals can use new application programs without replacing old mobile terminals with new mobile terminals.

In some of the above-mentioned mobile terminals, which can write application programs into the memories, Java virtual machines are installed. The mobile terminals, in which Java virtual machines are installed, can download Java application programs (including Java applets) through mobile communication networks, write the downloaded Java application programs into their nonvolatility memories, and execute the programs. (Application programs including applets are referred to as 'applications' hereinafter.)

The above-mentioned mobile terminals can be inconvenient to use in situations where their users want to access several applications in a series of operations.

Following is an example, which describes the above-mentioned drawback of the prior art, wherein, a user of a mobile terminal needs to access application A for making an application for purchasing commodities by mail order, and application B for making the payment for the purchases. In the present example, the user, firstly makes an application for the purchase of a certain commodity using application A. At this stage, the user has not made the payment for the purchased commodity yet, and the user takes down the necessary information for making the payment, namely the amount, the name of the bank to which the money is to be remitted, the bank account details for making the remittance, and so on, all of which is written down on a piece of paper, and terminates application A. Next, the user accesses application B to remit the money to make the payment. By using application B, the user can remit the desired amount of money from a certain bank account of the user to any appointed bank account. The user inputs the payment amount, the name of the bank, the bank account details for the remittance, and so on, into the mobile terminal which executes application B, while all along referring to the information which was written down on a piece of paper in the previous step. Then, the user terminates application B, and starts application A again to confirm that the remittance was done successfully and that all the procedures for purchasing the merchandise has been completed. The user inputs a command so that the mobile terminal, which is executing application A, displays a screen showing the commodity purchase history, and the user confirms that the remittance for the purchased commodity has been confirmed by the seller, and at the same time, the user gets some additional information such as the date of delivery of the commodity etc.

As the above-mentioned example of the conventional art describes, users of mobile terminals need to change applications and input necessary data manually when users need to make several applications using a series of operations. As a result, the operations take time and the users may feel the operations bothersome, as well as make mistakes while inputting information, which can cause problems in conducting business.

### Disclosure of the Invention

To overcome the inconvenience of the conventional art, which is mentioned above, the inventors of the present application developed the idea; of pre-storing several applications in the nonvolatility memories of mobile terminals, enabling them to execute coordinated operations. However, if functions or data of an application are used for another application without any restriction, it will not be possible to maintain information security.

For example, a mobile terminal stores application C for managing schedules of users of mobile terminals and application D for transmitting and receiving emails. Application C manages information concerning the schedule of the user of a mobile terminal, which the user would like to keep private. However, if application D is permitted to use the functions or data of application C without any restriction, when the user uses application D to send emails to his/her friends, there is a risk that the information concerning the schedule which is managed by application C can be transmitted to his/her friends. A transmission by default, of information to be kept private can take place, even because of trifling operational mistakes or bugs in application D. Therefore security of information cannot be ensured for users of mobile terminals when using applications.

Leakage of information as mentioned above, as well as, destruction of information, unauthorized rewriting of information, and so on, are serious problems especially in the case of mobile terminals which may handle valuable information such as personal information and monetary information.

As a method to overcome the problem stated above, the inventors of the present application developed the idea that in order to ensure security in communication, the reliability of applications should be first determined; for which, information concerning the reliability of each application is prepared in advance and the operations of each of applications, which are related to one another, are to be managed on the basis of the information concerning their reliability. Namely, applications which are judged, after adequate evaluation, to be highly reliable, and known not to cause problems in handling important information can be permitted to use functions and data of applications judged to be of low reliability. On the other hand, applications with low reliability are not permitted to use functions or data of applications of high reliability. As a result, the accidental leaking, or destroying of data of high reliability applications due to being handled by applications with a low reliability, can be prevented.

To be more precise, the present invention provides a method for managing programs, the method comprising: a program- obtaining step of a mobile terminal obtaining a program, which can be executed by the mobile terminal, and storing the program in a memory of the mobile terminal; a coordination information- obtaining step of the mobile terminal for obtaining coordination information, which is used for managing at least one of start of another program, which is other than the program, by the program and the communication of data with the other program, and storing the coordination information in a memory of the mobile terminal, and; an operation- managing step of the mobile terminal determining conditions of at least one of start of the other program and the communication of data with the other program on the basis of the coordination information, which corresponds to the program, in the instance that the other program is requested to execute an operation when the program, which is stored in the memory, is under execution.

The present invention also provides a program management system, the system comprising: a communication network, which contains a delivering server, a managing server, and a mobile terminal; wherein, the delivery server comprises a program- storing unit for storing a program, and a program-transmitting unit for transmitting the program to the mobile terminal; the managing server comprises a coordination information- storing unit for storing coordination information, concerning the control of the coordinated operations of the program and another program, which is other than the program, and a coordination information- transmitting unit for transmitting the coordination information to the mobile terminal, and; the mobile terminal comprises a program- receiving unit for receiving the program from the delivering server, a coordination information- receiving unit for receiving the coordination information from the managing server, a program- storing unit for storing the program, a coordination information- storing unit for storing the coordination information, and an operation- managing unit for determining conditions of at least one of start of the other program and the communication of data with the other program on the basis of the coordination information, which corresponds to the program, in the instance that the other program is requested to execute an operation when the program is under execution.

The present invention also provides a server for a communication network containing a mobile terminal, the server comprises: a coordination information- storing unit for storing coordination information, which is used for determining conditions of at least one of start of a program and communication of data with the program in the instance that the program is requested to execute an operation when another program, which is other than the program, is under execution, and; a coordination information- transmitting unit for transmitting the coordination information to the mobile terminal.

The present invention also provides a mobile terminal comprising: a program- storing unit for storing a program; a coordination information-storing unit for storing coordination information concerning control of coordinated operations of the program and another program, which is other than the program, and; an operation- managing unit for determining conditions of at least one of start of the other program and the communication of data with the other program on the basis of the coordination information in the instance that the other program is requested to execute an operation when the program is under execution.

The present invention also provides a program and a record medium containing the program, the program permitting a computer of a managing server for managing programs in a communication network, which contains a mobile terminal: to transmit coordination information, which is used in the mobile terminal for determining conditions of at least one of start of a program and communication of data with the program in the instance that the program is requested to execute an operation when another program, which is other than the program, is under execution, to the mobile terminal.

The present invention also provides a program and a record medium containing the program, the program permitting a computer of a mobile terminal: to obtain coordination information concerning control of coordinated operations of programs, and; determine conditions of at least one of start of a program and communication of data with the program in the instance that the program is requested to execute an operation when another program, which is other than the program, is under execution.

According to the program management method, the program management system, the server, the mobile terminal, the program, and the record medium, stated above, the operations of a plurality of programs, which are executed in a mobile terminal are coordinated on the basis of the coordination information according to the reliability of each program, and as a result, deterioration of information security caused by leakage of information, etc. is prevented when the coordinated operations are executed following the plurality of programs.

### Brief Description of the Drawings

Fig.1 is a block diagram showing an overall configuration of an application delivery system according to the first embodiment and the second embodiment of the present invention.
Fig.2 is an external view of a mobile terminal according to the first embodiment and the second embodiment of the present invention.
Fig.3 is a block diagram showing a general outline of a configuration of a mobile terminal according to the first embodiment and the second embodiment of the present invention.
Fig.4 is a diagram showing data components of memory of a mobile terminal according to the first embodiment and the second embodiment of the present invention.
Fig.5 is a block diagram showing a general outline of a configuration of a management server according to the first embodiment and the second embodiment of the present invention.
Fig.6 is a diagram showing a configuration of application information management system according to the first embodiment and the second embodiment of the present invention.
Fig.7 is a format chart showing an example of data stored by a user information- storing unit according to the first embodiment and the second embodiment of the present invention.
Fig.8 is a format chart showing an example of data stored in a registration application area of an application information- storing unit according to the first embodiment of the present invention.
Fig.9 is a format chart showing an example of data stored in a temporary custody application area of an application information- storing unit according to the first embodiment and the second embodiment of the present invention.
Fig.10 and Fig.11 are flowcharts showing an application- storing operation by a management server according to the first embodiment and the second embodiment of the present invention.
Fig.12 and Fig.13 are images showing screens, which are displayed in a mobile terminal when an application, which is publicized by a management server, is purchased according to the first embodiment and the second embodiment of the present invention.
Fig.14 and Fig.15 are flowcharts showing a purchasing operation of an application, which is publicized by a management server according to the first embodiment and the second embodiment of the present invention.
Fig.16 and Fig.17 are flowcharts showing a purchasing operation of an application, which is judged to have a certain reliability but not publicized by a management server according to the first embodiment and the second embodiment of the present invention.
Fig.18, Fig.19, and Fig.20 are flowcharts showing a purchasing operation of an application, which is not given any reliability according to the first embodiment and the second embodiment of the present invention.
Fig.21 and Fig.22 are images showing screens, which are displayed in a mobile station when an application is downloaded according to the first embodiment and the second embodiment of the present invention.
Fig.23, Fig.24, and Fig.25 are flowcharts showing an application downloading operation according to the first embodiment and the second embodiment of the present invention.
Fig.26 is images showing screens, which are displayed in a mobile station when an application starting operation according to the first embodiment and the second embodiment of the present invention.
Fig.27, Fig.28, Fig.29, Fig.30, and Fig.31 are images showing screens, which are displayed in a mobile station in the instance that a plurality of applications do not execute coordinated operations according to the first embodiment of the present invention.
Fig.32, Fig.33, and Fig.34 are images showing screens, which are displayed in a mobile station in the instance that a plurality of applications execute coordinated operations according to the first embodiment of the present invention.
Fig.35 is a format chart showing an example of authorization information between applications according to the second embodiment of the present invention.
Fig.36 is a format chart showing an example of data stored in a registration application area of an application information- storing unit according to the second embodiment of the present invention.
Fig.37 is a format chart showing an example of data stored in a registration application area of an application information storing unit according to the third embodiment of the present invention.
Fig.38 is a diagram showing a configuration of an application information management system according to the third embodiment of the present invention.
Fig.39 is a format chart showing an example of data stored by a user information- storing unit according to the third embodiment of the present invention.
Fig.40, Fig.41, and Fig.42 is a flowchart showing an application purchasing operation and an application downloading operation according to the third embodiment of the present invention.

### Best Mode for Carrying out the Invention

In the following paragraphs, the preferred embodiments of the present invention are explained.

### [1] First embodiment

### [1.1] Configuration

### [1.1.1] Overall configuration of application delivery system

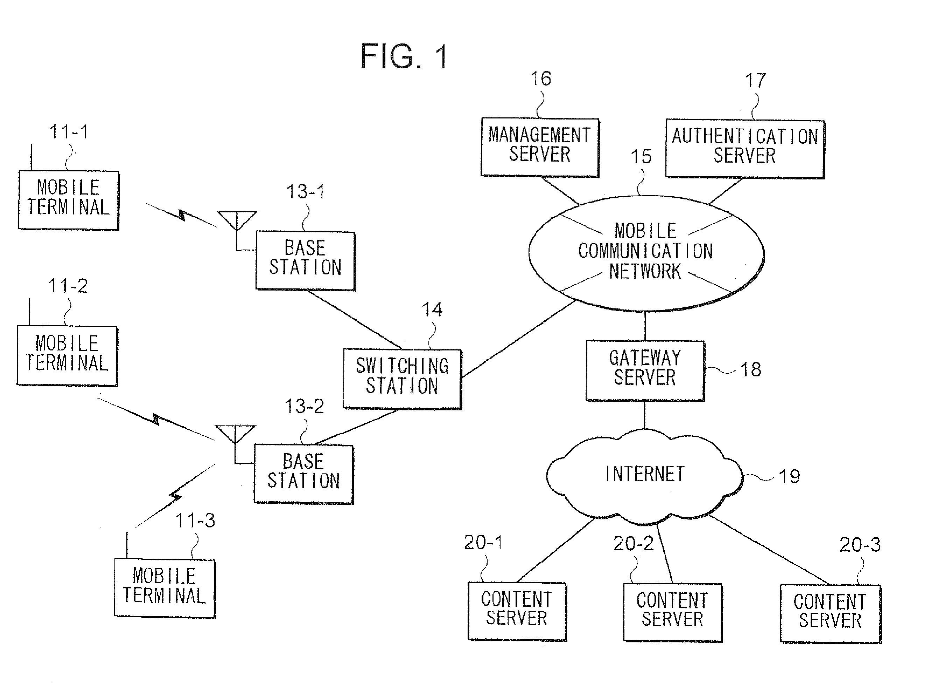

Fig.1 is a block diagram, which shows the outline of the overall configuration of the application delivery system in the embodiments of the present invention.

The application delivery system comprises a plurality of mobile terminals namely, mobile terminals 11-1, 11-2, ···, a plurality of base stations namely, base stations 13-1, 13-2, ···, a plurality of switching stations 14, mobile communication network 15, management server 16, authentication server 17, gateway server 18, Internet 19, and a plurality of content servers namely, content servers 20-1, 20-2, ···, Each mobile terminal is referred to as 'mobile terminal 11', each base station is referred to as 'base station 13', each content server is referred to as 'content server 20', hereafter respectively, if there is no need to distinguish them from other apparatuses of the same kind. Mobile terminal 11 is an information processing apparatus having a wireless communication function such as a mobile phone and a Personal Handyphone System (PHS; registered trademark). Mobile terminal 11 is equipped with a built-in nonvolatile memory or an external nonvolatile memory, which can store applications. Mobile terminal 11 downloads applications from management server 16 through mobile communication network 15, switching station 14, and base station 13, and it writes the downloaded applications into its nonvolatile memory. The user of mobile terminal 11 can execute, at any time according to the user's choice, the applications written into the nonvolatile memory of mobile terminal 11.

Base station 13 is connected to mobile communication network 15 by communication cables through switching station 14. When mobile terminal 11, which is located in a radio zone assigned to base station 13, makes a call to mobile communication network 15, or mobile communication network 15 makes a call to mobile terminal 11, base station 13 establishes a wireless connection with mobile terminal 11, and relays communication between mobile terminal 11 and mobile communication network 15. Base station 13 keeps track of the existence of each of mobile terminals 11 in the assigned radio zone by communicating through control signals frequently, with each of mobile terminals 11 by radio, and transmits the information of the existence of mobile terminals 11 as positional information of mobile terminals 11 to mobile communication network 15.

Switching station 14 is connected to base station 13 and to mobile communication network 15 by communication cables, and establishes a communication channel between mobile terminal 11, which has established wireless connection with base station 13, and mobile communication network 15. Moreover, when mobile terminal 11, which has established communication connection with mobile communication network 15, moves from one radio zone managed by one of switching stations 14 to another radio zone managed by another of switching stations 14, switching stations 14 execute a switching operation of communication connections between switching stations maintaining the established communication connection.

Mobile communication network 15 is a communication network comprising switching stations 14, which are mutually connected through gateway switching station (not shown) by means of communication cables. Mobile communication network 15 establishes communication channels between mobile terminals 11 through switching stations 14 and base stations 13. Mobile communication network 15 is also connected to other communication networks (not shown), such as a fixed telephone network. Moreover, mobile communication network 15 is connected to Internet 19 through gateway server 18. Mobile communication network 15 is equipped with position registration memory units (not shown), and the position registration memory units store the positional information of mobile terminals 11, which is transmitted by each of base stations 13. When mobile communication network 15 makes a call to mobile terminal 11, mobile communication network 15 transmits a connection request to base station 13, which can establish wireless connection with mobile terminal 11 referring to the information stored by the position registration memory units.

Management server 16 is a server for delivering applications to mobile terminals 11 in response to requests from mobile terminals 11. Management server 16 receives applications from content servers 20, which are providers of the applications, and stores the received applications in a database, before the applications are delivered to mobile terminals 11.

The administration entity of management server 16 examines applications provided by content server 20, if the administration entity of content server 20 requests the administration entity of management server 16 to do so; and the administration entity of management server 16 determines the reliability indexes of the applications from the view point of security of their operations in mobile terminal 11, and so on. The determined reliability indexes are recorded in a database of management server 16. When management server 16 receives a request for transmission of an application, which has a reliability index, from mobile terminal 11, management server 16 transmits the reliability index to mobile terminal 11 along with the application.

If mobile terminal 11 users an application, it is required that the application be purchased, downloaded to mobile terminal 11, and activated namely, made into a state where it becomes usable (the operation to activate an application is referred to as 'activation operation' hereinafter). When management server 16 receives a request for purchasing an application from mobile terminal 11, management server 16 prepares a transmission of the requested application. When the application is downloaded to mobile terminal 11, management server 16 appoints an area for storing the application in the memory of mobile terminal 11, and permits mobile terminal 11 to store the application in the area. Moreover, management server 16 instructs mobile terminal 11 to execute an activation operation for the application. When management server 16 completes the preparation of transmission of an application or an activation operation of an application, management server 16 transmits information concerning these operations to a charge management server (not shown), which is connected to mobile communication network 15. After the charge management server receives the information concerning completion of the preparation of transmission or an activation operation from management server 16, the charge management server calculates the usage charges of the application for mobile terminal 11 on the basis of the information.

Authentication server 17 is a server, which manages public keys of mobile terminals 11, management server 16, content servers 20, and authentication server 17 in a public key system. When authentication server 17 receives a request for a public key from any of mobile terminals 11, management server 16, or content servers 20, authentication server 17 transmits the public key, which is requested to the apparatus, which requests the public key.

Content server 20 stores one or several applications, which are developed according to the specification of mobile terminal 11, and transmits the applications to management server 16 in response to requests for the applications made by management server 16. The administration entity of content server 20 can transmit the applications to the administration entity of management server 16 for carrying out examinations of the contents of the applications if necessary, and obtain reliability indexes of the applications from the administration entity of management server 16 according to the result of the examinations.

### [1.1.2] Configuration of mobile terminal

Following is a description of a configuration of mobile terminal 11, making mobile terminal 11-1 as an example of mobile terminals 11.

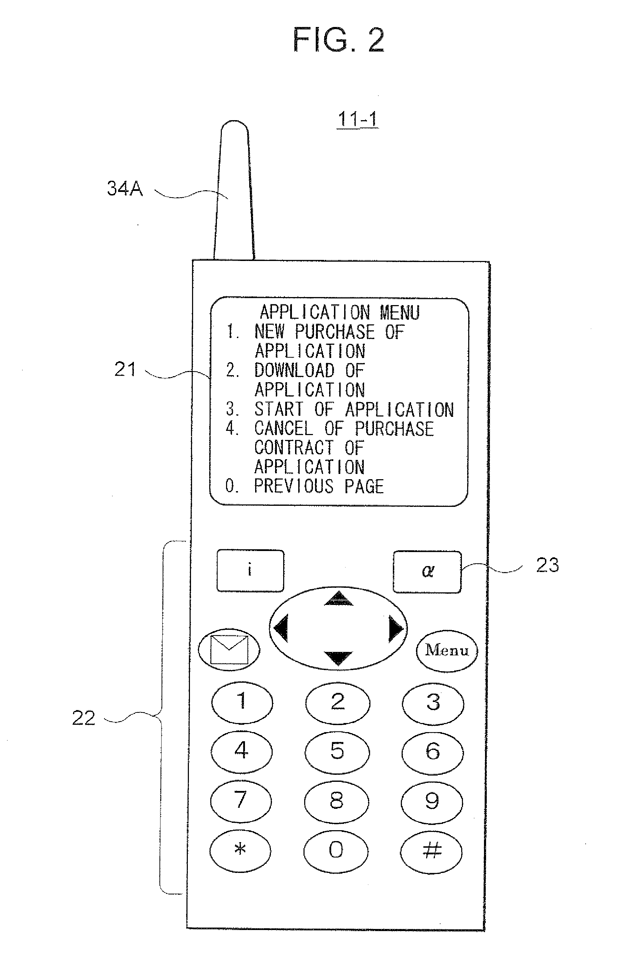

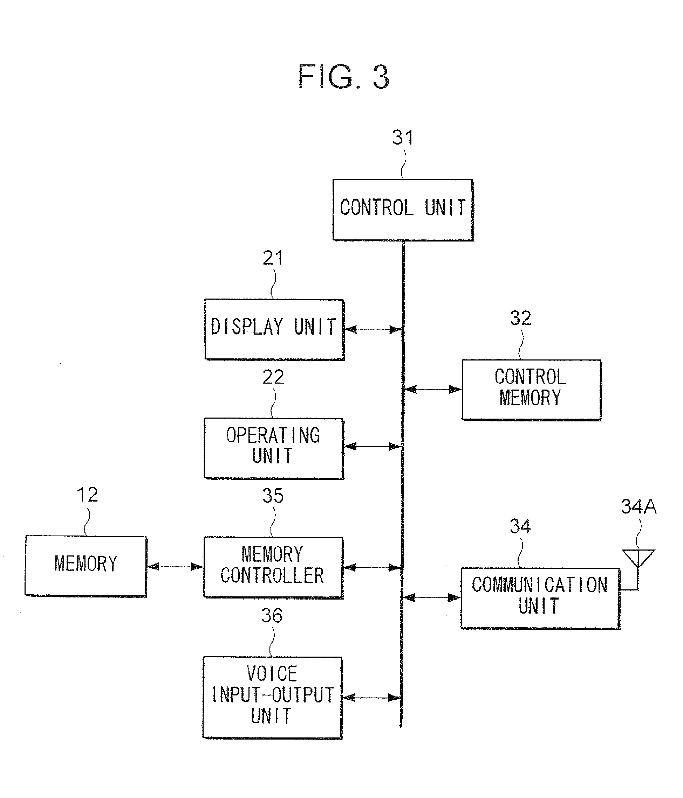

Fig.2 is an external view of mobile terminal 11-1, and Fig.3 is a block diagram showing the outline of the configuration of mobile terminal 11-1. As shown in Fig.3, mobile terminal 11-1 comprises display unit 21, operating unit 22, antenna 34A, control unit 31, control memory 32, communication unit 34, memory controller 35, memory 12, and voice input-output unit 36.

Display unit 21 is a component by which the control unit of mobile terminal 11-1 displays messages to a user of mobile terminal 11-1. Display unit 21 displays an operation menu screen for execution of applications as shown in Fig.2, as well as menu screens for other kinds of operations, browser screens for displaying information received from information sites, and various kinds of information such as strength of radio wave and telephone numbers.

Operating unit 22 is a component, which provides instructions to control unit 31. Operating unit 22 is equipped with operation buttons, on which symbols such as numbers are printed, and appli-button 23. Appli-button 23 is an operation button to which functions for simplifying operations of applications are assigned.

Antenna 34A is a component, which outputs and inputs radio wave physically when mobile terminal 11-1 executes a wireless communication.

Control unit 31 is a microprocessor, which controls all other components of mobile terminal 11-1 except memory 12. Control unit 31 controls each of the components according to the control programs, which are stored in control memory 32. Moreover, control unit 31 reads out applications from memory 12 through memory controller 35, and executes the applications. Control unit 31 can use functions or data of an application stored in memory 12 in response to requests made by a control program or an application, which is under execution. In such a case, control unit 31 transmits a request for permitting to use the functions or the data, as well as identification information of the control program or the application, which made the request, to memory controller 35. Memory controller 35 uses the identification information for judging if the request should be accepted or not. Control unit 31 can execute several control programs and applications at the same time, but control unit 31 does not allow any data to be passed between the control programs and applications directly, and all data are passed through memory controller 35.

Control memory 32 is a volatility memory or a nonvolatile memory in which control programs of control unit 31 and data managed by the control programs are stored. Control memory 32 is also used as a work area for control unit 31 to execute the control programs. The control programs include several programs, which realize basic functions of mobile terminal 11-1 such as memorizing telephone numbers, which are installed when mobile terminal 11-1 is sold.

Communication unit 34 is a component, which transmits to and receives signals from base station 13 by radio wave through antenna 34A. When mobile terminal 11-1 needs to transmit any information to base station 13, communication unit 34 modulates base band signals using signals containing digital data, which are transmitted under the control of control unit 31, and transmits radio wave signals to base station 13 by impressing voltages corresponding to the modulated signals to antenna 34A. On the other hand, when communication unit 34 receives radio wave signals from base station 13 through antenna 34A, communication unit 34 demodulates the received radio wave signals to retrieve applications or data contained in the radio wave signals. If the retrieved data are an application, communication unit 34 transmits them to memory controller 35. If the retrieved data are digital voice data, communication unit 34 transmits them to voice input and output unit 36. Otherwise, communication unit 34 transmits the retrieved data to control unit 31.

Voice input and output unit 36 inputs and outputs voice data when the user of mobile terminal 11-1 has conversations with any of the users of other mobile terminals 11, or on fixed telephones, and so on. Voice input and output unit 36 comprises a microphone (not shown), an A/D converter (not shown), a D/A converter (not shown), and a speaker (not shown). When the user of mobile terminal 11-1 talks, voice input and output unit 36 receives voice information of the user of mobile terminal 11-1 through the microphone as analogue signals, and converts the received analogue signals into digital voice data by the A/D converter, and transmits the data to communication unit 34. On the other hand, when a conversation partner of the user of mobile terminal 11-1 talks, voice input and output unit 36 converts digital voice data, which are provided by communication unit 34 into analogue signals by the D/A converter, and makes sounds by the speaker using the analogue signals.

Memory controller 35 is a microprocessor, which controls transmissions and receptions of data between memory 12 and control unit 31, and between memory 12 and communication unit 34. When communication unit 34 transmits an application, memory controller 35 writes the application in memory 12. To the application, which communication unit 34 transmits, a request for permitting to write the application in memory 12 made by management server 16, and data indicating a memory area in memory 12 where the application should be written, are attached. Memory controller 35 writes the application to the memory area, which is indicated by the attached data. If an application, which memory controller 35 receives from communication unit 34 is given a reliability index that is higher than a certain level; memory controller 35 receives the reliability index along with the application. In such a case, memory controller 35 writes the received reliability index in the same memory area where it writes the application.

When memory controller 35 receives a request for permitting to use functions or data of an application written in memory 12, namely a request for permitting to read, a request for permitting to write, and a request for permitting to delete functions or data of an application, from control unit 31, memory controller 35 judges if the request should be accepted or not, and executes a proper operation to memory 12 on the basis of the result of the judgment. The request for permitting to use functions or data of an application written in memory 12, which is made by control unit 31, contains identification information of the program, which requests the permission. When memory controller 35 receives a request for permission, memory controller 35 checks the reliability index of the program, which requests the permission. If the program, which requests the permission, is a control program for managing control unit 31, memory controller 35 accepts the request without any condition, and executes an operation to memory 12 following the request, since control programs are given the highest level of reliability index. On the other hand, if the program, which requests the permission, is an application read from memory 12, memory controller 35 specifies the memory area where the application is stored in memory 12 according to the identification information, and reads out the reliability index given to the application. If the reliability index of the application is not available, memory controller 35 treats the application as an application with the lowest level of reliability index. Then, memory controller 35 also reads out the reliability index from the memory area where the application or the data of the application, which are requested to be used, are written. Memory controller 35 compares the reliability indexes, which are obtained as explained above, and only when the reliability index of the application, which makes the request is of the same level as, or a higher level than the reliability index of the application whose functions or data are requested, does memory controller 35 accept the request, and then executes the necessary operation to memory 12 according to the request. Operations according to the permission method using reliability indexes mentioned above are explained using concrete examples in the latter part of this description.

Moreover, memory controller 35 generates a secret key and a public key of mobile terminal 11-1, and encrypts and decrypts data by use of the secret key and the public key. Memory controller 35 generates a pair of secret key and public key according to a keyword, which is input by the user of mobile terminal 11 under the control of control unit 31. Memory controller 35 transmits the public key to authentication server 17 through communication unit 34, and at the same time, stores the secret key after it takes measures for protecting the secret key against leaking from mobile terminal 11. If memory controller 35 receives data, which are encrypted by use of the public key of mobile terminal 11-1 from an external source through communication unit 34, mobile terminal 11-1 decrypts the encrypted data by use of the secret key. When memory controller 35 transmits data from memory 12 to an external body through communication unit 34, memory controller 35 encrypts the data by use of the secret key of mobile terminal 11-1 if necessary.

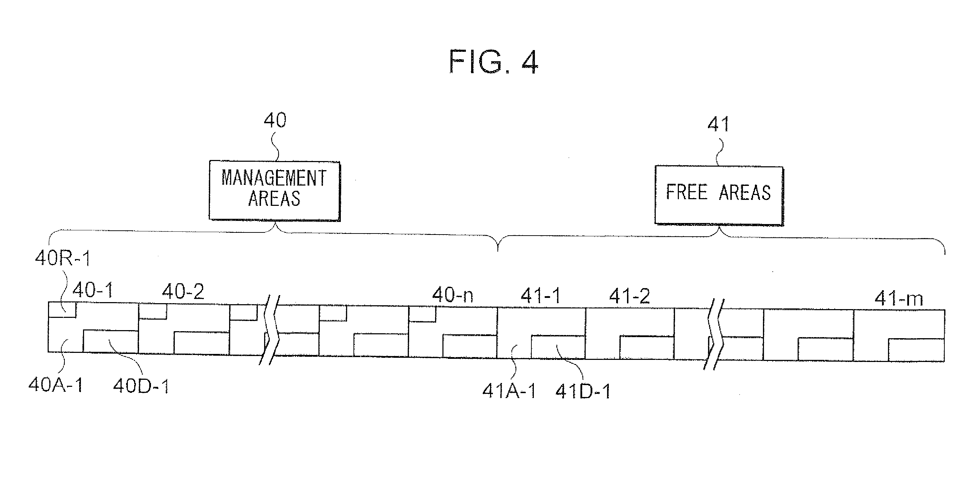

Memory 12 is a nonvolatile memory for storing applications, which are received from an external source through communication unit 34 and data, which are managed by the applications. Fig.4 is a diagram showing data components of memory 12.

Memory 12 is divided into a plurality of memory areas, which are classified into management areas 40 or free areas 41. Management areas 40 are areas for applications, which are given reliability indexes that are of a higher level than a certain level, by management server 16. Free areas 41 are areas for applications, which are not given reliability indexes of a higher level than a certain level by management server 16. Management areas 40 are composed of management area 40-1, ···, management area 40-n ('n' is an arbitrary positive integer), and free areas 41 are composed of free area 41-1, ···, free area 41-m ('m' is an arbitrary positive integer). In the following description, management area 40-1 and free area 41-1 will serve as examples of management areas 40 and free areas 41 respectively.

Management area 40-1 is divided into application area 40A-1, data area 40D-1, and reliability information area 40R-1. An Application is stored in application area 40A-1. In data area 40D-1, data, which are managed by the application stored in application area 40A-1, are stored. In reliability information area 40R-1, the reliability index, which is given to the application stored in application area 40A-1, is stored.

Free area 41-1 is divided into application area 41A-1 and data area 41D-1. An application is stored in application area 41A-1. In data area 41D-1, data, which are managed by the application stored in application area 41A-1, are stored.

The storing operation and deleting operation of the application in application area 40A-1 and application area 41A-1, and the storing operation and deleting operation of reliability index in reliability information area 40R-1, are executed by memory controller 35 according to instructions provided by management server 16. On the other hand, the reading operation of the application in application area 40A-1 and application area 41A-1, the reading operation of reliability index in reliability information area 40R-1, the writing operation of data in data area 40D-1 and data area 41D-1, the reading operation of data in data area 40D-1 and data area 41D-1, and the deleting operation of data in data area 40D-1 and data area 41D-1 are executed by memory controller 35 in response to requests made by control unit 31.

### [1.1.3] Configuration of management server

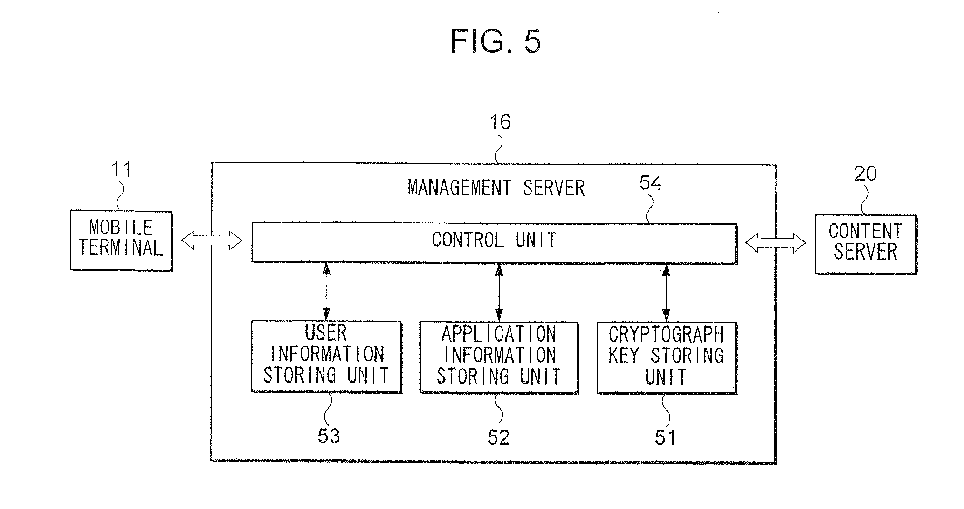

Fig.5 is a block diagram showing a general outline of a configuration of management server 16. Management server 16 comprises cryptograph key storing unit 51, application information storing unit 52, user information storing unit 53, and control unit 54.

Cryptograph key storing unit 51 is a unit for storing a secret key of management server 16 generated by control unit 54, and public keys of each of mobile terminals 11 and each of content servers 20, which are obtained from authentication server 17, in the form of databases.

Application information storing unit 52 is a unit for storing applications and information on locations where applications are stored, which are transmitted by each of content servers 20, in the form of a database along with other information of the applications such as names of the applications.

User information storing unit 53 is a unit for storing information, in a database, to recognize which applications are written in memories 12 of each of mobile terminals 11, and which applications have been purchased by users of each of mobile terminals 11 to be ready for downloading to memories 12 in response to the users' requests.

Control unit 54 is a microprocessor, which controls each of the components of management server 16. Control unit 54 controls operations of obtaining public keys from authentication server 17, obtaining applications from content servers 20, decrypting applications, which are encrypted, encrypting applications, which are to be transmitted to mobile terminals 11, and delivering the applications to mobile terminals 11. Moreover, control unit 54 updates the data in the databases of cryptograph key storing unit 51, application information storing unit 52, and user information storing unit 53, which are caused by the control operations of control unit 54.

Data formats of each database of management server 16 and details of operations for transmitting applications will be explained in the latter part.

### [1.1.4] Configuration of application information management system

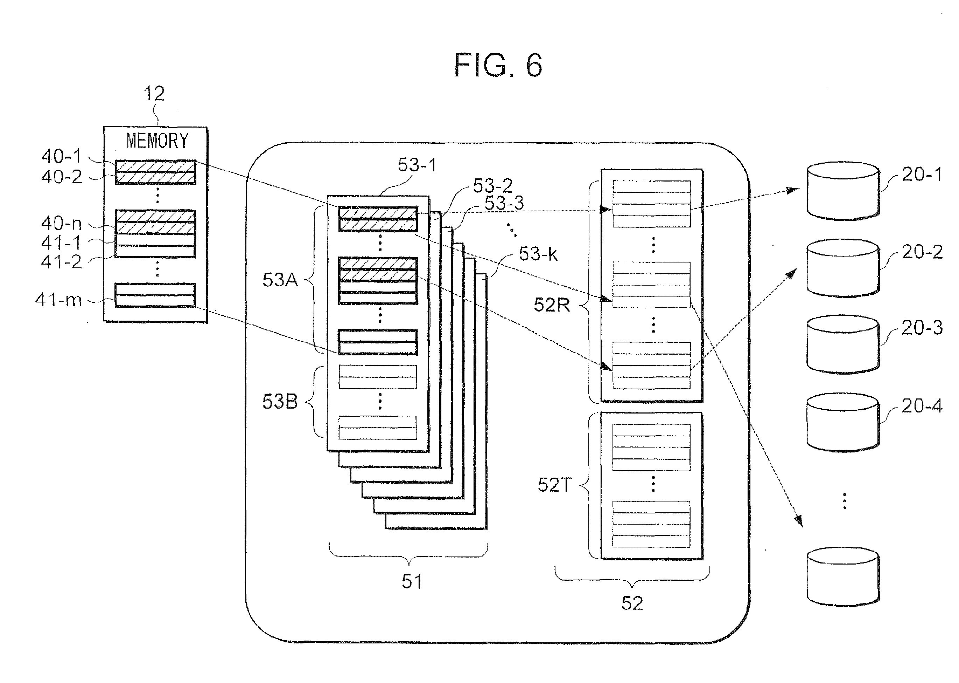

Fig.6 is a diagram showing an application information management system realized by mobile terminals 11, management server 16, and content servers 20.

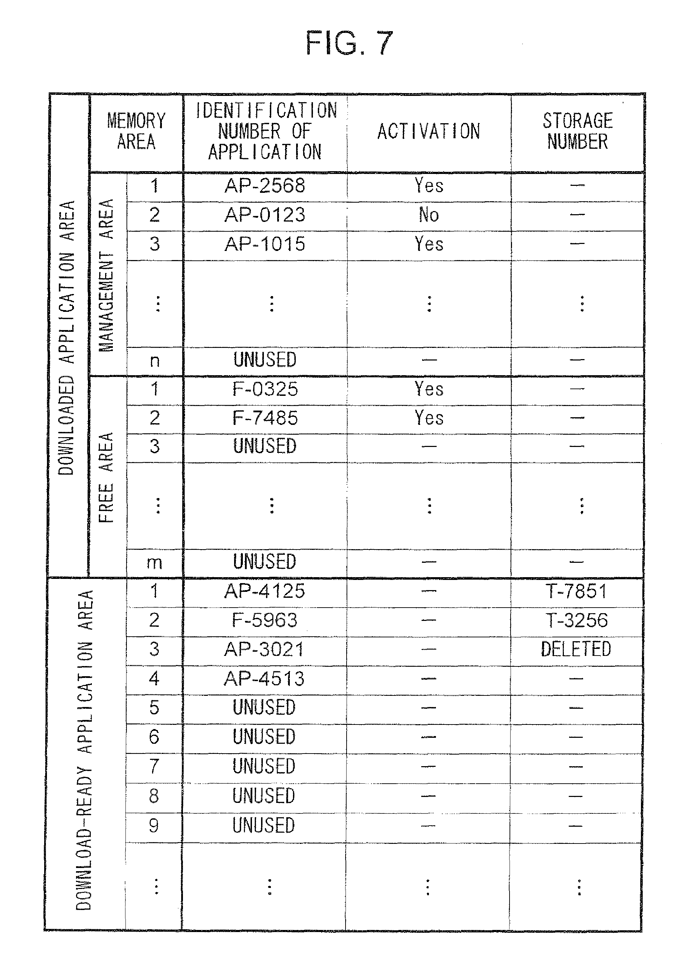

User information storing units 53 are composed of user information storing unit 53-1, user information storing unit 53-2, ···, and user information storing unit 53-k, which are data storage units corresponding to mobile terminal 11-1, mobile terminal 11-2, ···, and mobile terminal 11-k ('k' is an integer showing the number of mobile terminals 11), respectively. User information storing units 53-i (i= 1, ···, k) is divided into downloaded application area 53A-i and download-ready application area 53B-1. Downloaded application area 53A-i of user information storing unit 53-i is an area for storing information of applications, which are now stored in management area 40 or free area 41 of memory 12 of mobile terminal 11-i. On the other hand, download-ready application area 53B-i of user information storing unit 53-i is an area for storing information of applications, which are not stored in memory 12 of mobile terminal 11-i, but have already been purchased by the user of mobile terminal 11-i and ready to be delivered to mobile terminal 11 in response to a request from mobile terminal 11 at any time. In downloaded application area 53A and download-ready application area 53B, information of applications such as names of applications, version numbers of applications, identification numbers for identifying each application, sizes of applications, distinctions between completion and incompletion of activation operations, storage numbers of applications, etc. is stored. Fig.7 is a format chart showing an example of data stored by user information storing unit 53-i, which corresponds to mobile terminal 11-1, and in order to simplify the explanation, it shows only the items of memory area, identification number of application, activation, and storage number.

According to the example of data shown in Fig.7, in application area 40A-1 of management area 40-1 in mobile terminal 11-1, the application whose identification number is 'AP-3568' is stored, and the activation operation for the application has been completed. Storage numbers are used for specifying the locations in temporary custody application area of application information storing unit 52, where applications, which are ready for transmission, are temporarily stored. The applications, which have already been transmitted to mobile terminal 11-1 do not need storage numbers, and no storage number is given to such applications in downloaded application area 53A.

According to the example of data shown in Fig.7, in application area 41A-1 of free area 41-1 in mobile terminal 11-1, the application whose identification number is 'F-0325' is stored, and the activation operation for the application has been completed.

Further, according to the example of data shown in Fig.7, there are four applications, which are not stored in memory 12 now, but the user of mobile terminal 11-1 has already purchased and he/she can download at any time. The application whose identification number is 'AP-4125' is one such application, and the application itself is stored in an area of application information storing unit 52, which is identified by storage number 'T-7851'. On the other hand, it is found that the application whose identification number is 'AP-3021' is not stored in application information storing unit 52 at present since a sign, which says 'already deleted' is recorded in the item 'storage number'. It is also found that the application whose identification number is 'AP-4513' is stored in registration application area 52R of management server 16 and does not require a storage number, since no data is given to the application in the item 'storage number'. As a matter of course, as applications whose information is stored in download-ready application area 53B are at present not stored in memory 12 of mobile terminal 11-1, the activation operation for these applications has not been executed. With regard to these applications, therefore, no data is given for the item 'activation'.

As shown in Fig.6, application information storing unit 52 comprises registration application area 52R and temporary custody application area 52T. In registration application area 52R, information on many kinds of applications, which are developed for mobile terminals 11, such as names of applications, version numbers of applications, identification numbers of applications, sizes of applications, usage charges of applications, overview of functions of applications, etc. is stored along with the applications, or in the information on locations where applications are stored. In addition to them, regarding applications given reliability indexes, which are of a higher level than a certain level, information such as reliability indexes, distinctions between applications being publicized and unpublicized, distinctions between collection of usage charges being undertaken and not undertaken by the administration entity of management server 16, are also stored in registration application area 52R. Regarding applications not given reliability indexes, which are of a higher level than a certain level, '0' is given for the item 'reliability index' in registration application area 52R.

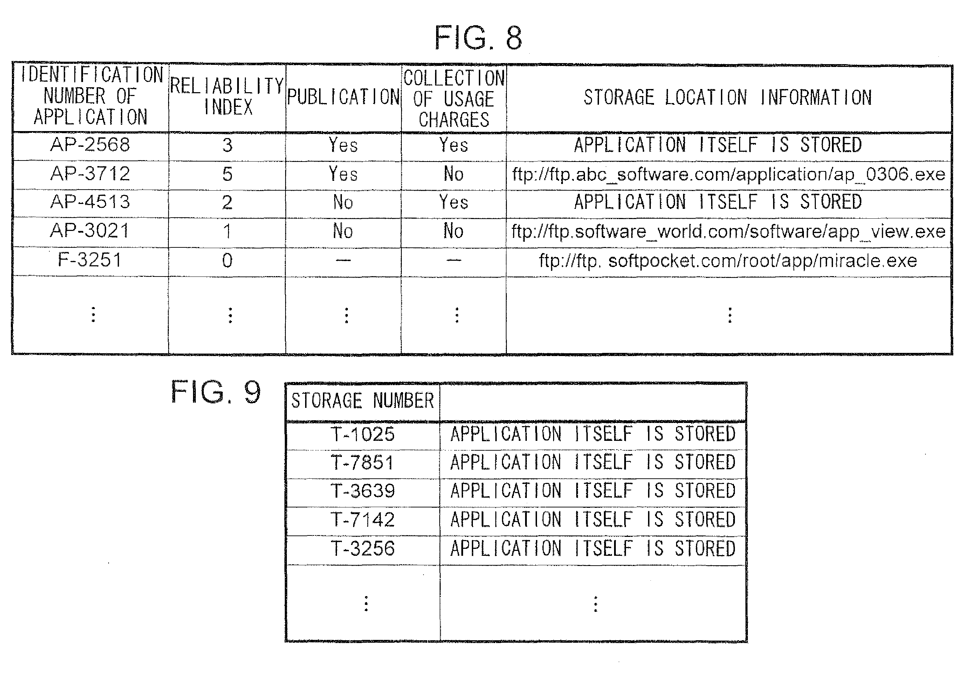

Fig.8 is a format chart showing an example of data stored in registration application area 52R, and in order to simplify the explanation, it shows only the items 'identification number of application', 'reliability index', 'publication', 'collection of usage charges', and 'storage location information'. Regarding the storage location information of application, it is possible to adopt any kind of information, which can specify locations where files containing applications are stored. In the following description, Uniform Resource Locators (URLs), which are widely used in the Internet, will be used as the storage location information.

According to the information stored in registration application area 52R shown as example in Fig.8, it is found that the application whose identification number is 'AP-3568' is given '3' as its reliability index; the application is publicized in management server 16; the collection of the usage charges of the application is undertaken by the administration entity of management server 16, and the application itself is stored in registration application area 52R. On the other hand, if it is found that the application whose identification number is 'AP-3712' is given '5' as its reliability index, the application is publicized, but the collection of usage charges is not undertaken by the administration entity of management server 16, and the application is not stored in application information storing unit 52, instead, it is stored in the location specified by 'ftp://ftp.abc_software.com/application' as a file name of 'ap_0306.exe'. Furthermore, the application whose identification number is 'F-3251' is not given a reliability index, and no data is given for the items 'publication', and 'collection of usage charges'. The publicizing of applications and undertaking the collection of a charge, as well as the differences between storing an application, and storing location information, will be explained in the latter part of this description.

In temporary custody application area 52T, applications whose storage location information is registered in registration application area 52R are stored temporarily during the period after management server 16 receives the applications from content servers 20, which are providers of the applications, when mobile terminals 11 request deliveries of the applications, and before the applications are delivered to mobile terminals 11. Fig.9 is a format chart showing an example of data stored in temporary custody application area 52T where applications are stored along with storage numbers, which specify the applications in temporary custody application area 52T.

### [1.2] Outline of transmitting operation

Following is an explanation of an outline of an operation of transmitting an application.

### [1.2.1] Operation before purchase of application

### [1.2.1.1] Publication of cryptograph key

In the application delivery system according to the embodiments of the present invention, authentication server 17, which is managed by an administration entity that is independent from all of the administration entities of mobile communication network 15, the administration entity of management server 16, and the administration entity of content server 20, manages public keys of a public key system.

Authentication server 17 generates for itself, a pair of keys namely, a secret key for authentication server 17 (referred to as 'Secret Key for Authentication Server' or 'SK-AS' hereinafter) and a public key for authentication server 17 (referred to as 'Public Key for Authentication Server' or 'PK-AS' hereinafter). Then authentication server 17 stores the secret key, namely 'SK-AS', protecting it against leakage to an external body, and on the other hand, transmits the public key, namely 'PK-AS', to any apparatus, which requests it.

Each mobile terminal 11 generates a pair of keys for itself, namely a secret key for mobile terminal 11 (referred to as 'Secret Key for Mobile Terminal' or 'SK-MT') and a public key for mobile terminal 11 (referred to as 'Public Key for Mobile Terminal' or 'PK-MT'), following its user's operation. Memory controller 35 of each mobile terminal 11 manages the secret key, namely 'SK-MT' protecting it against leakage to an external body. On the other hand, each mobile terminal 11 transmits the public key, namely 'PK-MT', to authentication server 17 through mobile communication network 15. When authentication server 17 receives 'PK-MT' from mobile terminal 11, authentication server 17 stores the received public key, 'PK-MT', in its database along with the identification number of mobile terminal 11. Authentication server 17 transmits the public key, namely 'PK-MT', to any apparatus, which requests it, as in the case of 'PK-AS' mentioned above.

If there is need to distinguish a key of one of mobile terminals 11 from a key of another mobile terminal 11, the subscription number of each mobile terminal 11 is placed after the respective abbreviation of the key. For example, the secret key of mobile terminal 11-1 will be referred to as 'SK-MT-1'. Management server 16 and each of content servers 20 generate their pairs of a secret key and a public key, as in the case of each of mobile terminals 11. Then, management server 16 and each of content servers 20 store their secret keys protecting them against leakage to an external body, and at the same time, transmit their public keys to authentication server 17. When authentication server 17 receives the public key from management server 16, authentication server 17 stores the received public key in its database along with the identification number of management server 16. Authentication server 17 carries out the same operation for content servers 20 when it receives public keys of content servers 20. Authentication server 17 transmits the public keys of management server 16 and content servers 20 to any apparatus, which requests the keys, as in the cases of authentication server 17 and mobile terminals 11. In this description, the secret keys and the public keys of management server 16 and content server 20 will be referred to as follows:

The secret key of management server 16: 'Secret Key for Management Server' or 'SK-MS'

The public key of management server 16: 'Public Key for Management Server' of 'PK-MS'

The secret key of content server 20: 'Secret Key for Contents Server' or 'SK-CS'

The public key of content server 20: 'Public Key for Contents Server' or 'PK-CS'

If there is a need to distinguish a key of one of content servers 20 from a key of another content server 20, the subscription number of each content server 20 is placed after the respective abbreviation of the key, as in the case of mobile terminals 11. For example, the secret key of content server 20-1 will be referred to as 'SK-CS-1'.

The algorithms for encryption using secret keys and the algorithms for decryption using public keys in authentication server 17, in each of mobile terminals 11, in management server 16, and in each of content servers 20, are the same. Therefore, these apparatuses can exchange encrypted data among themselves and decrypt the data by exchanging their public keys.

### [1.2.1.2] Examination of application

The administration entity of content server 20 can apply for a substantial examination of its application to the administration entity of management server 16 so that the application would be given a reliability index whose level is higher than a certain level, which is required if the application needs to execute any operation in coordination with another application, or if the application needs to handle information, which has a high value.

If the administration entity of management server 16 receives an application for a substantial examination of an application from the administration entity of content server 20, the administration entity of management server 16 examines the purpose for which the application will be used, the description of operations of the application, the system for managing the application, which is operated by the administration entity of content server 20, and so on. According to the result of the examination, the administration entity of management server 16 gives a proper level of reliability index to the examined application. Reliability indexes can be represented in many ways, but in the following explanation, the index system has 6 levels. Indexed' '1', '2', '3', '4', and '5' are given to applications, which pass the examination mentioned above. The larger the index, the higher is the reliability of the application. Index '0' is given to applications, which are not examined or could not pass the examination.

For example, regarding an application, which is given reliability index '5', the administration entity of management server 16 examines, the system for managing the application by the administration entity of content server 20, the stability of operations of the application etc., and judges if the results of the examination meet the requirements. The application is allowed to use functions of control programs of mobile terminal 11, data stored in control memory 32, functions of applications stored in memory 12, and data stored in memory 12, if necessary. These data may contain data of high value such as personal information of the user of mobile terminal 11, credit card numbers, and so on.

On the contrary, an application, which is given reliability index '1', for example, may be an application whose operations are not aimed at using data of high value such as personal information or monetary information, and there may be no need for the application to be given a reliability index of a high level, even if the operations of the application are stable. Although, in this case, the application may be evaluated as an application with low information security, which may cause leakages of data of high value, because of the lack of a secure data management system of the administration entity of content server 20, and so on. An application with reliability index '1' can execute coordinated operations with another application having reliability index, '1' or '0'. An application with reliability index '1' can also pass its data and provide its functions to an application with reliability index '2', '3', '4', or '5'. However, an application with reliability index '1' cannot receive data or use functions of an application with reliability index '2', '3', '4', or '5'. An application with reliability index '1' cannot use any of the functions of the control programs of mobile terminal 11 or the data stored in control memory 32.

If the administration entity of management server 16 decides to give a reliability index of "1' or higher than '1' to an application, it is registered in the item 'reliability index' of registration application area 52R of management server 16 along with the identification number of the application.

### [1.2.1.3] Request for publicizing application by management server

The administration entity of content server 20 can request that an application, which is given a reliability index of '1' or higher than '1' is to be publicized to mobile terminals 11 by management server 16. Regarding an application, which is requested to be publicized; the response 'Yes' is registered in the item 'publication' in registration application area 52R of management server 16. If management server 16 receives from mobile terminal 11, a request for transmitting information of applications, which can be purchased, management server 16 transmits, to mobile terminal 11, information of applications whose value of the item 'publication' in registration application area 52R is 'Yes'. On the basis of this information, a user of mobile terminal 11 can get to know which applications are publicized, and purchase the publicized applications more easily than others.

On the contrary, if a user of mobile terminal 11 wants to purchase an application, which is not publicized by management server 16, the user applies for purchasing the application to the administration entity of content server 20 directly through the Internet by accessing a home page of content server 20, which is a provider of the application. For example, if the administration entity of content server 20 wants to allow only certain mobile terminals 11, which meet certain requirements set by the administration entity of content server 20 to use its applications, it is more convenient for the administration entity of content server 20 not to publicize its applications through management server 16. However, the applications, which are not publicized by management server 16 are also delivered to mobile terminals 11 through management server 16, and information of the applications is also managed by management server 16, in the same manner as applications publicized by management server 16.

### [1.2.1.4] Request for undertaking usage charge collection by management server

The administration entity of content server 20 can request that the management of the usage charge collection of its application, which is given a reliability index of '1' or higher than '1', is to be undertaken by management server 16. Regarding an application whose management of the usage charge collection is requested to be undertaken by management server 16, the response 'Yes' is registered in the item 'collection of usage charges' in registration application area 52R of management server 16.

If management server 16 receives a request from mobile terminal 11, for purchasing an application whose value of the item 'collection of usage charges' in registration application area 52R is 'Yes', management server 16 transmits information such as identification number of the application, identification number of mobile terminal 11, and the time and date of purchase of the application to the charge management server, which is connected to mobile communication network 15, at the time when information of the application is stored in download-ready application area 53B of management server 16. Similarly, management server 16 transmits information such as identification number of the application, identification number of mobile terminal 11, and the time and date of purchase of the application, to the charge management server, which is connected to mobile communication network 15 at the time when management server 16 executes an activation operation for an application whose value of the item 'collection of usage charges' in registration application area 52R is 'Yes'. The charge management server calculates the usage charges of each application for each mobile terminal 11 on the basis of the information transmitted by management server 16 as explained above. The administration entity of content server 20 and the administration entity of management server 16 agree beforehand, to certain conditions with regard to usage charges for each application, namely whether the usage charges are calculated on the basis of purchase of the application or activation of the application; and the agreed upon conditions are registered in the charge management server as part of the information for charging. The usage charges of each application, which are calculated by the charge management server, is collected, from each user of mobile terminal 11, by the administration entity of mobile communication network 15, along with the communication charge for mobile terminal 11, which is also calculated by the charge management server. The administration entity of mobile communication network 15 deducts a certain amount from the collected charge as commission for undertaking charge collection, and remits the remaining amount of the charge to the administration entity of content server 20, which is the provider of the application. Moreover, the administration entity of mobile communication network 15 remits a certain part of the commission for undertaking charge collection to the administration entity of management server 16 as service charge for the provision of obtaining information on levying usage charges.

### [1.2.1.5] Request for storing application by management server

The administration entity of content server 20 can request that its application, which is given a reliability index of '1' or higher than '1', be stored in registration application area 52R of management server 16. If an application is requested to be stored in registration application area 52R, the application itself is stored in the item 'storage location information' of registration application area 52R, instead of in the information on location where the application is stored.

The administration entity of content server 20 can decide whether its application itself should be stored in registration application area 52R, or only information on the location where the application is stored should be registered in registration application area 52R, considering the transfer rate of communication between management server 16 and content server 20, and the nature of the application, and so on. If an application itself is stored in registration application area 52R, delivery of the application to mobile terminal 11 can be made soon after the application is requested to be delivered by mobile terminal 11, as management server 16 can deliver the application without receiving the application from content server 20 at the time of the request. Therefore, it is highly beneficial for the administration entity of content server 20 to request for its applications to be stored in registration application area 52R especially if the transfer rate of communication between management server 16 and content server 20 is low. On the contrary, if an application is not stored in registration application area 52R, and the application is transmitted from content server 20 to management server 16 each time management server 16 receives, from mobile terminal 11, a request for delivering the application, content server 20 is able to deliver the application with some customizations for mobile terminal 11. For example, content server 20 sets different access keys to the same application for each of mobile termninals 11 to prevent unauthorized users from using the application.

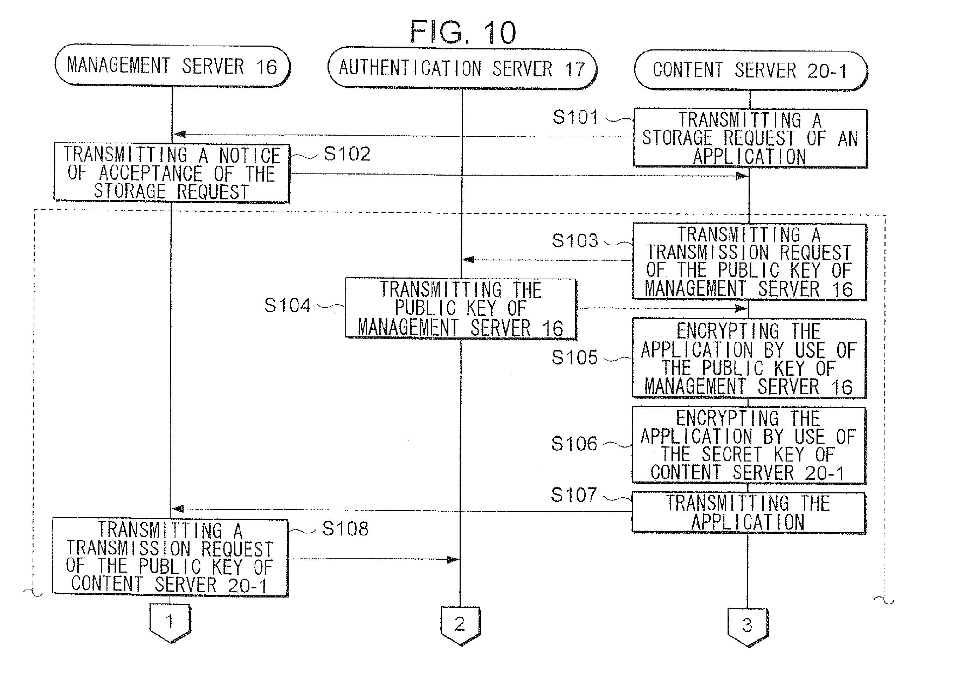

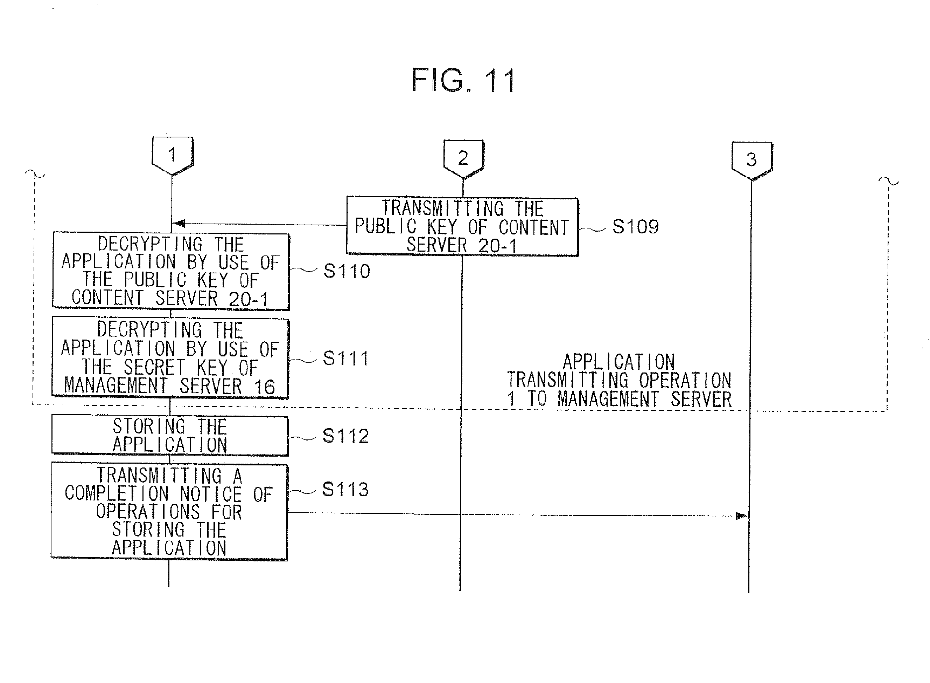

Following is an explanation, with reference to flowcharts in Fig.10 and Fig.11, of a series of operations executed when content server 20-1 requests management server 16 to store an application. First, content server 20-1 transmits a storage request for the application to management server 16 (step S101). The storage request contains the identification number of the application.

When management server 16 receives the storage request for the application, management server 16 reads the data stored in registration application area 52R using the identification number, which is contained in the storage request, and confirms that the application is given a reliability index of '1' or more than '1'. After the confirmation, management server 16 transmits a notice of acceptance of the storage request to content server 20-1 (step S102).

When content server 20-1 receives the notice of acceptance of the storage request, content server 20-1 transmits, to authentication server 17, a transmission request of 'PK-MS', namely the public key of management server 16 (step S103). In response to the transmission request of the public key, authentication server 17 transmits 'PK-MS' to content server 20-1 (step S104).

After receiving 'PK-MS', content server 20-1 encrypts the application by use of 'PK-MS' (step S105). Because of this encrypting operation, unauthorized persons, who wiretap the application while it is being transmitted from content server 20-1 to management server 16, will not be able to use the application.

Moreover, content server 20-1 encrypts the encrypted application again by use of 'SK-CS-1', namely the secret key of content server 20-1 (step S106). Because of the encrypting operation, management server 16 can confirm that the application is definitely transmitted by content server 20-1. That is to say, the encryption plays the role of a certificate, which enables management server 16 to confirm the transmitting side of the application.

Content server 20-1 transmits the double-encrypted application to management server 16 (step S107).

After receiving the double-encrypted application, management server 16 reads the data stored in cryptograph key storing unit 51 of management server 16 to check if 'PK-CS-1', namely the public key of content server 20-1, is available in the data. If 'PK-CS-1' is not registered in cryptograph key storing unit 51, management server 16 transmits, to authentication server 17, a transmission request of 'PK-CS-1' (step S108). In response to the transmission request of the public key, authentication server 17 transmits 'PK-CS-1' to management server 16 (step S109). If 'PK-CS-1' is registered in cryptograph key storing unit 51, management server 16 skips step S108 and step S109 and moves to step S110, as there is no need to obtain 'PK-CS-1' from an external source.

Then, management server 16 decrypts the double-encrypted application by use of 'PK-CS-1' (step S110). If the decryption of the application fails, it means that the application, which management server 16 received was falsified during transmission, or the application was damaged due to another reason, or the application was transmitted by a server other than content server 20-1. Therefore, in this case, management server 16 does not proceed to the following operations, but transmits, to content server 20-1, a retransmission request of the proper application. On the contrary, if the decryption of the application by use of 'PK-CS-1' is successful, it is confirmed that the application was transmitted from content server 20-1 without any problem. Therefore, management server 16 decrypts the application again by use of 'SK-MS, namely the secret key of management server 16 (step S111). On the basis of these operations, management server 16 can obtain the application without encryption, and the administration entity of management server 16 can check, if necessary, if no falsification was made by the administration entity of content server 20-1 or by others.

The series of operations from step S103 to step S111, which are explained above, will be referred to as 'application transmitting operation 1 to management server' in the following explanation.

After step S111, management server 16 stores the application in registration application area 52R (step S112), and transmits, to content server 20-1, a completion notice of operations for storing the application (step S113).

### [1.2.2] Purchase of application

Before an application is delivered to mobile terminal 11, the application needs to be purchased by the user of mobile terminal 11. Generally speaking, there are two methods by which the user of mobile terminal 11 can purchase an application, namely, purchasing an application which is publicized by management server 16 through Management server 16, or purchasing an application directly from the administration entity of content server 20 by making a purchasing contract using a home page in content server 20, etc. In the latter method, where a purchasing contract is made directly between the user of mobile terminal 11 and the administration entity of content server 20, there are two variations of operations depending on whether the application is given a reliability index of '1' or more than '1', or the application is given a reliability index '0'. Following are examples of series of operations for purchasing an application.

### [1.2.2.1] Purchase of application, which is publicized by management server

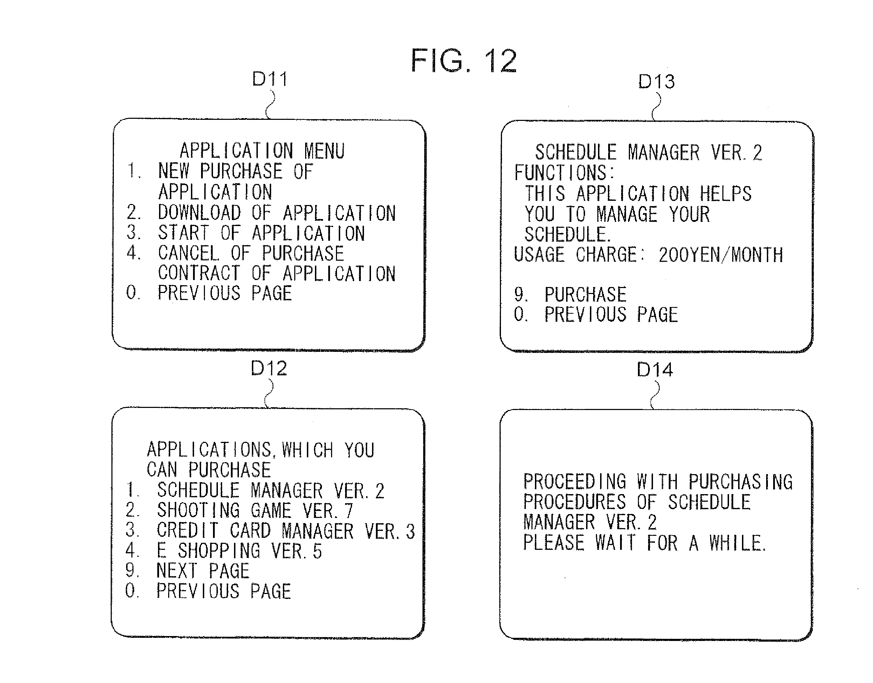

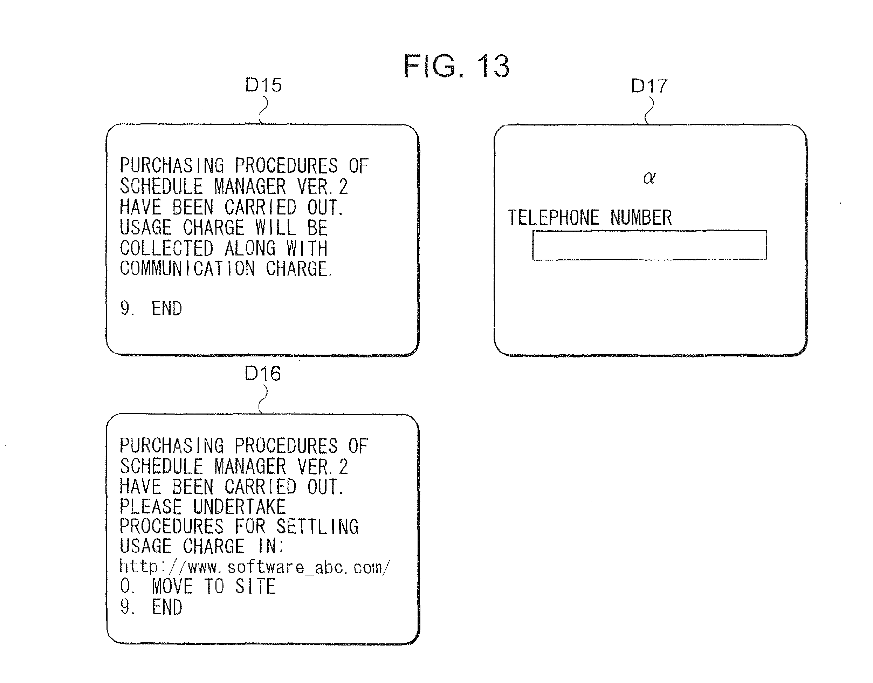

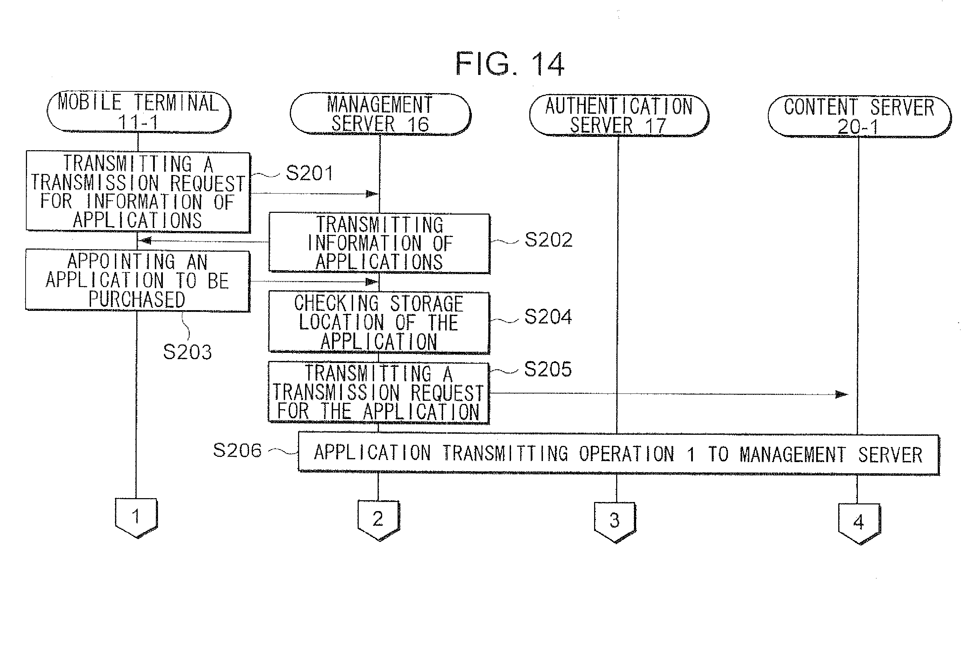

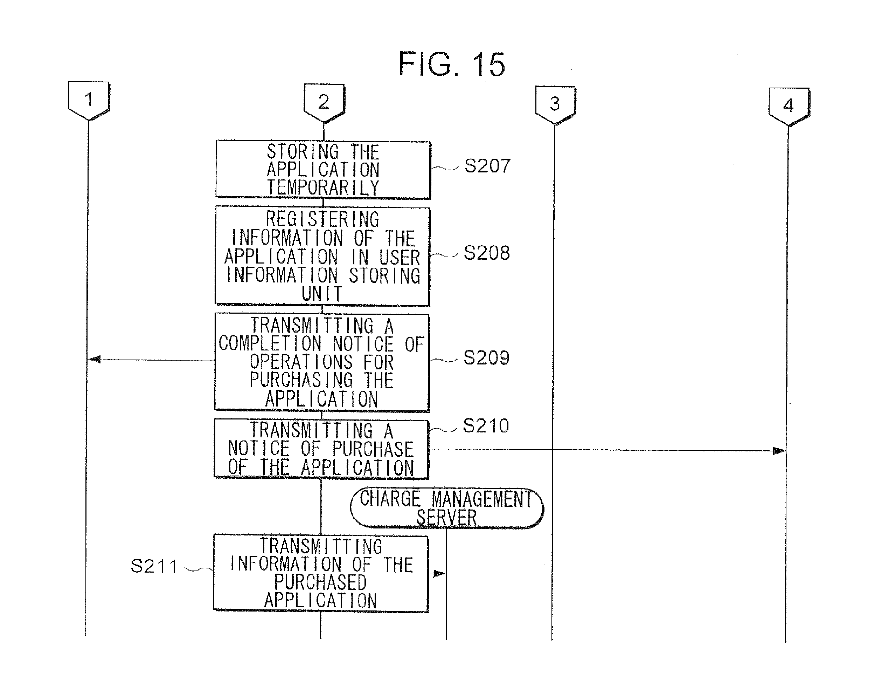

Following is an example, with reference to Fig.12, Fig.13, Fig.14, and Fig. 15, of a series of operations, which are executed when the user of mobile terminal 11-1 purchases an application publicized by management server 16, whose provider is content server 20-1, through management server 16.

First, the user of mobile terminal 11-1 pushes appli-button 23 of mobile terminal 11-1 to make it display an application menu as shown in screen D11. Next, the user pushes button '1' of operating unit 22 to select the item '1. New purchase of application'. When button '1' is pushed, mobile terminal 11-1 transmits, to management server 16, a transmission request for information of available applications (step S201).

After receiving the transmission request for information of available applications, management server 16 reads the data stored in registration application area 52R and extracts information of applications whose value of the item 'publication' is 'Yes', and those applications, which are not registered in user information storing unit 53-1. Next, management server 16 transmits the extracted information, which contains identification numbers of applications, names of applications, functions of applications, usage charges of applications, information whether collection of usage charges is managed by management server or not, and information of locations of home pages in content servers 20 such as URLs, to mobile terminal 11-1 as the information on available applications (step S202).

After receiving the information on available applications, mobile terminal 11-1 displays screen D12. In response to the screen, the user of mobile terminal 11-1 pushes a button, which corresponds to an application, which has to be purchased. For example, if the user pushes button '1' when screen D12 is displayed, the item 'Schedule management Ver.2' is selected, and mobile terminal 11-1 displays screen D13 on display unit 21. Screen D13 shows information concerning functions of the selected application and usage charges, on the basis of which the user of mobile terminal 11-1 makes a decision on whether to purchase the application or not. If the user of mobile terminal 11-1 decides to purchase the application and pushes button '9' when screen D13 is displayed, mobile terminal 11-1 transmits the identification number of the selected application to management server 16 (step S203). Then, mobile terminal 11-1 displays screen D14 on display unit 21.

After receiving the identification number of the application, management server 16 reads the data stored in registration application area 52R, and obtains the storage location information of the application (step S204).

In step S204, if the selected application itself is not stored in registration application area 52R, management server 16 obtains a URL of the application in content server 20-1, from the data stored in registration application area 52R, as the storage location information. In this case, management server 16 transmits, to content server 20-1, a transmission request for the application (step S205).

When content server 20-1 receives the transmission request for the application, a series of operations, which are the same as that of 'application transmitting operation 1 to management server', are begun. Namely, management server 16, authentication server 17, and content server 20-1 execute the operations from step S103 to step S111 shown in Fig.10 and Fig.11. As a result of carrying out the series of operations, management server 16 obtains the application (step S206).

Management server 16 allots a storage number to the obtained application, and stores the application along with the storage number in temporary custody application area 52T (step S207). The storage number is used for management server 16 to specify the location in temporary custody application area 52T where the application is stored. And if applications are stored for different applications, different storage numbers are allotted to each of them even though their contents are exactly the same.

On the contrary, if the application, which is selected by mobile terminal 11-1 is stored in registration application area 52R of management server 16, management server 16 skips the operations from step S205 to step S207 and moves to step S208, as the application has been already obtained.

Next, management server 16 registers information on the application, such as the identification number of the application and the reliability index, in download-ready application area 53B of user information storing unit 53-1 (step S208). After the registration operation in step S208 has been carried out, the user of mobile terminal 11-1 is able to download the application, which has been already registered in download-ready application area 53B, to mobile terminal 11-1 at any time the user desires. When the registration operation is completed, the response 'No' is registered as the value of the item 'activation' for the application, since the application has not been downloaded to mobile terminal 11-1, and as a matter of course, the activation operation for the application has not been executed yet. If the registered application is stored in temporary custody application area 52T, the storage number for the application is also registered in download-ready application area 53B. When the registration operation is completed, management server 16 transmits, to mobile terminal 11-1, a completion notice of operations for purchasing the application (step S209).

After receiving the completion notice of operations for purchasing the application, mobile terminal 11-1 displays screen D15 or screen D16. Screen D15 shows a screen, which is displayed when the newly purchased application is an application whose usage charges are managed by management server 16, and the screen informs the user of mobile terminal 11-1 that the usage charges of the application will be collected along with the communication charge. On the contrary, screen D16 shows a screen, which is displayed when the application is an application whose usage charges are not managed by management server 16, and the screen informs the user of mobile terminal 11-1 that it is the responsibility of the user to carry out the necessary procedure for settling the usage charges of the application. When screen D16 is displayed, the user of mobile terminal 11-1 can push button '0' to display the home page, which is managed by the administration entity of content server 20-1, and follow the necessary procedure for settling usage charges of the purchased application in the home page.

If the user of mobile terminal 11-1 pushes button '9' to complete the series of operations for purchasing a new application explained above, when screen D15 or screen D16 is displayed, mobile terminal 11-1 displays screen D17 on display unit 21. Screen D17 is similar to a normal screen, which is displayed when mobile terminal 11-1 is on standby, but the letter 'α' is also displayed on the screen. The letter 'α' is a symbol for informing the user of mobile terminal 11-1 that an application is ready for being downloaded. However, there are other ways to inform the user of mobile terminal 11-1 that an application is ready for being downloaded, and is not limited to displaying the letter 'α'. To achieve the same purpose, other ways, such as displaying other kinds of symbols or images, making sounds, and vibrating mobile terminal 11-1, can also be adopted.

After management server 16 transmits the completion notice of operations for purchasing the application in step S209, management server 16 transmits, to content server 20-1, a notice of purchase of the application by mobile terminal 11-1 (step S210). Moreover, if the purchased application is an application whose usage charges are managed by management server 16, management server 16 transmits, to the charge management server, the information on the purchased application such as the identification number of the application, the identification number of mobile terminal 11-1, the time and date of purchase of the application, etc. (step S211).

### [1.2.2.2] Purchase of application, which is given a reliability index of '1' or more than '1', and which is not publicized

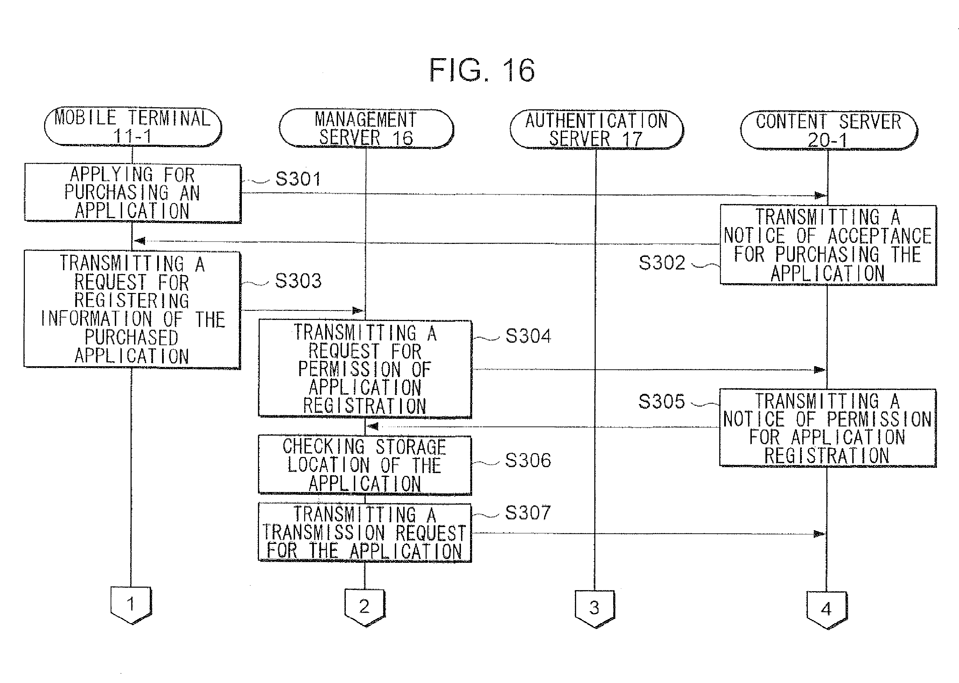

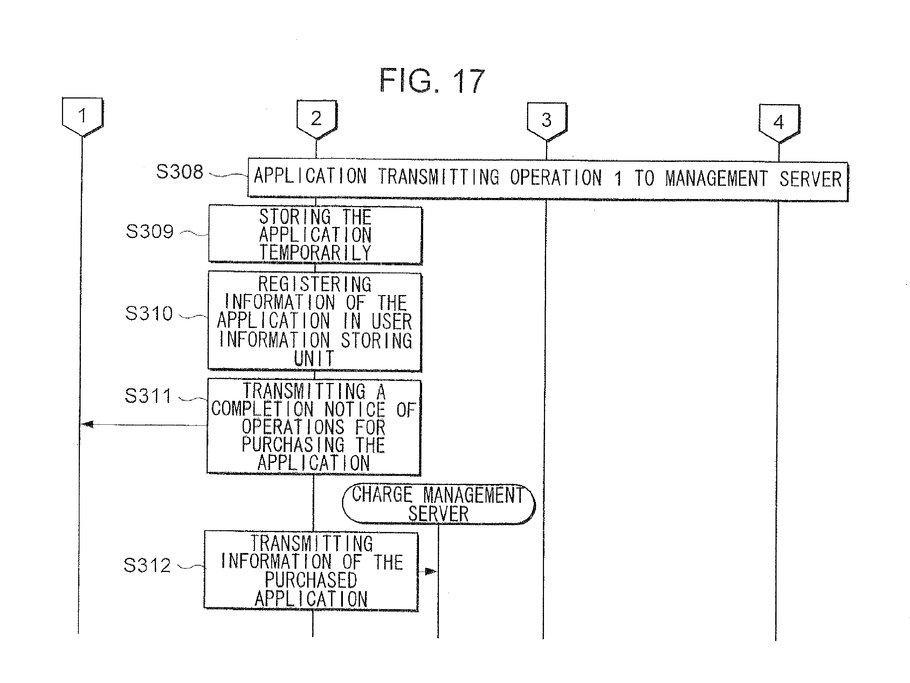

Following is an example, with reference to Fig.16 and Fig. 17, of a series of operations, which are executed when the user of mobile terminal 11-1 purchases an application, which is not publicized by management server 16, whose provider is content server 20-1, and which is given a reliability index of '1' or more than '1'.

If the user of mobile terminal 11-1 purchases an application, which is not publicized by management server 16, the user of mobile terminal 11-1, for example, displays a home page of content server 20-1 in mobile terminal 11-1, and applies for purchasing the application in the home page (step S301). The user of mobile terminal 11-1 also takes the responsibility of carrying out the procedure for settling the usage charges of the application in the same home page, if necessary.

Content server 20-1 checks whether the contents of the purchase request submitted to content server 20-1 by mobile terminal 11-1 in step S301, meet the requirements, and if the contents of the purchase request meet the requirements, content server 20-1 transmits, to mobile terminal 11-1, a notice of acceptance for purchasing the application (step S302). The notice of acceptance for purchasing the application contains the identification number of the application. When content server 20-1 transmits the notice of acceptance, content server 20-1 records the identification number of mobile terminal 11-1, whose request for purchasing the application is accepted.

After receiving the notice of acceptance for purchasing the application, mobile terminal 11-1 transmits, to management server 16, a request for registering the information of the purchased application (step S303). The request for registering the information contains the identification number of the application, which is newly purchased.

After receiving the information on the purchased application from mobile terminal 11-1, management server 16 reads the data stored in registration application area 52R, and obtains a URL from content server 20-1, as location information of the provider of the application, which is requested to be registered, according to the identification number of the application. Then, management server 16 transmits, to content server 20-1, a request for permission to carry out application registration in order to confirm that it is acceptable to content server 20-1 for the application to be registered as an application purchased by mobile terminal 11-1, using the URL (step S304). The request for permission of application registration contains the identification number of mobile terminal 11-1.

After receiving the request for permission of application registration from management server 16, content server 20-1 checks whether the identification number of the mobile terminal, for which management server 16 is ready to register the application as a purchased application, matches the identification number of the mobile terminal, for which content server 20-1 accepted the request for purchasing the application in step S302. If these identification numbers match, content server 20-1 transmits, to management server 16, a notice of permission for application registration (step S305).

After receiving the notice of permission for application registration from content server 20-1, management server 16 reads the data stored in registration application area 52R, and obtains the storage location information of the application, which mobile terminal 11-1 requests to be registered (step S306).

If the application, which is requested to be registered in step S306 is not stored in registration application area 52R, management server 16 transmits, to content server 20-1, a request for transmitting the application, using the storage location information of the application, which is recorded in registration application area 52R (step S307). When content server 20-1 receives the request for transmitting the application, a series of operations, which are same as that of 'application transmitting operation 1 to management server', are started. Namely, management server 16, authentication server 17, and content server 20-1 execute the operations from step S103 to step S111 shown in Fig. 10 and Fig.11. As a result of carrying out the series of operations, management server 16 obtains the application (step S308). Management server 16 allots a storage number to the obtained application, and stores the application along with the storage number in temporary custody application area 52T (step S309).

On the contrary, if the application, which mobile terminal 11-1 requests to be registered, is stored in registration application area 52R, management server 16 skips the operations from steep S307 to step S309 and moves to step S310.

Next, management server 16 registers the information of the application, which mobile terminal 11-1 requests to be registered, namely the identification number of the application, the reliability index of the application, etc. in downioad-ready application area 53B of user information storing unit 53-1 (step S310). Regarding the item 'activation', the response 'No' is registered as the value of the item, since the activation operation has not been executed for the application yet. If the application is stored in temporary custody application area 52T, the storage number of the application is also registered in download-ready application area 53B. After the registration operation in step S310, the user of mobile terminal 11-1 is able to download the application, which has been already registered in download-ready application area 53B, to mobile terminal 11-1 at any time the user desires. When the registration operation is completed, management server 16 transmits, to mobile terminal 11-1, a completion notice of operations for purchasing the application (step S311).

When mobile terminal 11-1 receives the completion notice of operations for purchasing the application, mobile terminal 11-1 displays the letter 'α' on display unit 21 for informing the user of mobile terminal 11-1 that the newly purchased application is ready to be downloaded from management server 16.

If the purchased application is an application whose usage charges are managed by management server 16, management server 16 transmits, to the charge management server, the information on the purchased application such as the identification number of the application, the identification number of mobile terminal 11-1, the time and date of purchase of the application, etc. (step S312).

### [1.2.2.3] Purchase of application, which is given reliability index '0'

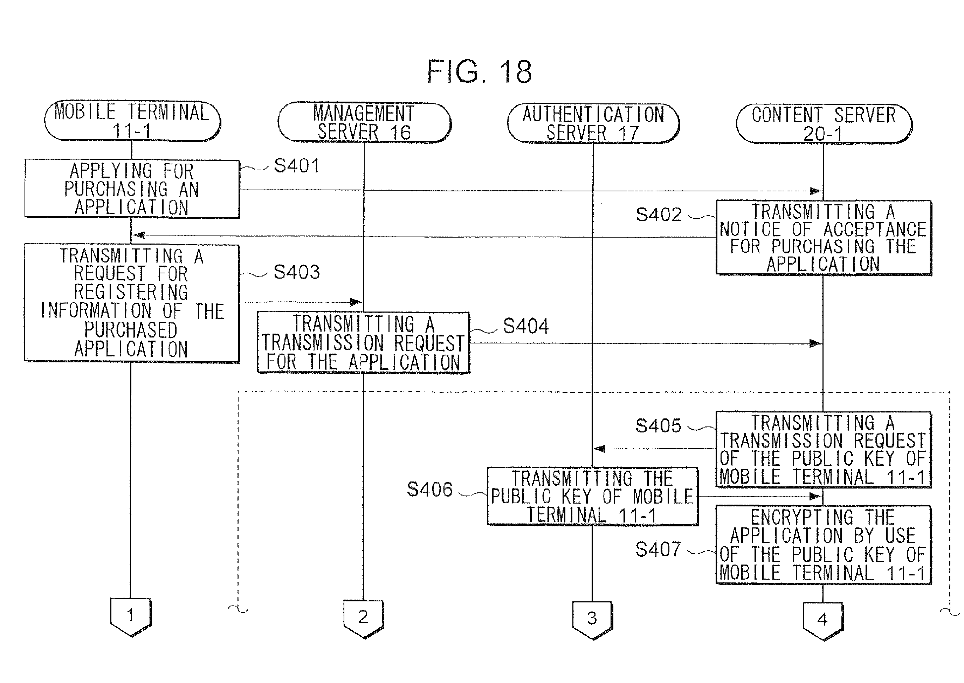

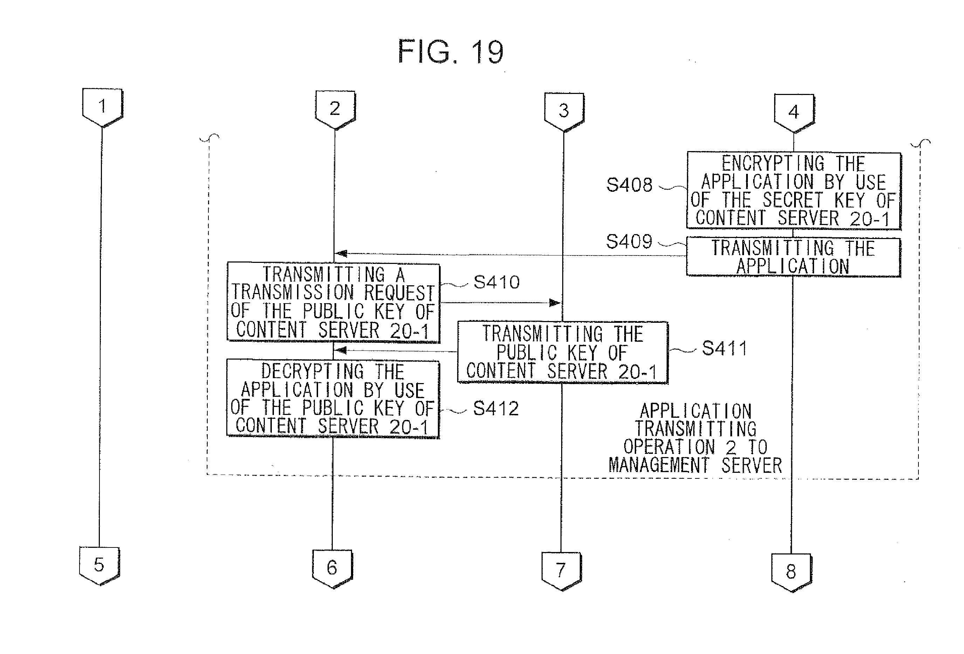

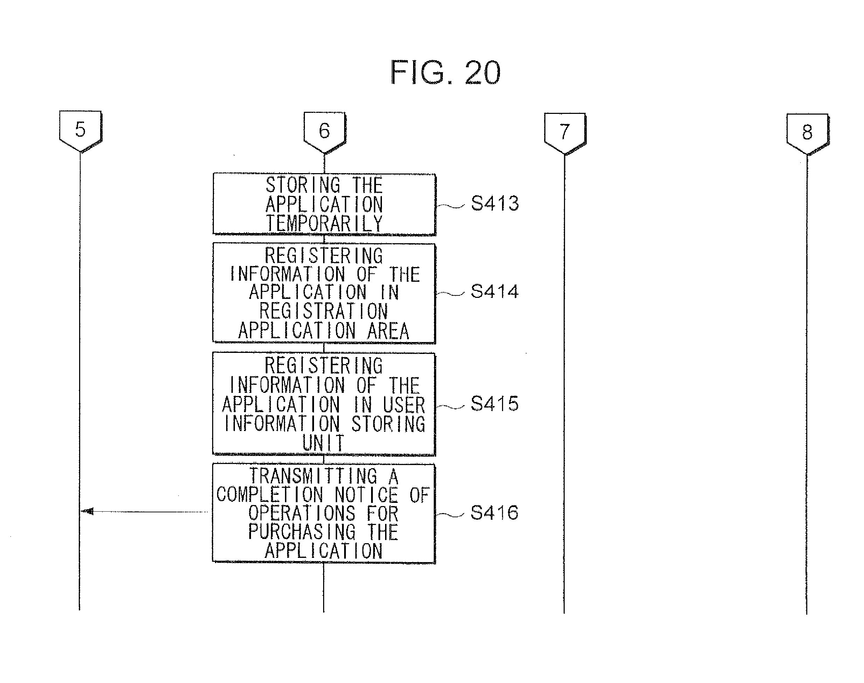

Following is an example, with reference to Fig.18, Fig.19, and Fig.20, of a series of operations, which are executed when the user of mobile terminal 11-1 purchases an application whose provider is content server 20-1, and, which is given a reliability index '0'. The operations in this example are similar to those of the series of operations which start from step S301 and are explained with reference to Fig.16 and Fig.17. However, in the following operations, management server 16 need not obtain the application in plain text for checking its contents, as the application is not given a reliability index of '1' or more than '1'. Therefore, when the application is transmitted from content server 20-1 to management server 16, the application is not encrypted by use of the public key of management server 16, but by use of the public key of mobile terminal 1.1-1. Because of this encryption, the application cannot be understood by unauthorized users of mobile terminal 11-1, even if the application is wiretapped during the transmission of the application. As a result, unauthorized usage of the application can be prevented, and at the same time, concealment of contents of the application can be ensured.

In this series of operations, the user of mobile terminal 11-1, for example, firstly displays a home page of content server 20-1 in mobile terminal 11-1, and applies for purchasing the application in the home page (step S401). The user of mobile terminal 11-1 also takes the responsibility of carrying out the necessary procedure for settling usage charges of the application in the same home page.

Content server 20-1 checks whether the contents of purchase request, which is submitted to content server 20-1 by mobile terminal 11-1 in step S401, meets the requirements, and if the contents of purchase request meet the requirements, content server 20-1 transmits, to mobile terminal 11-1, a notice of acceptance for purchasing the application (step S402). The notice of acceptance for purchasing the application contains the identification number of the application. When content server 20-1 transmits the notice of acceptance, content server 20-1 records the identification number of mobile terminal 11-1, whose request for purchasing the application is accepted.

After receiving the notice of acceptance for purchasing the application, mobile terminal 11-1 transmits, to management server 16, a request for registering the information of the purchased application (step S403). The request for registering the information contains the identification number of the application, and a URL in content server 20-1 as storage location information of the application.

After receiving the request for registering the information from mobile terminal 11-1, management server 16 transmits, to content server 20-1, a request for transmitting the application (step S404). The request for transmitting the application contains the identification number of mobile terminal 11-1.

After receiving the request for transmitting the application from management server 16, content server 20-1 checks whether the identification number of the mobile terminal, which requests the transmission of the application, matches the identification number of the mobile terminal for which content server 20-1 accepted the request for purchasing the application in step S402. If these identification numbers match, content server 20-1 transmits, to authentication server 17, a request for transmitting 'PK-MT-1', namely the public key of mobile terminal 11-1 (step S405). In response to the request for transmitting 'PK-MT-1', authentication server 17 transmits 'PK-MT-1' to content server 20-1 (step S406).

After receiving 'PK-MT-1', content server 20-1 encrypts the application, which is to be transmitted, by use of 'PK-MT-1' (step S407).

Moreover, content server 20-1 encrypts the encrypted application again by use of 'SK-CS-1', namely the secret key of content server 20-1 (step S408). Because of the encrypting operation, management server 16 can confirm that the application was definitely transmitted by content server 20-1.

Content server 20-1 transmits the double-encrypted application to management server 16 (step S409).

After receiving the double-encrypted application, management server 16 reads the data stored in cryptograph key storing unit 51 of management server 16 to check if 'PK-CS-1', namely the public key of content server 20-1, is available in the data. If 'PK-CS-1' is not registered in cryptograph key storing unit 51, management server 16 transmits, to authentication server 17, a transmission request of 'PK-CS-1' (step S410). In response to the transmission request of the public key, authentication server 17 transmits 'PK-CS-1' to management server 16 (step S411). If 'PK-C5-1" is registered in cryptograph key storing unit 51, management server 16 skips step S410 and step S411 and moves to step S412, as there is no need to obtain 'PK-CS-1' from an external source.

Then, management server 16 decrypts the double-encrypted application by use of 'PK-CS-1' (step S412). If the decryption of the application fails, it means that the application which management server 16 received was falsified during transmission, or the application was damaged due to some reason, or the application was transmitted by a server other than content server 20-1. Therefore, in this case, management server 16 does not proceed to the following operations, but transmits, to content server 20-1, a retransmission request of the proper application. On the contrary, if the decryption of the application by use of 'PK-CS-1' is successful, it is confirmed that the application was transmitted from content server 20-1 without any problem.

The series of operations from step S405 to step S412, which are explained above, will be referred to as 'application transmitting operation 2 to management server' in the following explanation.

Next, management server 16 allots a storage number to the application, and stores the application along with the storage number in temporary custody application area 52T (step S413). In this case, the application which is stored in temporary custody application area 52T, is still encrypted by use of 'PK-MT-1', namely the public key of mobile terminal 11-1, and the application cannot be decrypted by the administration entity of management server 16.

Next, management server 16 registers the identification number of the application and a URL in content server 20-1 as storage location information of the application in registration application area 52R (step S414). The information, which is registered in this registration operation, is referred to when management server 16 needs to obtain the same application from content server 20-1 in response to a request for transmitting the application. Regarding the data corresponding to the application in registration application area 52R, the value of the item 'reliability index' is set as '0', and the value of the item 'publication' is left blank ('-').

Next, management server 16 registers the information of the application which mobile terminal 11-1 requests to be registered, namely the identification number of the application, the storage number of the application, etc. in ready for download application area 53B of user information storing unit 53-1 (step S415). Regarding the item 'activation', the response 'No' is registered as the value of the item, and regarding the item 'reliability index', '0' is registered as the value of the item. After the registration operation in step S415, the user of mobile terminal 11-1 is able to download the application, which has already been registered in download-ready application area 53B, to mobile terminal 11-1 at any time the user desires. When the registration operation is completed, management server 16 transmits, to mobile terminal 11-1, a completion notice of operations for purchasing the application (step S416).

When mobile terminal 11-1 receives the completion notice of operations for purchasing the application, mobile terminal 11-1 displays the letter 'α' on display unit 21 for informing the user of mobile terminal 11-1 that the newly purchased application is ready to be downloaded from management server 16.

### [1.2.3] Download of application to mobile terminal

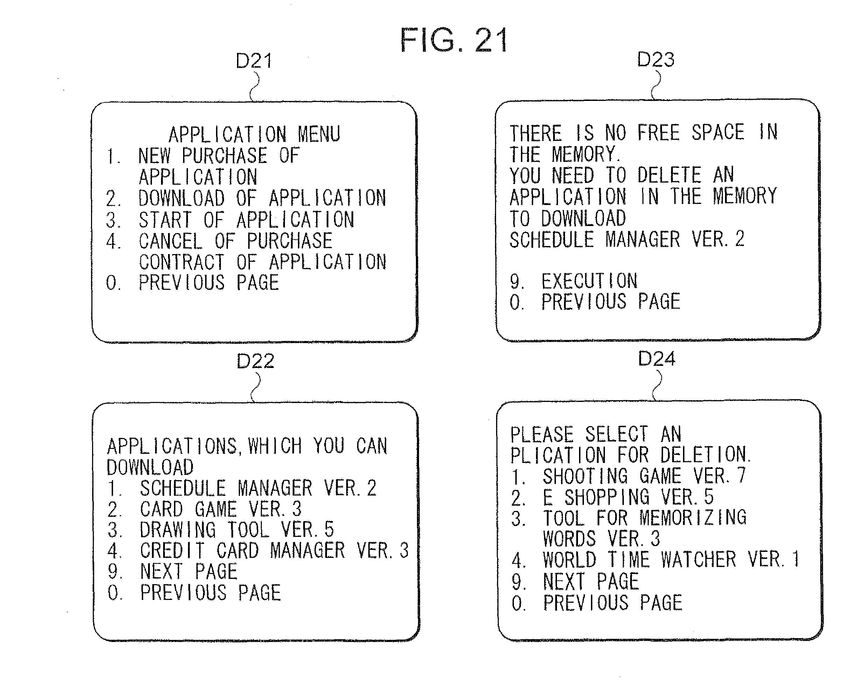

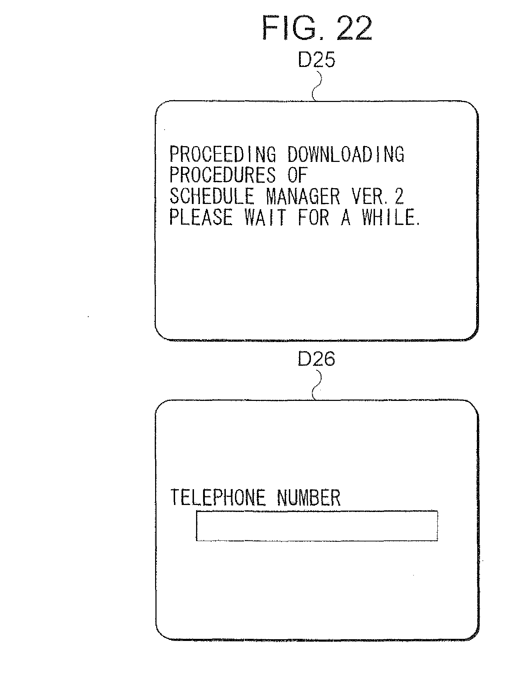

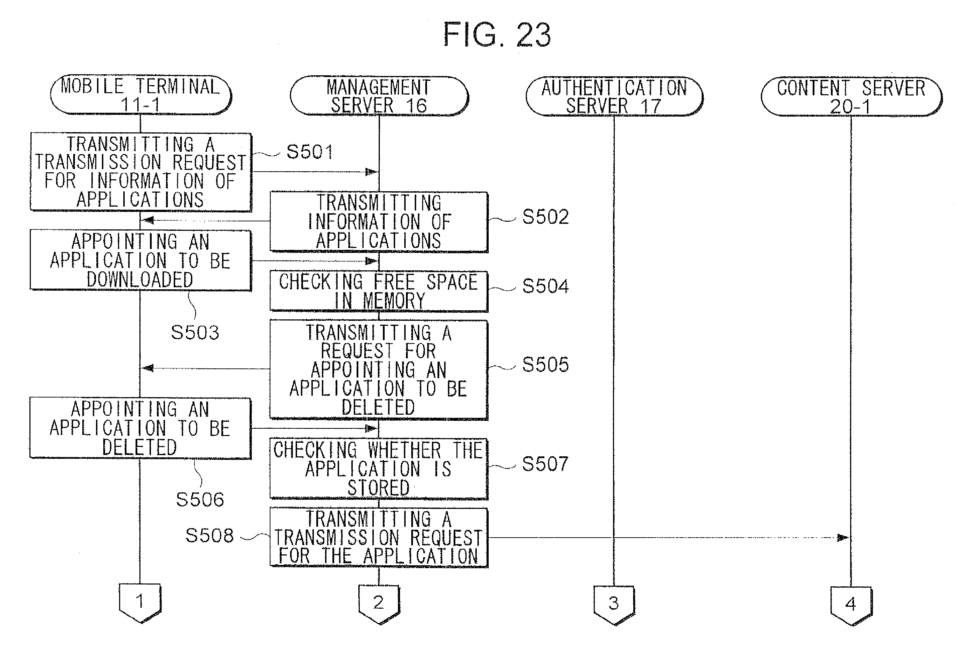

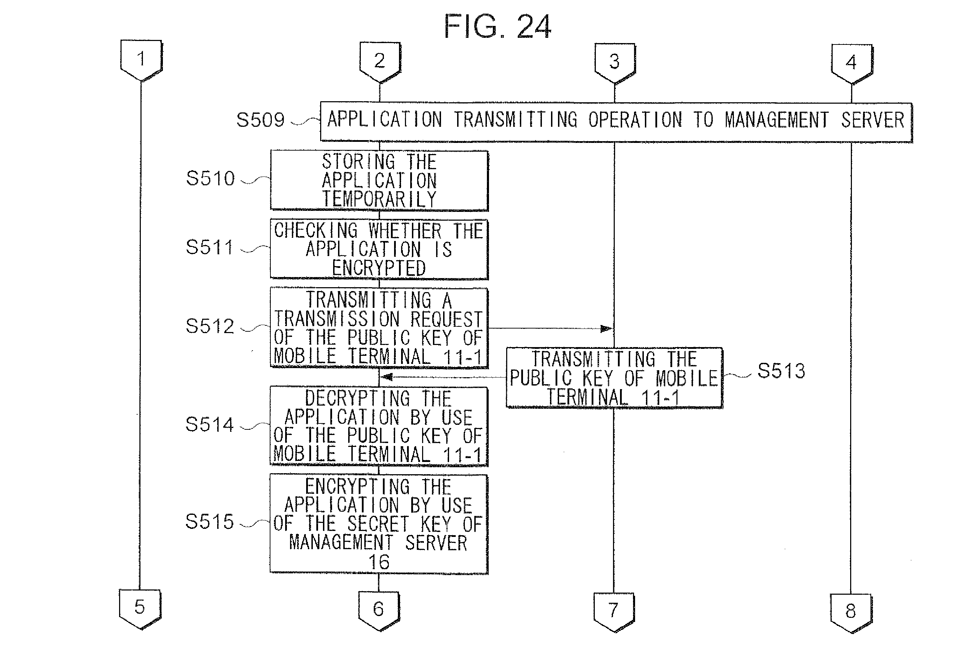

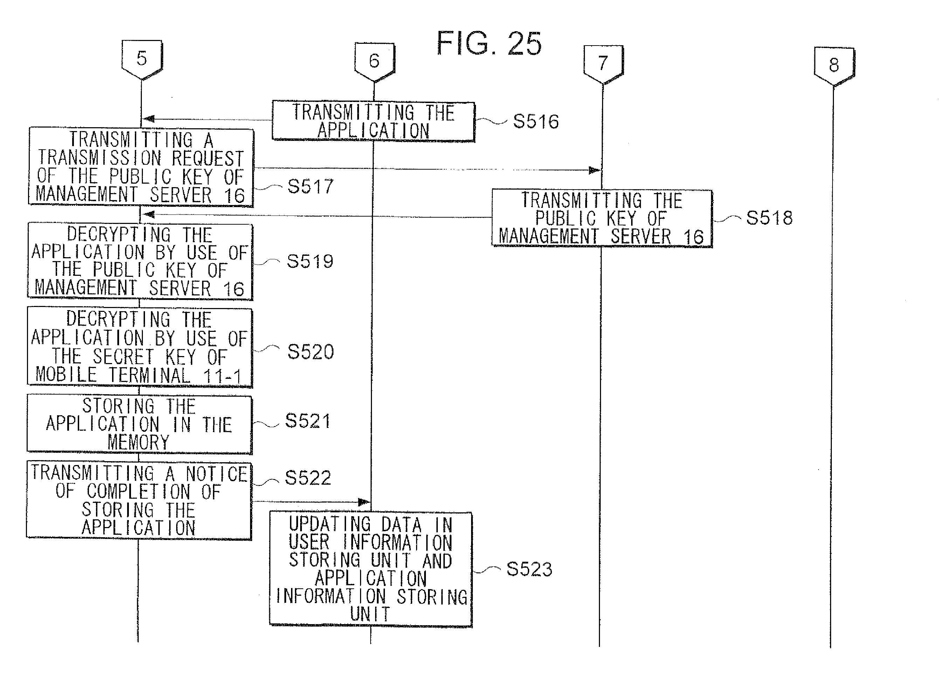

After the user of mobile terminal I purchases an application, the user needs to download the purchased application to mobile terminal 11-1. Following is an example, with reference to Fig.21, Fig.22, Fig.23, Fig.24, and Fig.25, of a series of operations, which are executed when mobile terminal 11-1 downloads an application.

First, the user of mobile terminal 11-1 pushes appli-button 23 of mobile terminal 11-1 to display the application menu shown as screen D21. When screen D21 is displayed, the user of mobile terminal 11-1 pushes button '2' of operating unit 22 to select the item '2.Download of application'. When button '2' is pushed down, mobile terminal 11-1 transmits, to management server 16, a request for transmitting information on applications, which can be downloaded to mobile terminal 11-1 (step S501).

After receiving the request for transmitting information of applications, management server 16 transmits, to mobile terminal 11-1, names of applications and identification numbers of applications, which are registered in download-ready application area 53B of user information storing unit 53-1, as the information on applications (step S502).

After receiving the information on applications, mobile terminal 11-1 displays screen D22. In response to the screen, the user of mobile terminal 11-1 can appoint an application, which the user wants to download by pushing a button whose number corresponds to the number of the application on the screen. For example, if the user pushes button '1' when screen D22 is displayed, the application titled 'Schedule manager Ver.2' is appointed. When an application is appointed by an operation of the user of mobile terminal 11-1, mobile terminal 11-1 transmits the identification number of the appointed application to management server 16 (step S503).

After receiving the identification number of the appointed application, management server 16 reads the data stored in download-ready application area 53B, and checks whether the appointed application is given a reliability index of '1' or more than '1'. Next, management server 16 reads the data stored in downloaded application area 53A and checks whether memory 12 of mobile terminal 11-1 has enough free space for storing the appointed application (step S504). In step S504, if the appointed application is given a reliability index of '1' or more than '1', it is checked whether memory 12 has enough free space in management area 40. On the contrary, in step S504, if the appointed application is not given a reliability index of '1' or more than '1', it is checked whether memory 12 has enough free space in free area 41.

In step S504, if memory 12 of mobile terminal 11-1 does not have enough free space for storing the appointed application, management server 16 transmits, to mobile terminal 11-1, a request for appointing an application, which is to be deleted from memory 12 (step S505). The request for appointing an application contains information indicating whether the application, which is requested to be downloaded, is given a reliability index, of '1' or more than '1', or not. When mobile terminal 11-1 receives the request for appointing an application, mobile terminal 11-1 displays screen D23 by display unit 21. In response to the screen, if the user of mobile terminal 11-1 pushes button '9' to instruct the execution of the following operations, mobile terminal 11-1 displays screen D24 on display unit 21. If the application, which is appointed for downloading, is an application, which is given a reliability index of '1' or more than '1', names of applications, which are stored in management area 40, are listed in screen D24. On the contrary, if the application, which is appointed for downloading, is an application, which is not given a reliability index of '1' or more than '1', names of applications, which are stored in free area 41, are listed on screen D24. In response to the screen, the user of mobile terminal 11-1 can appoint an application, which the user decides to delete from memory 12 by pushing a button whose number corresponds to the number of the application on the screen. Mobile terminal 11-1 transmits the identification number of the appointed application to management server 16 (step S506). After the operation in step S506, mobile terminal 11-1 displays screen D25 on display unit 21.

On the contrary, in step S504, if memory 12 of mobile terminal 11-1 has enough free space for storing the application, which is appointed for downloading, the operations in step S505 and step S506 are skipped, and management server 16 moves to the operation in step S507. In this case, mobile terminal 11-1 displays screen D25 on display unit 21.

Next, management server 16 reads the data stored in download-ready application area 53B, and checks whether the application, which is appointed to be downloaded by mobile terminal 11-1, is stored in application information storing unit 52 or not (step S507). Following is an example, with reference to Fig.7 of operations, which are executed when the application is stored in application information storing unit 52, and operations, which are executed when the application is not stored in application information storing unit 52.

If the identification number of the application, which mobile terminal 11-1 appoints to be downloaded, is 'AP-4125', the corresponding storage number is 'T-7851' according to the data example shown in Fig.7. This means that the application is stored in temporary custody application area 52T. If the identification number of the application, which mobile terminal 11-1 appoints to be downloaded, is 'AP-4513', no data is given in the item 'storage number' according to the data example shown in Fig.7. This means that the corresponding application is an application, which is requested to be stored in registration application area 52R. Therefore, the appointed application is stored in registration application area 52R.

On the contrary, if the identification number of the application, which mobile terminal 11-1 appoints to be downloaded, is 'AP-3021', the value of the item 'storage number' corresponding to the application shows 'already deleted' according to the data example shown in Fig.7. This means that the corresponding application is not stored either in temporary custody application area 52T or in registration application area 52R. As explained later in step S523, if the requested application is an application, which is not requested to be stored in registration application area 52R, the application is deleted from temporary custody application area 52T when the application is downloaded. Therefore, there can be some applications, which are not found in application information storing unit 52 even though they are registered in download-ready application area 53B.

If the application, which is appointed to be downloaded, is found not to be stored in application information storing unit 52 in step S507, as in the case of the application whose identification number is 'AP-3021', management server 16 reads the data stored in registration application area 52R, and obtains the URL in content server 20-1, which corresponds to the identification number of the application, as the storage location information of the application. Then management server 16 transmits, to content server 20-1, a request for transmitting the application (step S508).

If the application, which is appointed to be downloaded, is given a reliability index of '1' or more than '1', content server 20, authentication server 17, and management server 16 execute a series of operations, which are the same as those of 'application transmitting operation 1 to management server', after step S508. On the contrary, if the application, which is appointed to be downloaded, is not given a reliability index of '1' or more than '1', content server 20, authentication server 17, and management server 16 execute a series of operations, which are same as those of 'application transmitting operation 2 to management server', after step S508. As a result of the series of operations, management server 16 obtains the application (step S509).

Next, management server 16 stores the application, which is obtained in step S509, in temporary custody application area 52T (step S510).

On the contrary, in step S507, if the application, which is appointed to be downloaded, is found to be stored in application information storing unit 52, as in the case of the application whose identification number is 'AP-4125' or 'AP-4513', management server 16 skips the operations from step S508 to step S510, and moves to the operation in step S511.

Next, management server 16 checks whether the application, which is appointed to be downloaded and stored in application information storing unit 52, is encrypted or not (step S511). If the application, which is appointed to be downloaded, is given a reliability index of '1' or more than '1', the application stored in application information storing unit 52 is not encrypted. If the application, which is appointed to be downloaded, is not given a reliability index of '1' or more than '1', the application stored in application information storing unit 52 is encrypted by use of the public key of mobile terminal 11-1.

In step S511, if the appointed application, which is stored in application information storing unit 52, is not encrypted, management server 16 transmits, to authentication server 17, a request for transmitting 'PK-MT-1', namely the public key of mobile terminal 11-1 (step S512). In response to the request for transmitting the public key, authentication server 17 transmits 'PK-MT-1' to management server 16 (step S513).

After receiving 'PK-MT-1', management server 16 attaches to the application information, which indicates the location where the application should be stored in memory 12 of mobile terminal 11-1. Moreover, if the application is given a reliability index of '1' or more than '1', management server 16 also attaches the reliability index to the application. Then, management server 16 encrypts the application by use of 'PK-MT-1' (step S514). Because of this encrypting operation, the application cannot be understood by unauthorized users even if the application is wiretapped during transmission from management server 16 to mobile terminal 11-1, and unauthorized usage of the application can be prevented.

On the contrary, in step S511, if the appointed application, which is stored in application information storing unit 52, is encrypted, management server 16 skips the operations from step S512 to step S514, and moves to the operation in step S515.

Next, management server 16 encrypts the encrypted application again by use of 'SK-MS', namely the secret key of management server 16 (step S515). Because of the encrypting operation, mobile terminal 11-1 can confirm that the application is definitely transmitted by management server 16. That is to say, encryption plays the role of a certificate, which enables mobile terminal 11-1 to confirm the transmitting side of the application.

Management server 16 transmits the double-encrypted application to mobile terminal 11-1 (step S516).

After receiving the double-encrypted application, mobile terminal 11-1 transmits, to authentication server 17, a transmission request of 'PK-MS', namely the public key of management server 16 (step S517). In response to the transmission request of the public key, authentication server 17 transmits 'PK-MS' to mobile terminal 11-1 (step S518).

After receiving 'PK-MS', mobile terminal 11-1 decrypts the double-encrypted application by use of 'PK-MS' (step S519). If the decryption of the application fails, it means that the application, which mobile terminal 11-1 received was falsified during transmission, or the application was damaged due to some reason, or the application was transmitted by a server other than management server 16. Therefore, in this case, mobile terminal 11-1 transmits, to management server 16, a retransmission request of the proper application. On the contrary, if the decryption of the application by use of 'PK-MS' is successful, it is confirmed that the application was transmitted from management server 16 without any problem. Therefore, mobile terminal 11-1 decrypts the application again by use of 'SK-MT-1', namely the secret key of mobile terminal 11-1 (step S520).

According to the operations explained above, mobile terminal 11-1 obtains the application without any encryption and the information, indicating the location in memory 12 of mobile terminal 11-1 where the application should be stored. Mobile terminal 11-1 stores the received application in application area 40A of application area 41A following the information indicating the location for storing the application (step S521). In step S521, if a reliability index is attached to the received application, mobile terminal 11-1 records the reliability index in reliability information area 40R of the same management area 40 as the application is stored. If the application, which the user of mobile terminal 11-1 appointed as an application to be deleted in step S506 is stored in the area indicated by the information, the stored application is overwritten by the newly downloaded application. Then, mobile terminal 11-1 transmits, to management server 16, a notice of completion of storing the application (step S522). After the operation in step S522, mobile terminal 11-1 displays screen D26, which is the normal screen for standby used by display unit 21.

After receiving the notice of completion of storing the application, management server 16 updates the data in user information storing unit 53 and application information storing unit 52 as follows (step S523). If any application was deleted from memory 12 of mobile terminal 11 by the operations explained above, management server 16 moves the information of the application registered in downloaded application area 53A to download-ready application area 53B. Management server 16 moves the information of the application, which is newly stored in memory 12 from download-ready application area 53B to the corresponding location in downloaded application area 53A. Moreover, if the newly stored application is an application, which is temporarily stored in temporary custody application area 52T, management server 16 deletes the application from temporary custody application area 52T.

### [1.2.4] Activation of application

After mobile terminal 11 downloads an application as explained above, an activation operation needs to be executed for the application before the user of mobile terminal 11 is able to use the application.

Activation operation is a series of operations for management server 16 to permit memory controller 35 of mobile terminal 11 to use a download application. If an application, which is downloaded to memory 12 of mobile terminal 11 has no restriction concerning its term of usage, the activation operation for the application is executed just after the download operation of the application. However, if the application has a certain condition of starting time of usage, the activation operation for the application is not executed immediately after the download of the application, but executed after the starting time of usage begins.

For example, if an application for the purchase of a commuter ticket on a certain form of public transport, which becomes valid on 1 April, is purchased on 15 March and downloaded on 20 March by mobile terminal 11-1, the application cannot be used between 20 March and 31 March even if the application itself is stored in memory 12 of mobile terminal 11-1. At the time when the date changes from 31 March to 1 April, the activation operation for the application is executed, and the user of mobile terminal 11-1 is able to use the application.

Since a download operation and an activation operation is separated from each other, a user of mobile terminal 11 can download an application at his/her convenience without any restriction with regard to the period of validity for the usage of the application. From another view point, if many users of mobile terminals 11 need to download applications whose validity period for the usage start on the same date and the users need to download the applications on the very date, network congestion can easily happen on communication channels between two of management server 16, content server 20, and mobile terminal 11, because of a large number of users trying to download the application in a short period of time. However, since the size of data traffic caused by an activation operation is usually much smaller than the size of data traffic caused by the download operation of an application, the possibility of a network congestion taking place on the starting date of the validity period mentioned above, can be reduced if each user of mobile terminal 11 downloads the application at any convenient time before the activation operation is executed for the application. Following is an explanation of a flow of an activation operation.

Following are examples of some cases where an activation operation is to be executed. An activation operation is executed when an application not restricted by a validity period for usage is downloaded to mobile terminal 11-1. An activation operation is also executed when the validity period for usage of an application, which has already been downloaded to mobile terminal 11-1, commences. Moreover, an activation operation is also executed when content server 20 of the application instructs management server 16 to execute the activation operation. In the following, as an example, a flow of operations, which are executed when an activation operation is executed for an application, which is stored in management area 40-1 of mobile terminal 11-1, will be explained.

First, management server 16 transmits an activation command to mobile terminal 11-1. The activation command contains the identification number of management area 40-1 in memory 12, which will be used for specifying the application to be activated.

After communication unit 34 of mobile terminal 11-1 receives the activation command, communication unit 34 transfers the command to memory controller 35. Until memory controller 35 receives the activation command, memory controller 35 rejects all requests for permission to use functions of an application in application area 40A-1 or data in data area 40D-1, which are made by control unit 31 of mobile terminal 11-1. Therefore, until the activation command is received, the user of mobile terminal 11-1 cannot use the application, which is stored in management area 40-1.

After memory controller 35 receives the activation command, if memory controller 35 receives a request for permission to use the functions of an application in application area 40A-1 or the data in data area 40D-1 from control unit 31, memory controller 35 reads the reliability index recorded in reliability information area 40R-1 of management area 40-1. Next, memory controller 35 compares the reliability index of the requesting program, which is transmitted from control unit 31 along with the request for permission to use, and the reliability index read from reliability information area 40R-1. Only when the reliability index of the requesting program is larger than or the same as the reliability index read from reliability information area 40R-1, memory controller 35 accepts the request, and executes suitable operations according to the request for permission to use. This control operation of memory controller 35 using reliability indexes has already been explained in the preceding section on the configuration of mobile terminal 11.

After transmitting the activation command to mobile terminal 11-1, management server 16 updates the value of the item 'activation' in downloaded application area 53A of user information storing unit 53-1 to 'Yes'. Then, management server 16 reads the data stored in registration application area 52R, and if the value of the item 'collection of usage charges', which corresponds to the application to be activated, is 'Yes', management server 16 transmits, to the charge management server, the information of the application, such as the identification number of the application, the identification number of mobile terminal 11-1, the time and date of the activation operation, and so on.

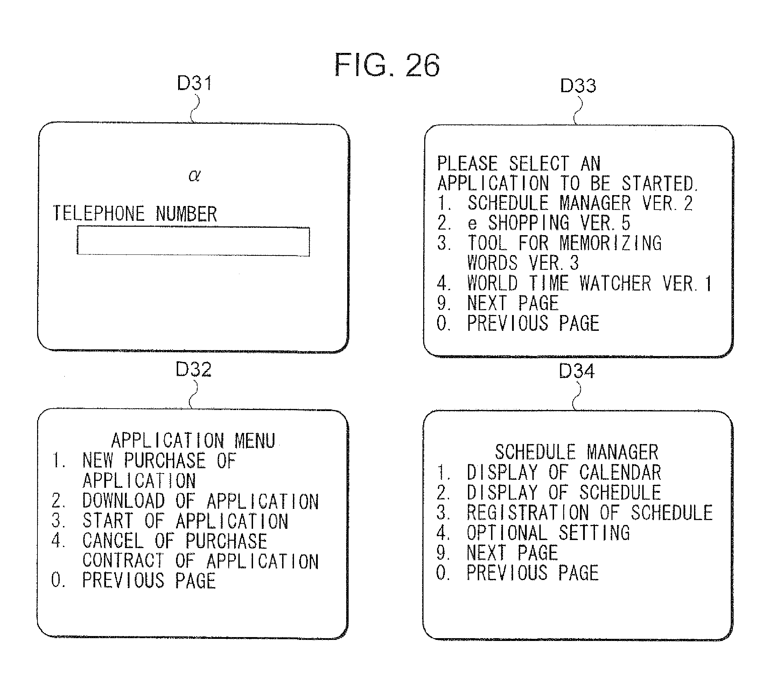

At the same time, when mobile terminal 11-1 receives the activation command, mobile terminal 11-1 displays the letter 'α' by display unit 21 to inform the user of mobile terminal 11-1 that there is an application, which has newly become usable, as shown in screen D31 of Fig.26. The letter 'α' can be replaced with another letter such as 'β' to differentiate from the completion notice in the application purchasing operation explained above. This notice can also be communicated by displaying images, making sounds, vibrating the mobile terminal, and so on.

The explanations in the preceding paragraphs refer to the activation operation. After the activation operation, if the user of mobile terminal 11-1 wants to start the application which has been activated, the user of mobile terminal 11-1 pushes appli-button 23 to make mobile terminal 11-1 display the application menu (screen D32). Next, the user of mobile terminal 11-1 pushes button '3' to appoint the item '3-Start of application', and mobile terminal 11-1 displays a screen for selecting an application from usable applications (screen D33). When the screen for selecting an application is displayed, if the user of mobile terminal 11-1 pushes button '1' to select the item '1-Schedule manager Ver.2', the selected application becomes operable (screen D34).

### [1.2.5] Deactivation of application

After an activation operation is executed for an application in mobile terminal 11-1, there may be instances when the use of the application needs to be discontinued. For example, if mobile terminal 11-1 is lost or stolen, the use of any application stored in mobile terminal 11-1 should be discontinued temporarily on the basis of a request from the user of mobile terminal 11-1. If there is a default in the payment of the usage charges for an application, or if the usage conditions for an application are violated by the user of mobile terminal 11-1, the use of the specific application stored in mobile terminal 11-1 should be discontinued temporarily in accordance with a request to do so, from the administration entity of content server 20-1 or management server 16.

In the cases mentioned above, a deactivation operation is executed. In the following, as an example, a flow of operations which are executed when a deactivation operation is executed for an application which is stored in management area 40-1 of mobile terminal 11-1, will be described.

First, management server 16 transmits a deactivation command to mobile terminal 11-1. The deactivation command contains the identification number of management area 40-1 in memory 12, which will be used for specifying the application to be deactivated.

After communication unit 34 of mobile terminal 11-1 receives the deactivation command, communication unit 34 transfers the command to memory controller 35. After memory controller 35 receives the deactivation command, memory controller 35 rejects all requests for permission to use the functions of an application in application area 40A-1 or the data in data area 40D-1, which are made by control unit 31 of mobile terminal 11-1. As a result, the user of mobile terminal 11-1 will not be able to use the application, which is stored in management area 40-1.

After transmitting the deactivation command to mobile terminal 11-1, management server 16 updates the value of the item 'activation', in downloaded application area 53A of user information storing unit 53-1 to 'No'. Then, management server 16 reads the data stored in registration application area 52R, and if the value of the item 'collection of usage charges', which corresponds to the application to be deactivated, is 'Yes', management server 16 transmits, to the charge management server, the information on the application, such as the identification number of the application, the identification number of mobile terminal 11-1, the time and date of the deactivation operation, and so on.

The explanations in the preceding paragraphs refer to the deactivation operation. After receiving a deactivation command, mobile terminal 11-1 does not display the name of the corresponding application on the screen for selecting an application from usable applications. If the application for which a deactivation operation is executed, needs to be used by the user of mobile terminal 11-1 again, the activation operation explained above needs to be executed for the application. For example, when a lost mobile terminal 11-1 is found or when the default of payment of usage charges for the application is resolved, an activation operation is executed again, but the applications, which are downloaded and stored in memory 12 of mobile terminal 11-1 and the data, which are managed by the applications, become usable again when the deactivation operation is executed.

### [1.2.6] Deletion of application

There are some instances where the use of an application in mobile terminal 11-1 needs to be stopped permanently. For example, if the user of mobile terminal 11-1 decides to cancel a purchase contract of an application, use of the application should be stopped permanently. In the same way, when the validity period of usage of an application expires, or when the user of mobile terminal 11-1 commits a serious violation of the usage conditions of an application, use of the application should also be stopped permanently. In these instances, the application is deleted from memory 12 of mobile terminal 11-1, and at the same time, information of the deleted application registered in download-ready application area 53B of user information storing unit 53-1 is also deleted. Following is an example, of a flow of operations, which are executed when a deleting operation is executed for an application stored in management area 40-1 of mobile terminal 11-1.

First, management server 16 reads the data stored in downloaded application area 53A of user information storing unit 53-1, and checks whether the application to be deleted is stored in memory 12 of mobile terminal 11-1.

If the application is stored in memory 12 of mobile terminal 11-1, management server 16 transmits a deletion command to mobile terminal 11-1. The deletion command contains the identification number of management area 40-1, which will be used for specifying the application that has to be deleted. After receiving the deletion command, communication unit 34 of mobile terminal 11-1 transfers the command to memory controller 35. When memory controller 35 receives the deletion command, memory controller 35 deletes the application and the data of the application in management area 40-1 which is appointed by the identification number. After the deleting operation, memory controller 35 of mobile terminal 11-1 transmits a completion notice of deletion to management server 16. When management server 16 receives the completion notice of deletion, management server 16 deletes information on the application from downloaded application area 53A of user information storing unit 53-1.

On the contrary, if the application to be deleted is not stored in memory 12 of mobile terminal 11-1, management server 16 deletes information on the application from download-ready application area 53B of user information storing unit 53-1.

Next, management server 16 reads the data stored in registration application area 52R, and if the value of the item 'collection of usage charges' of the application is 'Yes', management server 16 transmits, to the charge management server, information on the application such as identification number of the application, identification number of mobile terminal 11-1, the time and date of the deleting operation, and so on.

The explanations in the preceding paragraphs are related to the deleting operation. After the deleting operation, mobile terminal 11-1 does not display the name of the corresponding application on the screens for selecting an application for starting and downloading.

### [1.3] Coordinated operations between applications using reliability indexes

In the following description, a method for coordinating operations of a plurality of applications by use of their reliability indexes will be explained using examples.

As already mentioned, a plurality of applications are stored in memory 12 of mobile terminal 11-1, and each application stored in management area 40 is given a reliability index of one integer between '1' and '5'. And the reliability index is recorded in reliability information area 40R. The larger the value of the reliability index, the higher is the reliability of the application. An application with a high reliability can use functions and data of an application whose reliability is low. On the contrary, an application whose reliability is low cannot use functions or data of an application whose reliability is high. Control programs, which are managed by control unit 31 of mobile terminal 11 and stored in control memory 32, are given reliability index '5'. Regarding applications stored in free area 41, no reliability index is recorded, and when the reliability of an application stored in free area 41 and the reliability of another program need to be compared to each other, '0' is adopted as a reliability index for an application stored in free area 41.

### [1.3.1] A case where coordinated operations of applications are not permitted

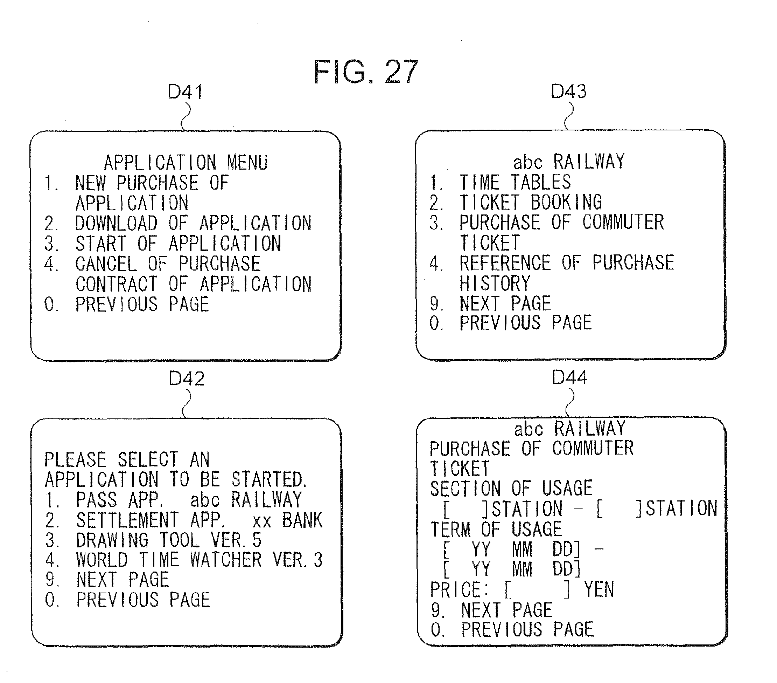

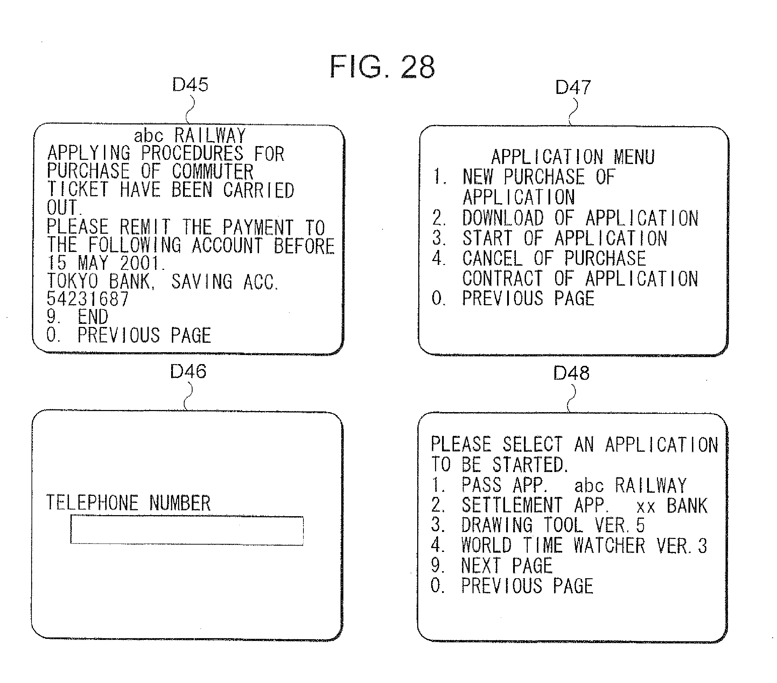

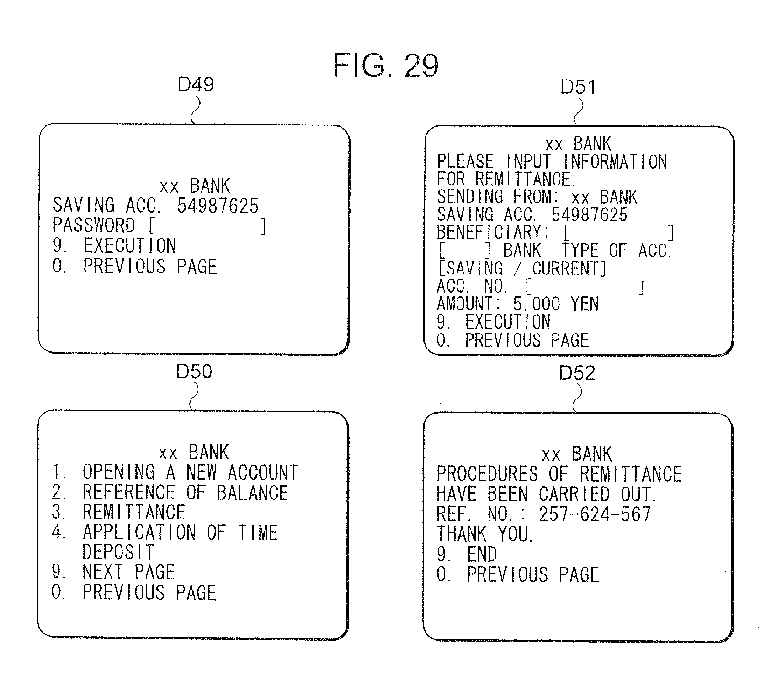

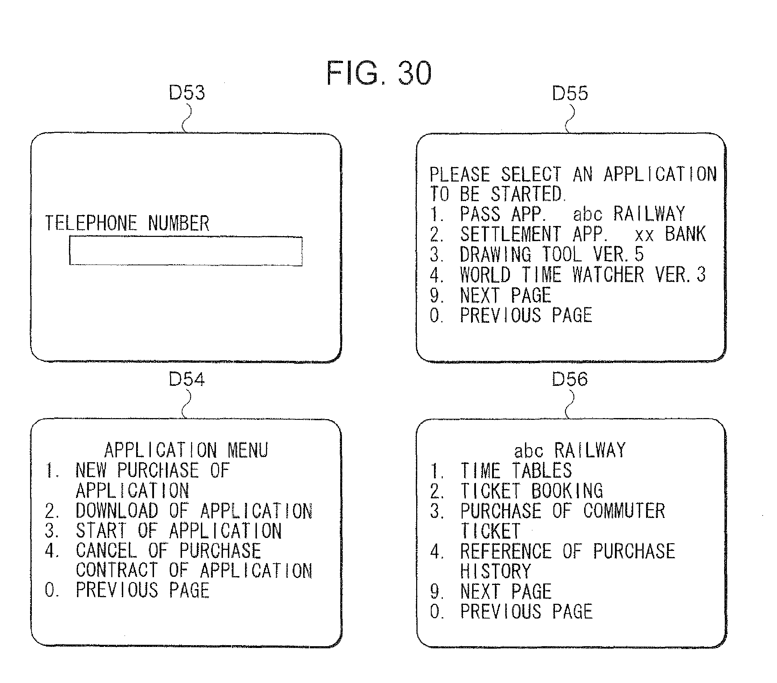

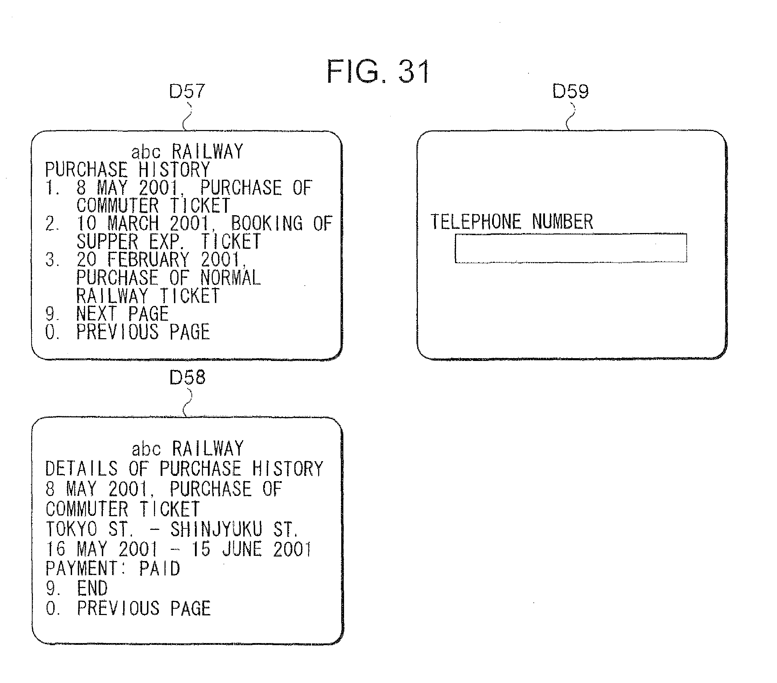

Following is an example, of an instance where an application with a smaller reliability index cannot use functions or data of an application with larger reliability index. Fig.27, Fig.28, Fig.29, Fig.30, and Fig.31 illustrate the example.

In application area 40A of management area 40-1 of mobile terminal 11-1, an application for the purchase of a commuter ticket on a certain form of public transport (referred to as 'pass application' hereinafter) is stored. An activation operation has already been executed for the pass application, and the pass application can be readily used when purchased. By using the pass application, the user of mobile terminal 11-1 can open the home page of 'abc Railroad Company', through which the user can purchase a commuter ticket, as well as get other related information such as timetables etc. If the user of mobile terminal 11-1 purchases a commuter ticket through the above-mentioned pass application, the ticket functions in the form of radio signals, which the mobile terminal sends to a ticket gate machine of 'abc Railroad Company', in response to corresponding radio wave signals sent by the ticket gate machine, as the user of the mobile terminal approaches the ticket gate, which opens automatically if the two radio signals match. Namely, mobile terminal 11-1 itself takes on the role of a commuter ticket. In this example, the reliability index of the pass application is '3'.

In application area 40A of management area 40-2, an application, which can perform the function of settling payment (referred to as 'settlement application' hereinafter) is stored. An activation operation has already been executed for the settlement application, and the settlement application can be readily used. By use of the settlement application, the user of mobile terminal 11-1 can open the home page of 'xx Bank' and in the home page, the user can remit money from his/her account to another account. The reliability index of the settlement application is '5'.

The user of mobile terminal 11-1 pushes appli-button 23 to make mobile terminal 11-1 display the application menu (screen D41) on display unit 21. Next, when screen D41 is displayed, the user pushes button '3' to make mobile terminal 11-1 display a screen for selecting an application for starting (screen D42). When screen D42 is displayed, the user pushes button '1' and selects the pass application. Mobile terminal 11-1 starts the pass application, and the pass application opens the home page of 'abc Railroad Company' (screen D43).

When screen D43 is displayed, the user pushes button '3' to select the item '3.Purchase of commuter ticket', and mobile terminal 11-1 displays screen D44. In screen D44, the user inputs data concerning section of usage and term of usage of desired commuter ticket using operating unit 22, and pushes button '9' to transmit an instruction of purchase of the commuter ticket to the home page of 'abc Railroad Company'.

Then, the pass application searches applications in memory 12 of mobile terminal 11-1, which can settle payments as explained below. Control unit 31, which executes the pass application transmits requests for reading applications stored in management areas 40, excluding management area 40-1, and free areas 41, along with the identification number of management area 40-1, to memory controller 35.

When memory controller 35 receives the requests for reading applications in management areas 40 and free areas 41 from control unit 31, memory controller 35 reads the reliability index from reliability information area 40R of management area 40-1 using the identification information of management area 40-1, which is received from control unit 31 along with the requests. In this case, the reliability index is '3'. This reliability index will be referred to as 'reliability index of requesting application' hereinafter.

Next, memory controller 35 reads the reliability indexes from reliability information areas 40R of management area 40-2, management area 40-3, ···, and management area 40-n, as the applications requested to be read, are stored in these areas. However, regarding free area 40-1, free area 40-1, ···, and free area 40-m, reliability index '0' is adopted as reliability indexes for the applications in these areas, as no reliability index is given to them. The reliability indexes obtained by this operation will be referred to as 'reliability indexes of requested applications' hereinafter.

Next, memory controller 35 compares the reliability index of the requesting application and each of the reliability indexes of the requested applications. If the reliability index of the requesting application is larger than or the same as the reliability index of the requested application, namely if the reliability index of the requested application is '3' or less than '3', memory controller 35 reads and transmits the requested application to control unit 31 according to the request. Otherwise, memory controller 35 transmits a notice of rejection to control unit 31.

In this example, the settlement application, which can settle payments, is stored in management area 40-2, but the reliability index of the requested application for management area 40-2 is '5'. Therefore, memory controller 35 rejects the request of the pass application for reading the settlement application. As a result, the pass application cannot recognize the existence of the settlement application. Therefore, the pass application fails to find an application, which can settle payments in memory 12, and mobile terminal 11-1 displays screen D45. In screen D45, the user is requested to complete remittance of the payment by himself/herself. The user writes down the information shown in screen D45 on a piece of paper, etc., and pushes button '9' to quit the pass application. As a result, the normal screen shown as screen D46 is displayed by display unit 21.

When screen D46 is displayed, the user pushes appli-button 23 to make mobile terminal 11-1 display the application menu (screen D47). When screen D47 is displayed, the user pushes button '3', and makes mobile terminal 11-1 display a screen for selecting an application for starting (screen D48). When screen D48 is displayed, the user pushes button '2' and selects the settlement application. Then, mobile terminal 11-1 starts the settlement application, and opens the home page of 'xx Bank' (screen D49).

In screen D49, the user inputs a password, and makes mobile terminal 11-1 display a screen for selecting an operation (screen D50). When screen D50 is displayed, the user pushes button '3' to select the item '3.Remittance', and screen D51 is displayed. In screen D51, the user inputs the information for remitting the payment to "abc Railroad Company' which the user wrote down, and pushes button '9' to transmit the remittance order to the home page of 'xx Bank'. 'xx Bank' receives the remittance order from mobile terminal 11-1 through the home page, and remits the payment to the appointed account of 'abc Railroad Company' following the remittance order. Then, in display unit 21 of mobile terminal 11-1, screen D52 is displayed. On the other hand, 'abc Railroad Company' confirms the remittance from 'xx Bank', and completes the operation for purchase of the commuter ticket by mobile terminal 11-1 updating the information on purchase history of mobile terminal 11-1.

When screen D52 is displayed, button '9' is pushed and mobile terminal, 11-1 displays the ordinary screen for standby shown as screen D53. When screen D53 is displayed, the user pushes appli-button 23 again to make mobile terminal 11-1 display the application menu (screen D54). When screen D54 is displayed, the user pushes button '3' to make mobile terminal 11-1 display a screen for selecting an application for starting (screen D55). When screen D55 is displayed, the user pushes button '1' to start the pass application (screen D56).

When screen D56 is displayed, if the user pushes button '4' to select the item '4.Reference of purchase history', mobile terminal 11-1 displays screen D57. When screen D57 is displayed, if the user pushes button '1', mobile terminal 11-1 displays detailed information on the status of the purchase of the commuter ticket (screen D58). In screen D58, the user can confirm that the remittance for the purchase of the commuter ticket has been confirmed by 'abc Railroad Company' and the operation for purchasing the commuter ticket has been completed successfully. Then, the user pushes button '9', and mobile terminal 11-1 displays the ordinary screen shown as screen D59 on display unit 21.

### [1.3.2] A case where coordinated operations of applications are permitted

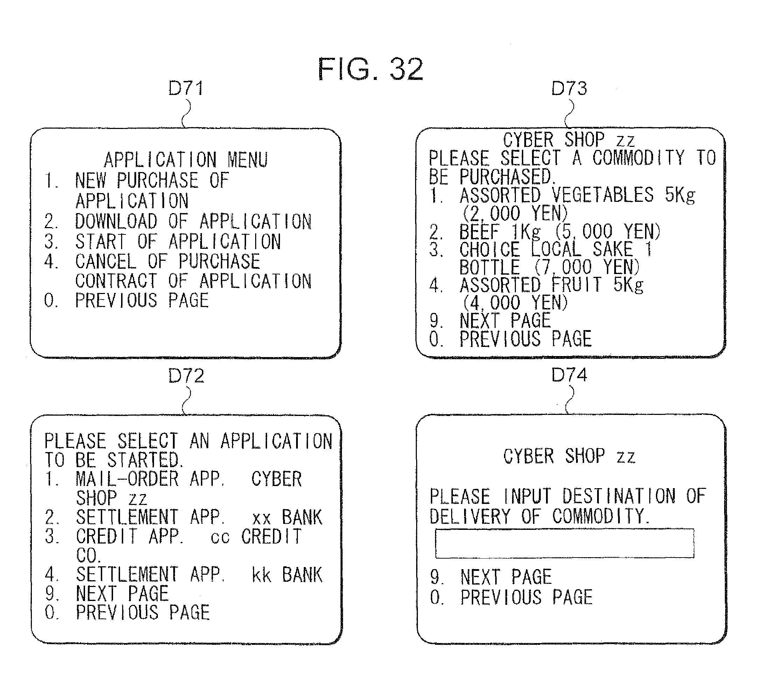

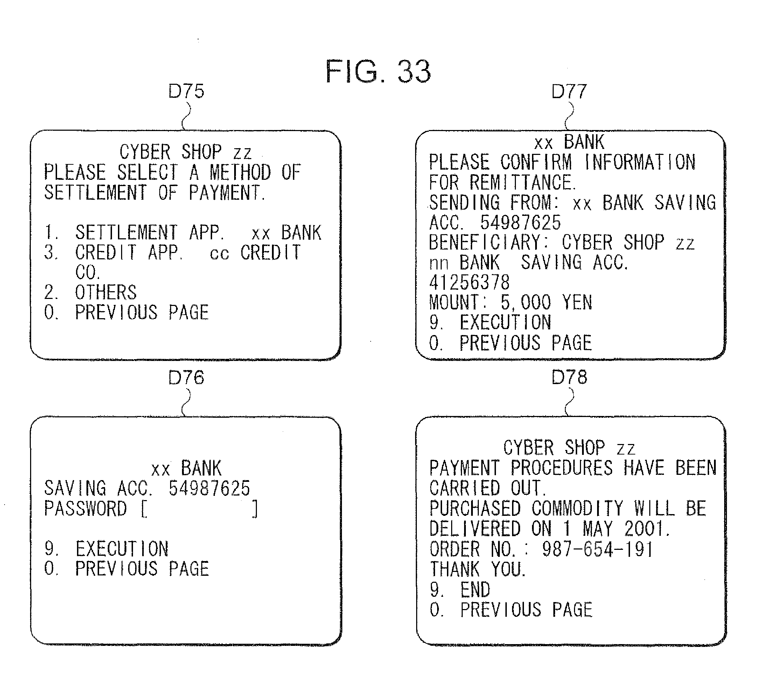

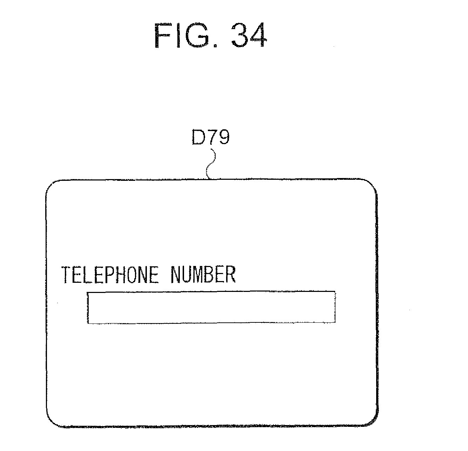

The following example describes a case where an application with a larger or the same reliability index can use functions or data of an application with a smaller or the same reliability index. Fig.32, Fig.33, and Fig.34 illustrate the example.

In application area 40A of management area 40-1 of mobile terminal 11-1, an application, which can function as mail-order shopping (referred to as 'mail-order application' hereinafter) is stored. An activation operation has already been executed for the mail-order application, and the mail-order application can now be readily used. By use of the mail-order application, the user of mobile terminal 11-1 can open the home page of 'Cyber Shop zz', and in the home page, the user can purchase various kinds of commodities. The reliability index of the mail-order application is '4'.

In application area 40A of management area 40-2, as in the previous example, the settlement application is stored. An activation operation has already been executed for the settlement application, and the settlement application is now ready to be used. The settlement application will be referred to as 'settlement application 1' hereinafter. The reliability index of settlement application 1 is '4'.

In application area 40A of management area 40-3, an application, which performs the function of settling payments by credit (referred to as 'credit application' hereinafter) is stored. An activation operation has already been executed for the credit application, and the credit application is now ready to be used. By use of the credit application, the user of mobile terminal 11-1 can open the home page of 'cc Credit Company', and in the home page, the user can order settlement of payments by credit. The reliability index of the credit application is '4'.

In application area 40A of management area 40-4, an application, which has the same kind of function as that of settlement application 1, is stored. The application can open the home page of 'kk Bank' instead of 'xx Bank', and in the home page, the user can order several operations such as remittance of payments. An activation operation has already been executed for the application, and the application is now ready to be used. The settlement application will be referred to as 'settlement application 2' hereinafter. The reliability index of settlement application 1 is '5'.

First, the user of mobile terminal 11-1 pushes appli-button 23 to make display unit 21 display the application menu (screen D71). When screen D71 is displayed, the user pushes button '3' to make mobile terminal 11-1 display a screen for selecting an application for starting (screen D72). When screen D72 is displayed, the user pushes button '1' to select the mail-order application. Mobile terminal 11-1 starts the mail-order application, and the mail-order application opens the home page of 'Cyber Shop zz' (screen D73).

When screen D73 is displayed, if the user pushes button '2' to select the purchase of beef, the mail-order application displays a screen for inputting information of delivery destination of the ordered commodity (screen D74). In screen D74, the user inputs information of delivery destination of the purchased commodity, and pushes button '9'. Then, the mail-order application searches applications in memory 12 of mobile terminal 11-1, which can settle payments. In the following example it is supposed that the user has input '1-1-1 Shinjyuku-ku, Tokyo' as delivery destination. The flow of operations that follow in this case, for searching applications, which can settle payments is the same as the flow of operations explained above with regard to the pass application.

In the operation for searching applications, which can settle payments, the reliability index of the mail-order application of the requesting side of the requests for reading other applications in memory 12, is '4'. Since the reliability index of settlement application 1, which is one of the receiving sides of the requests for reading applications, is '4', memory controller 35 accepts the request from the mail-order application to be able to read settlement application 1, and transmits information on the functions of the settlement application 1 to control unit 31, which executes, the mail-order application. Similarly, the reliability index of the credit application also being '4', memory controller 35 transmits information on functions of the credit application to control unit 31. On the contrary, the reliability index of settlement application 2 is '5', and it is larger than the reliability index of the mail-order application of the requesting side, namely '4'. Therefore, memory controller 35 rejects the request of control unit 31 for reading settlement application 2, and the information on functions of settlement application 2 is not transmitted to the mail-order application. As a result, the mail-order application recognizes that settlement application 1 and the credit application can be used as applications for settling payments, and displays screen D75.

In screen D75, if the user decides to use settlement application 1 for settling the payment, and pushes button '1', the mail-order application transmits a request for permitting to read settlement application 1 to memory controller 35. At the same time, the mail-order application gives, to settlement application 1, an order of transaction, which should be executed by settlement application 1 and necessary information for executing the transaction. To put it more concretely, control unit 31, which executes the mail-order application, requests memory controller 35 to write an order for a remittance operation to be carried out, and the necessary information for the remittance operation in data area 40D-2 of management area 40-2, which is allotted to settlement application 1. The information for the remittance contains information as follows: the amount is 5,000 yen, the receiver is 'Cyber Shop xx', the receiving account is a saving account in 'nn Bank' whose account number is '41256378', the purpose is payment for 1kg of beef, and the delivery destination of the commodity is '1-1-1 Shinjyuku-ku, Tokyo'.

Memory controller 35 compares the reliability index of the requesting application of the reading request and the writing request, and the reliability index of the requested application of the requests, and accepts the requests. As a result, control unit 31 executes settlement application 1.

Then, settlement application 1 requests the user of mobile terminal 11-1 to input a password for authentication of personal identification, by displaying screen D76. In screen D76, if the user of mobile terminal 11-1 inputs a correct password, settlement application 1 displays screen D77. In this step, the necessary information for the remittance is read by settlement application 1 from data area 40D-2 of management area 40-2, and the information has already been input in screen D77. Therefore, the user does not need to input the information.

When screen D77 is displayed, the user confirms the information for the remittance, and pushes button '9'. Then, settlement application 1 transmits an order of the remittance to the home page of 'xx Bank'. In this step, settlement application 1 also transmits the necessary information for the remittance such as the information of purchased commodity, the delivery destination of the purchased commodity, etc. to the home page of 'xx Bank'.

When 'xx Bank' receives the order of the remittance, the information of purchased commodity, the delivery destination of the purchased commodity, etc. from mobile terminal 11-1 through the home page, 'xx Bank' remits the appointed payment to 'Cyber Shop zz' along with the information of purchased commodity, the delivery destination of the purchased commodity, etc. 'Cyber Shop zz' confirms the remittance from 'xx Bank', and it is informed that 1kg of beef is ordered to be delivered to '1-1-1 Shinjyuku-ku, Tokyo'. As a result, 'Cyber Shop zz' proceeds with a delivery operation for the purchased commodity, and transmits to mobile terminal 11-1 a confirmation of payment for the purchase, along with information such as the date of delivery and the ordering number.

When settlement application 1, which is executed by control unit 31 of mobile terminal 11-1, receives the confirmation of payment from 'Cyber Shop zz', settlement application 1 transmits to memory controller 35 a request for executing the mail-order application, which called settlement application 1, and a request for writing information, such as the date of delivery and the ordering number, in data area 40D-1, which is managed by the mail-order application. In this step, memory controller 35 also compares the reliability index of the requesting application and the reliability index of the requested application, and accepts the requests. As a result, control unit 31 starts the mail-order application, which was closed in the middle of a series of operations, and the mail-order application displays screen D78 after reading the date of delivery and the ordering number from data area 40D-1. When screen D78 is displayed, the user confirms the information, which is sent from 'Cyber Shop zz', and pushes button '9'. Then mobile terminal 11-1 ends the operation and displays the ordinary screen shown as screen D79.

As explained above, an application, which is given a high reliability value, is allowed to obtain high value information such as monetary information and personal information from other applications directly, and allowed to call functions of other applications, which manage high value information. Moreover, if a reliability index of an application is '5', the application is allowed to call control applications, which are stored in control memory 32, and to use data, which are managed by the control programs. As a result, the operations that users must perform, can be simplified. Regarding information security, as already explained, only the applications which pass examinations conducted by the administration entity of management server 16 are given a high reliability value, and the administration entity of management server 16 checks, if necessary, whether the applications, which are given a high reliability value are falsified or not. Therefore, users can be guaranteed security when using applications with high value information.

### [2] Second embodiment

As explained below, the only difference between the first and the second embodiments, is that, in the second embodiment, reliability related information instead of reliability indexes, is used for coordinating operations. To a large extent, the features of the second embodiment are the same as those of the first embodiment, therefore only the aspects, which are different between the two embodiments, will be described. In the following explanation, names and symbols, which are used for various components in the first embodiment, will be used for all the corresponding components in the second embodiment without any alteration.

### [2.1] Configuration and functions of authorization data

In the second embodiment, when the administration entity of management server 16 is requested to examine an application of content server 20, the administration entity of management server 16 determines the rights for reading the application, the rights for reading data, the rights for editing data, and the rights for deleting data with regard to the newly examined application and each of the applications, which were examined in the past.

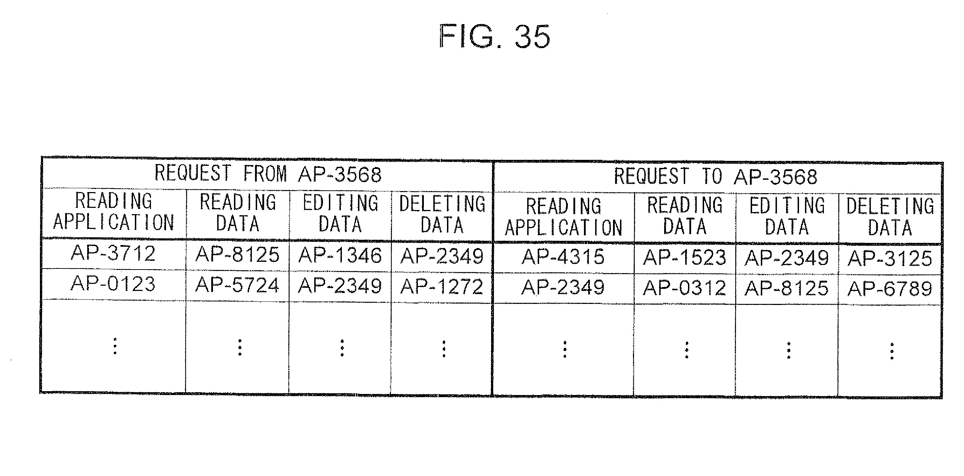

Following is an example, where an application, whose identification number is 'AP-3568', is newly examined. The application will be referred to as 'application AP-3568', in the same manner that other applications are also referred to by their identification numbers. Fig.35 gives an example of data indicating rights for application 'AP-3568' and will be referred to as 'authorization data' hereinafter.

The data in the first column of Fig.35 indicate applications allowed to be read by application 'AP-3568'. For example, if control unit 31 needs to use any function of application 'AP-3712' when application 'AP-3568' is under execution, control unit 31 transmits to memory controller 35 a request for permitting to read application 'AP-3712'. Application 'AP-3712' is indicated in the first column of authorization data for application 'AP-3568'. On the basis of the data, memory controller 35 accepts the request for permitting to read application 'AP-3712' when memory controller 35 receives the request. After accepting the request, memory controller 35 reads application 'AP-3712' from application area 40A of management area 40, and transmits it to control unit 31.

The data in the second column of Fig.35 indicate applications whose data application 'AP-3568' is allowed to read. For example, if control unit 31 needs to use any data of application 'AP-8125' when application 'AP-3568' is under execution, control unit 31 transmits to memory controller 35 a request for permitting to read data of application 'AP-8125'. Application 'AP-8125' is indicated in the second column of the authorization data for application 'AP-3568'. On the basis of the data, memory controller 35 accepts the request for permitting to read the data of application 'AP-3712' when memory controller 35 receives the request. After accepting the request for permitting to read the data, memory controller 35 reads the requested data from data area 40D of management area 40 where application 'AP-8125' is stored, and transmits the data to control unit 31.

The data in the third column of Fig.35 indicates applications whose data application 'AP-3568' is allowed to edit, and data in the fourth column of Fig.35 indicates applications whose data application 'AP-3568' is allowed to delete.

On the contrary, the data in the fifth column of Fig.35 indicates applications, which are allowed to read application 'AP-3568'. For example, if control unit 31 needs to use any function of application 'AP-3568' when application 'AP-4315' is under execution, control unit 31 transmits to memory controller 35 a request for permitting to read application 'AP-3568'. Application 'AP-4315' is indicated in the fifth column of authorization data for application 'AP-3568'. On the basis of the data, memory controller 35 accepts the request for permitting to read application 'AP-3568' when memory controller 35 receives the request. After accepting the request, memory controller 35 reads application 'AP-3568' from application area 40A of management area 40, and transmits it to control unit 31.

Similarly, the data in the sixth column of Fig.35 indicates applications, which are allowed to read the data of application 'AP-3568'; the data in the seventh column of Fig.35 indicates applications, which are allowed to edit the data of application 'AP-3568'; and the data in the eighth column of Fig.35 indicates applications, which are allowed to delete the data of application 'AP-3568'.

### [2.2] Registration and update of reliability related information

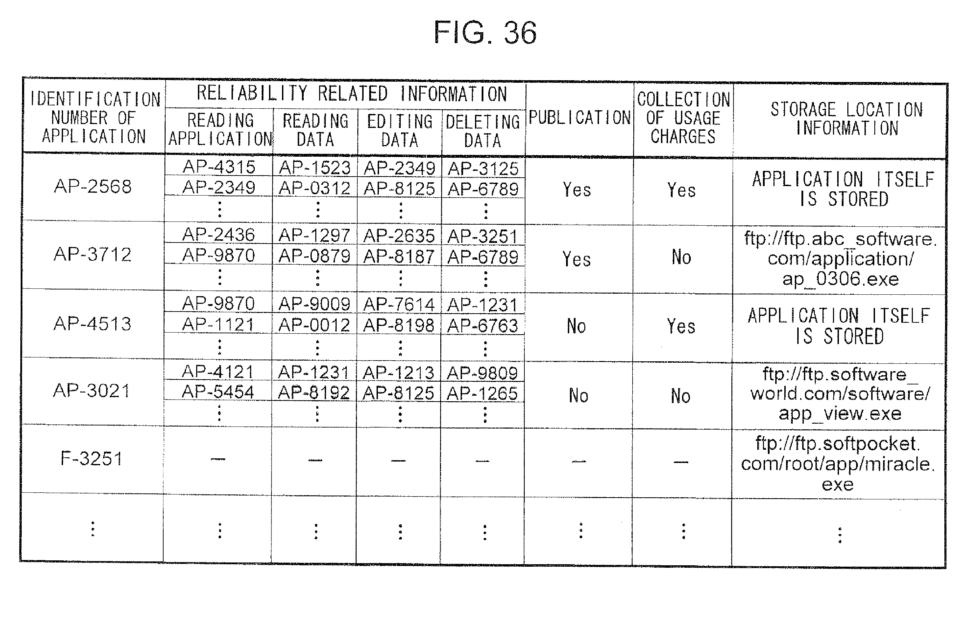

As shown in Fig.36, registration application area 52R of application information storing unit 52 of management server 16 has the item 'reliability related information', instead of the item 'reliability index' as in the first embodiment. When the administration entity of management server 16 completes the examination of application 'AP-3568', it inputs authorization data, shown in Fig.35, into management server 16. After the authorization data are input into management server 16, management server 16 creates a new record for application 'AP-3568' in registration application area 52R, and stores the data of the fifth, the sixth, the seventh, and the eighth columns of the authorization data in the item 'reliability related information' of the new record.

Next, management server 16 updates the data in the item 'reliability related information, which correspond to applications indicated in any of the columns from the first column to the fourth column of the authorization data. For example, since application 'AP-3712' is indicated in the first column of the authorization data of application 'AP-3568', management server 16 adds the identification number of application 'AP-3568' to the sub-item 'reading application' in the item 'reliability related information' of the record corresponding to application 'AP-3712' in registration application area 52R.

Next, management server 16 reads the data in downloaded application area 53A of each of user information storing unit 53-1, user information storing unit 53-2, ···, and user information storing unit 53-k. Then, from each of the columns, from the first column to the fourth column of the authorization data of application 'AP-3568', management server 16 lists up all user information storing units 53, whose data of the item 'reliability related information' were updated in the above-mentioned operation. Namely, management server 16 lists up all of user information storing units 53, which contain identification numbers of applications indicated in the authorization data of application 'AP-3568'. Then, management server 16 adds the identification number of application 'AP-3568' to the corresponding sub-item of the item 'reliability related information' of user information storing units 53 which are listed up. Then, management server 16 transmits a notice that the identification number of application 'AP-3568' was added to the item 'reliability related information', to mobile terminals 11, which correspond to user information storing units 53 to which the identification number of application 'AP-3568' was added. For example, according to the data of user information storing unit 53-1 shown in Fig.7, mobile terminal 11-1 stores application 'AP-0123' in application area 40A-2 of management area 40-2 of memory 12. Application 'AP-0123' is indicated in the first column of the authorization data shown in Fig.35, and application 'AP-3568', which is newly examined, is given a right to read application 'AP-0123'. Therefore, management server 16 transmits, to mobile terminal 11-1, a notice that the identification number of application 'AP-3568' was newly entered in the sub-item 'reading application' of the item 'reliability related information' corresponding to application 'AP-0123' in user information storing unit 53-1.

When mobile terminal 11 downloads an application, which has passed the examination of its contents, into memory 12, reliability related information corresponding to the application is also downloaded into mobile terminal 11 along with the application. Memory controller 35 of mobile terminal 11 records the reliability related information, which was downloaded along with the application, in reliability information area 40R of management area 40 allotted to the application.

As mentioned in the preceding example, when mobile terminal 11-1 receives a notice from management server 16 that the identification number of application 'AP-3568' has been newly entered in the sub-item 'reading application' of the item 'reliability related information' in user information storing unit 53-1, which corresponds to application 'AP-0123', memory controller 35 of mobile terminal 13-1 includes the identification number of application 'AP-3568' in the item 'reading application' of the data stored in reliability information area 40R-2 of management area 40-2, which is allotted to application 'AP-0123'.

According to the above-mentioned operations, the data stored in registration application area 52R of application information storing unit 52 and the data recorded in reliability information area 40R of management area 40 of each mobile terminal 11 are always updated and only new data is kept.

### [2.3] Coordinated operations between applications using reliability related information

When an application needs to use functions or data of another application in mobile terminal 11, control unit 31 transmits a request for permitting to use the application, or the data of the application, as well as the identification number of the memory area where the application, which has been requested, is stored (referred to as 'requested application's area number' hereinafter), and the identification number of the application, which makes the request, to memory controller 35.

If the memory area, which is appointed by the requested application's area number, is one of the memory areas of management areas 40, memory controller 35, when receiving the request from control unit 31, reads the reliability related information from reliability information area 40R of management area 40 allotted to the requested application. Next, memory controller 35 checks whether the identification number of the requesting application is contained in the item, which corresponds to the content of the request in the reliability related information. For example, if control unit 31, which is under the execution of application 'AP-2568' transmits to memory controller 35 a request for permitting to read application 'AP-0123' stored in application area 40A-2, memory controller 35 reads the reliability related information from reliability information area 40R-2, and checks whether the identification number of application 'AP-2568' is contained in the item 'reading application' of the reliability related information. If the identification number of the requesting application is contained in the corresponding item, memory controller 35 accepts the request of control unit 31, and executes operations following the request. On the contrary, if the identification number of the requesting application is not contained in the item 'reading application', memory controller 35 rejects the request of control unit 31.

According to the operations of memory controller 35 carried out by using reliability related information as explained above, operations, which are coordinated between applications, can be managed with flexibility.

### [3] Third embodiment

In the third embodiment, the flow of operations for delivering an application is different from that of the first embodiment, but to a large extent the features of the third embodiment are the same as those of the first embodiment. Therefore, the following description will cover only those aspects of the third embodiment, which are different from the first embodiment; while names and symbols used for components of the third embodiment, which correspond with those of the first embodiment will be used without any alteration.

### [3.1] Overall configuration of application delivery system

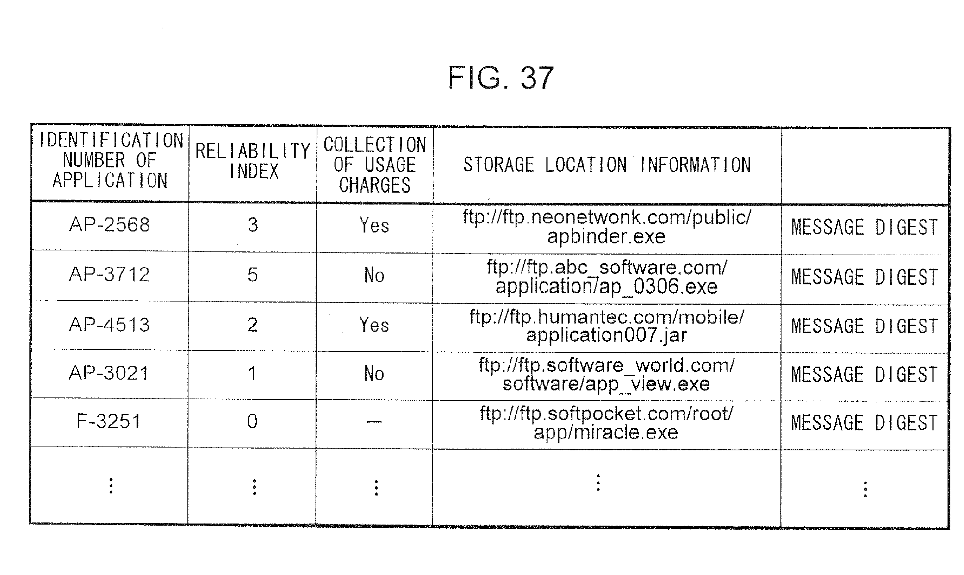

In the third embodiment, just as in the first embodiment, when the administration entity of content server 20 requests an examination of an application, the application is examined by the administration entity of management server 16, and a reliability index is given to the application. However, in the third embodiment, after the reliability index is given to the application, the administration entity of management server 16 creates a message digest of the application by use of a hash function. Since a data set created from an original data set by use of a hash function is irreversible, an application cannot be restored from a message digest of the application. However, there is almost no possibility of the same message digest being created from applications having different contents, as contents of each application almost certainly differ, however slightly. Therefore, if any part of the content of an application is changed, the message digest created from the original application by use of a hash function, and the message digest created from the changed application by use of the same hash function will not be the same. Since the size of a message digest is usually much smaller than that of the application corresponding to the message digest, message digests do not require large storage space, and can be transmitted more quickly. The administration entity of management server 16 stores the created message digest in application information storing unit 52 along with the reliability index of the application. Fig.37 shows an example of data stored in application information storing unit 52 in the third embodiment. However, Fig. 37 does not show the item 'publication', because in the third embodiment, management server 16 does not publicize to mobile terminal 11, the information on applications, which are given reliability indexes.

Furthermore, in the third embodiment, applications themselves are not stored in application information storing unit 52, as they are done in the first embodiment, but are stored in content servers 20, which are providers of the applications. Therefore, in the data format shown in Fig. 37, no application is listed in the item 'storage location information', but only URLs, which indicate the storage location of each application, are stored.

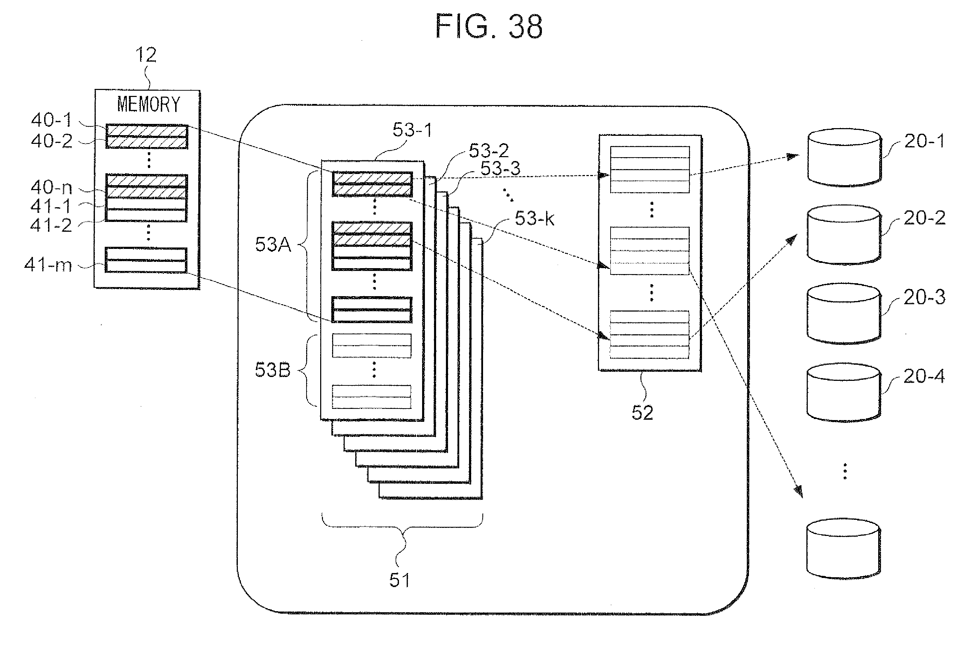

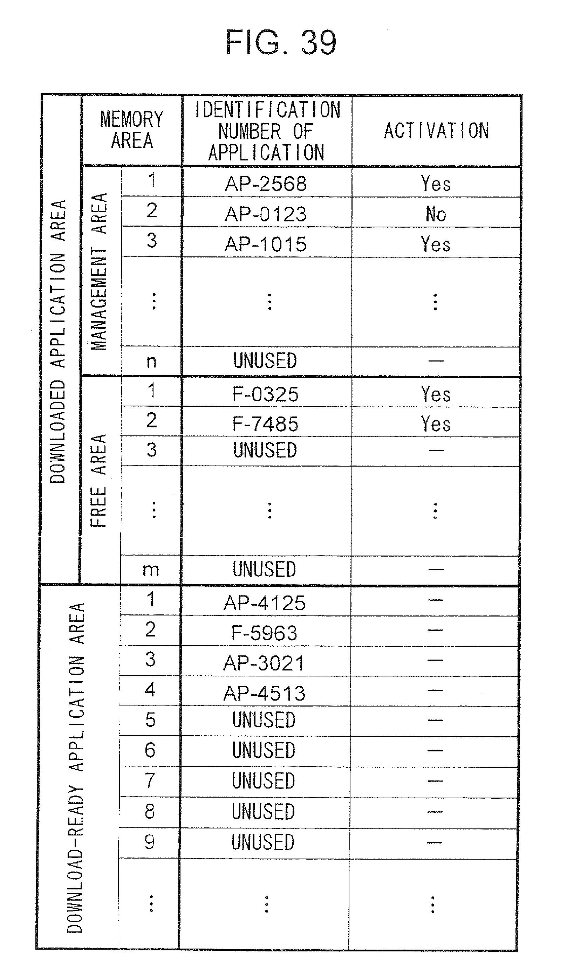

In addition, in the third embodiment, content servers 20, which are providers of applications, always deliver their applications directly to each mobile terminal 11. In the third embodiment, therefore, it is not necessary to create temporary custody application area 52T in application information storing unit 52 of management server 16. Also, the item 'storage number' listed in user information storing unit 53 of management server 16, which is present in the first embodiment for specifying each application stored in temporary custody application area 52T, is not included in the third embodiment as this is also unnecessary. Fig.38 is a diagram showing a configuration of the application information management system in the third embodiment, and Fig.39 is a format chart showing an example of data stored in user information storing unit 53 in the third embodiment.

Moreover, in the third embodiment, when memory controller 35 of mobile terminal 11-1 receives a message digest from management server 16, memory controller 35 stores the message digest temporarily. Then, when memory controller 35 of mobile terminal 11-1 receives an application, which is given a reliability index of '1' or more than '1' through communication unit 34, memory controller 35 creates a message digest of the received application, and verifies the newly created message digest against the message digest, which was received from management server 16.

### [3.2] Delivery of application

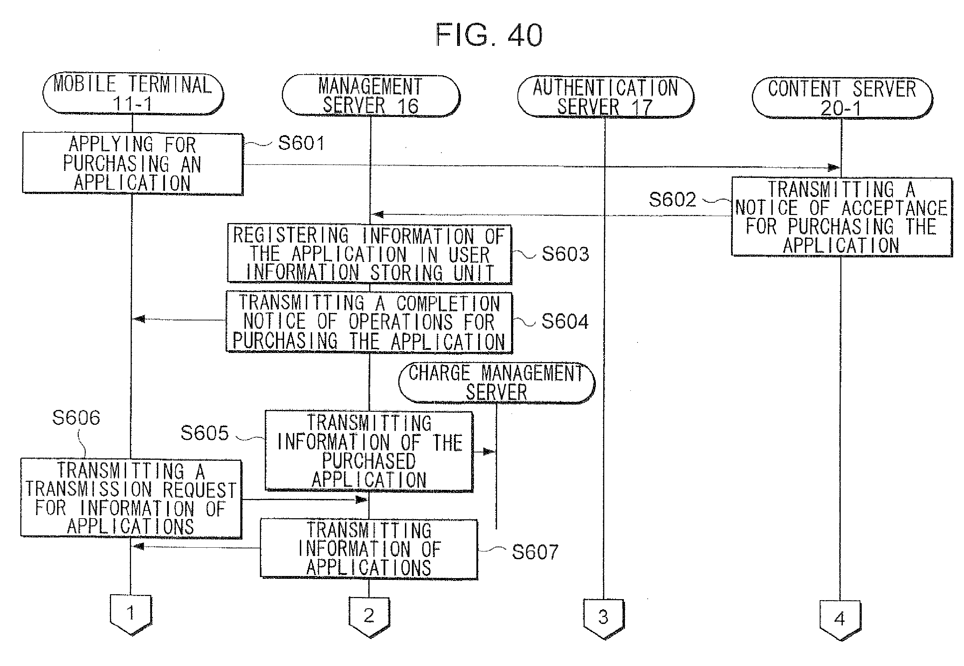

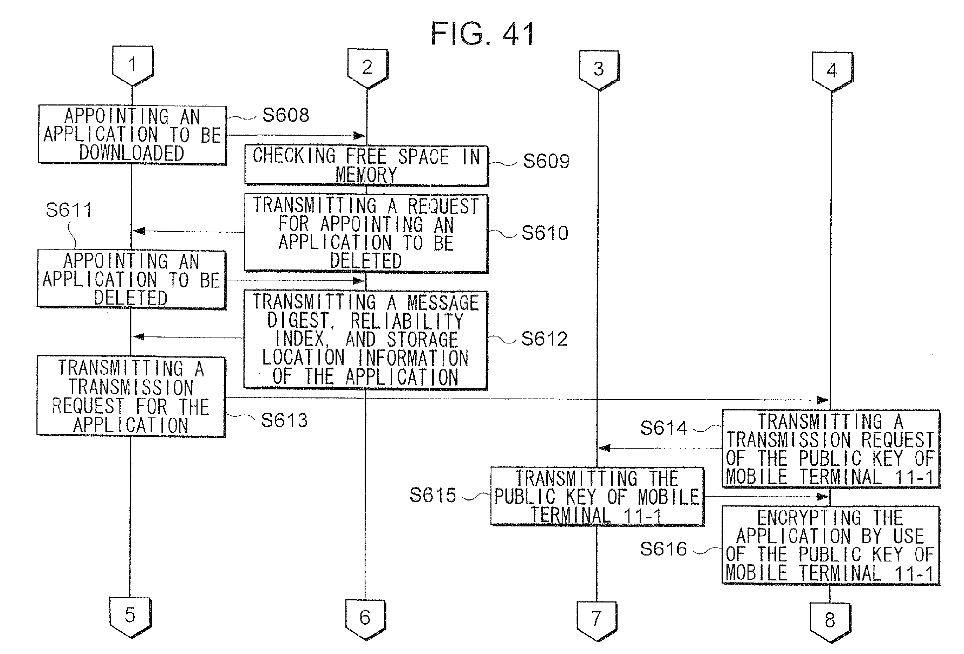

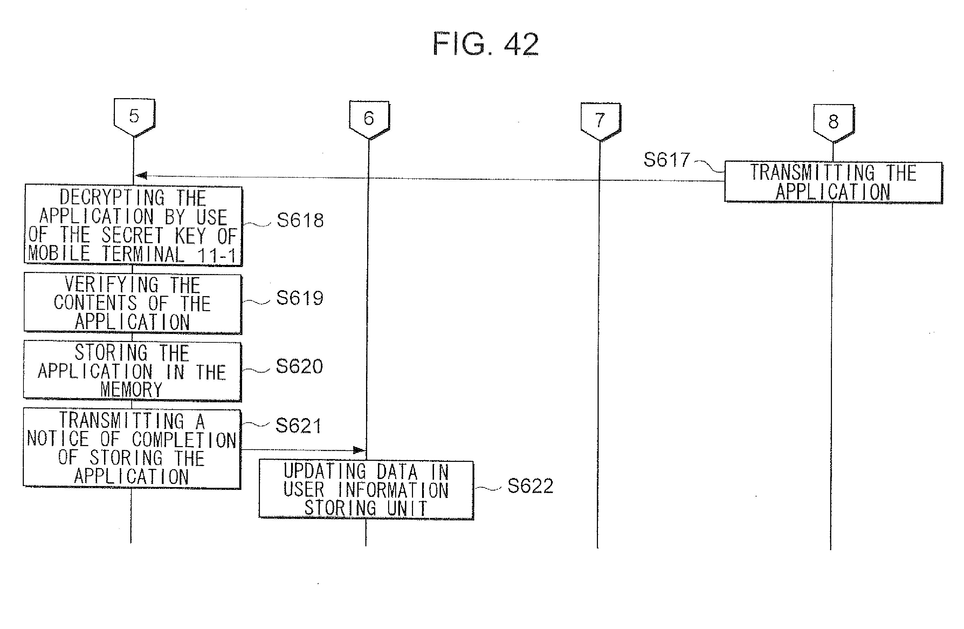

A series of operations, to be executed when the user of mobile terminal 11-1 purchases and downloads an application, which is given a reliability index of '1' or more than '1', and whose provider is content server 20-1, will be described with reference to Fig.40, Fig.41, and Fig.42. The screens displayed by display unit 21 of mobile terminal 11-1 in the flow of operations, which are explained below, are the same as those in Fig.21, which were used for explaining the download operation in the first embodiment. Therefore, Fig.21 is also referred to in the following explanation.

The user of mobile terminal 11-1, for example, displays a home page of content server 20-1 in mobile terminal 11-1, and applies for purchasing the application given in the home page (step S601). The user of mobile terminal 11-1 also follows the procedure for settling the usage charges of the application.

Content server 20-1 checks whether the contents of purchase request meet the requirements, and if the contents of purchase request meet the requirements, content server 20-1 transmits, to management server 16, a notice of acceptance for purchasing the application (step S602). The notice of acceptance for purchasing the application contains the identification number of mobile terminal 11-1, which purchases the application, and the identification number of the purchased application. When content server 20-1 transmits the notice of acceptance, content server 20-1 records the identification number of mobile terminal 11-1, whose request for purchasing the application is accepted.

After receiving the notice of acceptance from content server 20-1, management server 16 specifies the mobile terminal, which purchased the application, according to the identification number of the mobile terminal contained in the received notice of acceptance. Next, management server 16 registers the identification number of the application contained in the notice of acceptance in download-ready application area 53 of user information storing unit 53-1, which corresponds to mobile terminal 11-1 (step S603).

Next, management server 16 transmits a completion notice of operations for purchasing the application, to mobile terminal 11-1 (step S604). When mobile terminal 11-1 receives the completion notice of operations for purchasing the application, mobile terminal 11-1 displays the letter 'α' on display unit 21 for informing the user of mobile terminal 11-1 that the newly purchased application is ready to be downloaded from management server 16.

If the purchased application is an application whose usage charge is managed by management server 16, management server 16 transmits, to the charge management server, the information of the purchased application such as the identification number of the application, the identification number of mobile terminal 11-1, time and date of purchase of the application, etc. (step S605).

The user of mobile terminal 11-1 pushes appli-button 23 of mobile terminal 11-1 to display an application menu shown as screen D21. When screen D21 is displayed, the user of mobile terminal 11-1 pushes button '2' of operating unit 22 to select the item '2.Download of application'. When button '2' is pushed down, mobile terminal 11-1 transmits, to management server 16, a request for transmitting information of applications, which can be downloaded to mobile terminal 11-1 (step S606).

After receiving the request for transmitting information of applications, management server 16 transmits, to mobile terminal 11-1, names of applications and identification numbers of applications, which are registered in download-ready application area 53B of user information storing unit 53-1, as the information of applications (step S607).

After receiving the information of applications, mobile terminal 11-1 displays screen D22. In response to the screen, the user of mobile terminal 11-1 can appoint an application, which the user wants to download by pushing a button whose number corresponds to the number of the application on the screen. For example, if the user pushes button '1' when screen D22 is displayed, the application titled schedule manager Ver.2' is appointed. When an application is appointed by an operation of the user of mobile terminal 11-1, mobile terminal 11-1 transmits the identification number of the appointed application to management server 16 (step S608).

After receiving the identification number of the appointed application, management server 16 reads the data stored in downloaded application area 53A and checks whether memory 12 of mobile terminal 11-1 has enough free space for storing the appointed application (step S609)

In step S609, if memory 12 of mobile terminal 11-1 does not have enough free space for storing the appointed application, management server 16 transmits, to mobile terminal 11-1, a request for appointing an application, which is to be deleted from memory 12 (step S610). When mobile terminal 11-1 receives the request for appointing an application, mobile terminal 11-1 displays screen D23 on display unit 21. In response to the message on the screen, if the user of mobile terminal 11-1 pushes button '9' to instruct the execution of the following operations, mobile terminal 11-1 displays screen D24 on display unit 21. On screen D24, the names of applications, which are stored in management area 40, are listed. In response to the information displayed on the screen, the user of mobile terminal 11-1 can appoint an application, which is to be deleted from memory 12 by pushing a button whose number corresponds to the number of the application on the screen. Mobile terminal 11-1 transmits the identification number of the appointed application to management server 16 (step S611). After the operation in step S611 is carried out, mobile terminal 11-1 displays screen D25 on display unit 21.

On the contrary, in step S609, if memory 12 of mobile terminal 11-1 has enough free space for storing the application appointed for downloading, the operations in step S610 and step S611 are skipped, and management server 16 moves to the operation in step S612, in which case, mobile terminal 11-1 displays screen D25 on display unit 21.

Next, management server 16 reads the information concerning the appointed application, namely message digest of the application, the reliability index of the application, the storage location information of the application, etc., from application information storing unit 52, by use of the identification number of the application, and transmits the information to mobile terminal 11-1 (step S612).

When mobile terminal 11-1 receives the message digest of the application, the reliability index of the application, the storage location information of the application, etc., from management server 16, mobile terminal 11-1 transmits to content server 20-1, a request for transmitting the application by use of the storage location information of the application (step S613). The request for transmitting the application contains the identification number of mobile terminal 11-1 and the identification number of the application.

After receiving the request for transmitting the application, content server 20-1 checks whether the identification number contained in the request for transmitting the application, matches the identification number of the mobile terminal, for which content server 20-1 accepted the request for purchasing the application in step S602. If these identification numbers match, content server 20-1 transmits to authentication server 17, a request for transmitting 'PK-MT-1, namely the public key of mobile terminal 11-1 (step S614). In response to the request for transmitting 'PK-MT-1', authentication server 17 transmits 'PK-MT-1' to content server 20-1 (step S615).

After receiving 'PK-MT-1',content server 20-1 encrypts the application, which is to be transmitted, by use of 'PK-MT-1' (step S616).

Because of this encryption, unauthorized users cannot understand the application in the instance that the application is wiretapped during transmission from content server 20-1 to mobile terminal 11-1. As a result, unauthorized usage of the application can be prevented.

Then, content server 20-1 transmits the encrypted application to mobile terminal 11-1 (step S617).

When mobile terminal 11-1 receives the encrypted application, mobile terminal 11-1 decrypts the application using 'SK-MT-1', namely the secret key of mobile terminal 11-1 (step S618).

Next, mobile terminal 11-1 creates a message digest of the application, which is not encrypted after the operation in step S608, and verifies the newly created message digest and the message digest, which was received from management server 16 through the operation in step S612 (step S619). If the message digest from management server 16, which is a certificate of content of the application created just after the completion of the examination of the application, and the newly created message digest match, it is confirmed that the application received by mobile terminal 11-1 from content server 20-1 has not been altered. On the other hand, if these message digests do not match, the application is not stored in memory 12, and mobile terminal 11-1 transmits to management server 16, a notice of failure of receiving the proper application.

In step S619, if the message digests match, mobile terminal 11-1 stores the application in one of application areas 40A of management areas 40 in memory 12 (step S620).In step S609, if memory 12 does not have enough free space for storing the application, the newly received application is written in the management area 40 where an application appointed to be deleted in step S611, is stored. In step S609, if there is enough free space in the memory, the received application is written in one of management areas 40, which do not store any application.

After mobile terminal 11-1 completes the operation of storing the application, mobile terminal 11-1 transmits to management server 16, a notice of completion of storing the application (step S621). After the operation in step S621, mobile terminal 11-1 displays an ordinary screen on display unit 21 shown as screen D26.

After receiving the notice of completion of storing the application, management server 16 updates the data in user information storing unit 53 as follows (step S622). If an application is deleted from memory 12 of mobile terminal 11 through the operations explained above, management server 16 moves the information of the application registered in downloaded application area 53A to download-ready application area 53B. Management server 16 moves the information of the application, which is newly stored in memory 12 from download-ready application area 53B to the corresponding location in downloaded application area 53A.

The description given in the preceding paragraphs is that of the flow of operations executed when a user of mobile terminal 11 purchases and downloads an application whose reliability index is '1' or more than '1'. On the contrary, if a user of mobile terminal 11 purchases and downloads an application whose reliability index is '0', management server 16 does not need to transmit a message digest and a reliability index of the application to mobile terminal 11-1, and, only the operations in steps S601 to S604, steps S606 to S611, steps S613 to S618, and steps S620 to S622 described in Fig.40 are followed. Moreover, in this case, the list of applications for appointing an application deletion displayed in step S610 and in step S611 is a list of applications stored in free area 41 instead of the list of applications stored in management area 40.

According to the operations explained above, an application is stored in memory 12 of mobile terminal 11-1, but the application is not activated. Therefore, the user of mobile terminal 11-1 needs to execute an activation operation to make the newly purchased application usable. The activation operation in the third embodiment is the same as in the first embodiment. The deactivation operation and the deleting operation in the third embodiment are also the same as those in the first embodiment.

### [4] Modifications

### [4.1] First modification

In the first modification, the application delivery system contains a plurality of management servers. The plurality of management servers may be synchronized with one another, and the data in their databases are frequently updated. When any of the mobile terminals or content servers needs to communicate with a management server, they can choose any one of the management servers, which can speed up the process of communication. According to the first modification, the overall speed of a transaction in the application delivery system and the durability of the management servers against system failures are improved, because the management servers carry out their tasks in a distributed processing system.

### [4.2] Second modification

In the second modification, users of mobile terminals have several options of locations for storing applications in the mobile terminals in addition to internal memories of the mobile terminals, such as several kinds of IC card memories, User Identification Modules (UIMs), and external storage devices, which can be connected to the mobile terminals. According to the second modification, applications can easily be shared and moved among several mobile terminals by replacing these recording media, which contain applications.

### [4.3] Third modification

In the third modification, mobile terminals comprise input/output interfaces by which mobile terminals communicate with other information terminals through cables or radio wave, which are different from the mobile communication network. Therefore, mobile terminals can obtain applications from other information terminals through their input/output interfaces.

### [4.4] Fourth modification

In the fourth modification, management servers can differentiate the identification numbers listed in the application information storing unit of each of the applications whose contents are the same, but whose providers are different from each other. Moreover, if necessary, each of the applications is given a different reliability index from those of others. According to the fourth embodiment, for example, applications provided by reliable content providers are given high reliability indexes and applications provided by less reliable content providers are given low reliability indexes. As a result, different conditions can be given to applications of the same contents.

### [4.5] Fifth modification

In the fifth modification, an application can occupy a plurality of memory areas in the memory of a mobile terminal. Therefore, even an application of a large size can be processed by a mobile terminal.

### [4.6] Sixth modification

In the sixth modification, management areas for storing applications, whose contents are examined and free areas for storing applications, whose contents are not examined, can be switched from one to the other. The memory controller manages application information whether an application in a memory area is given a reliability index or not, and it does not mistakes an application in a management area with an application in a free area. Therefore, if there is a shortage of free space in management areas, for example, free areas with free space can be switched into management areas. As a result, a more efficient utilization of memory area can be achieved.

### [4.7] Seventh modification

In the seventh modification, a third party entity, which is different from the administration entity of the management server, conducts examinations of applications and provides information on the reliability of the applications. The information on the reliability provided by the third party entity is transmitted to the management server, and used by the management server and the mobile terminals.

The third party entity manages a content authentication server, and the content authentication server publishes to the management server, a certificate for an application, when the application is transmitted from a content server to the management server. The management server confirms whether the application has been changed because of falsification by the content server, etc.

To put it more concretely, after examining an application, the third party entity creates a message digest of the application by use of a hash function. When the management server receives the application from a content server, the management server transmits to the content authentication server, a request for transmitting the message digest, which corresponds to the application. In response to the request, the content authentication server transmits the message digest to the management server. After receiving the message digest, the management server creates a message digest of the application by use of the same hash function, which the third party entity used, and verifies the message digest received from the content authentication server and the newly created message digest. According to the verification, the management server can confirm that the received application is a proper one.

In the seventh modification, there is no need for the management server to obtain an application without encryption, since the third party entity guarantees the contents. Therefore, for example, content servers can deliver applications, which are encrypted by use of public keys of mobile terminals, to the mobile terminals through the management server. Since the management server can confirm that the contents of the applications are not changed, there is no need for the management server to check the transmitter of the applications. As a result, content servers can transmit applications to the management server without encrypting them by use of secret keys of the content servers.

### [4.8] Eighth modification

In the eighth modification, reliability related information is used for managing requests of an application for using functions or data of another application or a control program, and the reliability related information provides indications with regard to each of the relations between the various functions and data, which are used for judging whether the requests should be accepted or not.

According to the eighth modification, a mobile terminal can carryout flexible controls of coordinated operations in which, for example, application A is allowed to call function 1 of application B but not allowed to call function 2 of application B.

### [5] Effects of the Invention

As explained above, according to methods, systems, or apparatuses of the present invention, a plurality of applications stored in the memory of a mobile terminal can be coordinated and executed. At the same time, because a memory controller strictly supervises data exchanges between the applications and calls for functions of other applications on the basis of information on reliability given to each of the applications, the risk of leakage and destruction of high value data such as personal information and monetary data is reduced. As a result, when applications are executed in mobile terminals, both of improvement of user friendliness of the mobile terminals and maintenance of information security are realized.

According to a first aspect, there has been described a method for managing programs, said method comprising a program-obtained step of a mobile terminal obtaining a program, which can be executed by said mobile terminal, and storing said program in a memory of said mobile terminal, a coordination information-obtaining step of said mobile terminal obtaining coordination information, which is used for managing at least one of start of another program, which is other than said program, by said program and communication of data with said other program, and storing said coordination information in a memory of said mobile terminal, and an operation-managing step of said mobile terminal determining conditions of at least one of start of said other program and communication of data with said other program on the basis of said coordination information, which corresponds to said program, in the instance that said other program is requested to execute an operation when said program, which is stored in said memory, is under execution.

Preferably, in the first aspect, said mobile terminal obtains said coordination information, from a managing server for managing said coordination information, through a communication network, in said coordination information-obtaining step.

Preferably, in the first aspect, said mobile terminal obtains said program, from a delivering server for delivering programs, through a communication network, in said program-obtaining step.

Preferably, in the first aspect, said method further comprises a certificate-preparing step of a certification server, which is able to communicate with said mobile terminal through a communication network, preparing certificate information for certifying correctness of at least one of said program and said coordination information, and a certificate information-obtaining step of said mobile terminal obtaining said certificate information from said certification server through said communication network, wherein said mobile terminal permits or prohibits an operation of said program in said mobile terminal on the basis of said certificate information.

Preferably, in the first aspect, said certificate information is prepared by encryption of at least one of said program and said coordination information by use of a cryptograph key, and said mobile terminal permits said operation of said program in the instance that at least one of said program and said coordination information, which is encrypted, is able to be decrypted.

Preferably, in the first aspect, said cryptograph key is a secret key in a public key system.

Preferably, in the first aspect, said certificate information is a message digest which is a digest of at least one of said program and said coordination information, and said mobile terminal permits said operation of said program on the basis of a result of verification between said certificate information and a message digest of at least one of said program and said coordination information, which is generated by said mobile terminal.

Preferably, in the first aspect, said method further comprises a storage data-preparing step of said managing server preparing storage data concerning the state of storage of said program in said mobile terminal, a management data-preparing step of said managing server preparing management data for managing said program in said mobile terminal on the basis of said storage data, and a management data-obtaining step of said mobile terminal obtaining said management data from said managing server, wherein said mobile terminal manages said program in said mobile terminal on the basis of said management data.

Preferably, in the first aspect, said mobile terminal permits or prohibits an operation of said program in said mobile terminal on the basis of said management data.

Preferably, in the first aspect, said mobile terminal notifies a permission of said operation of said program, by use of at least one of letter, image, sound, and vibration, in the instance that said mobile terminal permits said operation of said program.

Preferably, in the first aspect, said mobile terminal deletes said program in said mobile terminal on the basis of said management data.

Preferably, in the first aspect, said communication network contains a service-charge levying server for managing service-charge accounts of said program, and said method further comprises a service-charge data-obtaining step of said service-charge levying server obtaining at least a part of said management data as service-charge data, wherein said service-charge levying server manages said service-charge accounts of said program on the basis of said service-charge data.

Preferably, in the first aspect, said method further comprises a request-obtaining step of said managing server obtaining a preparation request for preparing transmission of a program, and a transmission-preparing step of said managing server preparing transmission of said program to said mobile terminal in response to said preparation request, wherein said mobile terminal obtains said program, which is prepared for transmission in said transmission-preparing step, in said program-obtaining step.

Preferably, in the first aspect, said managing server prepares at least one of said program and location information, which indicates location where said program is stored, in said transmission preparing step.

Preferably, in the first aspect, said method further comprises a completion notice-transmitting step of said managing server transmitting a completion notice for notifying completion of preparing transmission of said program, to said mobile terminal, when said transmission-preparing step is completed, and a completion notice-receiving step of said mobile terminal receiving said completion notice from said managing server, wherein said mobile terminal notifies that said program is ready for transmission, by use of at least one of letter, image, sound, and vibration, when said mobile terminal receives said completion notice.

Preferably, in the first aspect, said communication network contains a service-charge levying server for managing service-charge accounts of said program, a preparation data-preparing step of said managing server preparing transmission preparation data, which indicate that preparation for transmission of said program to said mobile terminal is completed in response to said preparation request, and a service-charge data-obtaining step of said service-charge levying server obtaining at least a part of said transmission preparation data as service-charge data, wherein said service-charge levying server manages said service-charge accounts of said program on the basis of said service-charge data.

According to a second aspect there has been described a program management system, said system comprising a communication network, which contains a delivering server, a managing server, and a mobile terminal, wherein said delivery server comprises a program-storing unit for storing a program, and a program-transmitting unit for transmitting said program to said mobile terminal, said managing server comprises a coordination information-storing unit for storing coordination information, concerning control of coordinated operations of said program and another program, which is other than said program, and a coordination information-transmitting unit for transmitting said coordination information to said mobile terminal, and said mobile terminal comprises a program-receiving unit for receiving said program from said delivering server, a coordination information-receiving unit for receiving said coordination information from said managing server, a program-storing unit for storing said program, a coordination information-storing unit for storing said coordination information, and an operation-managing unit for determining conditions of at least one of start of said other program and communication of data with said other program on the basis of said coordination information, which corresponds to said program, in the instance that said other program is requested to execute an operation when said program is under execution.

According to a third aspect there has been described a server for a communication network containing a mobile terminal, said server comprising a coordination information-storing unit for storing coordination information, which is used for determining conditions of at least one of start of a program and communication of data with said program in the instance that said program is requested to execute an operation when another program, which is other than said program, is under execution, and a coordination information-transmitting unit for transmitting said coordination information to said mobile terminal.

Preferably, in the third aspect, said server further comprises a certificate-preparing unit for preparing certificate information for certifying correctness of at least one of said program and said coordination information, and a certificate-transmitting unit for transmitting said certificate information to said mobile terminal.

Preferably, in the third aspect, said certificate-preparing unit comprises an encrypting unit for encrypting at least one of said program and said coordination information.

Preferably, in the third aspect, said encrypting unit comprises a secret key-storing unit for storing a secret key in a public key system.

Preferably, in the third aspect, said certificate-preparing unit comprises a message digest-preparing unit for preparing a message digest, which is a digest of at least one of said program and said coordination information.

Preferably, in the third aspect, said server further comprises a storage data-preparing unit for preparing storage data concerning the state of storage of said program in said mobile terminal, a management data-preparing unit for preparing management data for managing said program in said mobile terminal on the basis of said storage data, and a management data-transmitting unit for transmitting said management data to said mobile terminal.

Preferably, in the third aspect, said server further comprises a service-charge data-transmitting unit for transmitting at least a part of said management data as service-charge data to a service-charge levying server for managing service-charge accounts, contained in said communication network.

Preferably, in the third aspect, said server further comprises a request-receiving unit for receiving a preparation request for requesting said program-transmitting unit to prepare transmission of said program, and a transmission-preparing unit for preparing transmission of said program to said mobile terminal in response to said preparation request.

Preferably, in the third aspect, said transmission-preparing unit comprises a preparation information-storing unit for storing at least one of said program and location information, which indicates location where said program is stored.

Preferably, in the third aspect, said server further comprises a completion notice-transmitting unit for transmitting a completion notice for notifying completion of preparing transmission of said program, to said mobile terminal, when preparation for transmission of said program is completed.

Preferably, in the third aspect, said server further comprises a preparation data-preparing unit for preparing transmission preparation data, which indicate that preparation for transmission of said program to said mobile terminal is completed in response to said preparation request, and a service-charge data-transmitting unit for transmitting at least a part of said transmission preparation data as service-charge data to a service-charge levying server for managing service-charge accounts, contained in said communication network.

According to a fourth aspect there has been described a mobile terminal comprising a program-storing unit for storing a program, a coordination information-storing unit for storing coordination information concerning control of coordinated operations of said program and another program, which is other than said program, and an operation-managing unit for determining conditions of at least one of start of said other program and communication of data with said other program on the basis of said coordination information in the instance that said other program is requested to execute an operation when said program is under execution.

According to a fifth aspect there has been described a mobile terminal contained in a communication network, which contains a delivering server for delivering programs and a managing server for managing programs, wherein said mobile terminal comprises a program-receiving unit for receiving a program from said delivering server, a program-storing unit for storing said program, a coordination information-receiving unit for receiving coordination information concerning control of coordinated operations of said program and another program, which is other than said program, from said managing server, a coordination information-storing unit for storing said coordination information, and an operation-managing unit for determining conditions of at least one of start of said other program and communication of data with said other program on the basis of said coordination information in the instance that said other program is requested to execute an operation when said program is under execution.

Preferably, in the fifth aspect, said mobile terminal further comprises a certificate-receiving unit for receiving certificate information for certifying correctness of at least one of said program and said coordination information, from said managing server, and an operation-permitting unit for permitting or prohibiting an operation of said program on the basis of said certificate information.

Preferably, in the fifth aspect, said operation-permitting unit comprises a decrypting unit for decrypting at least one of said program and said coordination information in the instance that at least one of said program and said coordination information is encrypted.

Preferably, in the fifth aspect, said decrypting unit comprises a public key-storing unit for storing a public key of said managing server in a public key system.

Preferably, in the fifth aspect, said operation-permitting unit comprises a message digest-preparing unit for preparing a message digest, which is a digest of at least one of said program and said coordination information.

Preferably, in the fifth aspect, said mobile terminal further comprises a management data-receiving unit for receiving management data for managing said program, from said managing server, and a managing unit for managing said program on the basis of said management data.

Preferably, in the fifth aspect, said mobile terminal further comprises a notifying unit for notifying a permission of said operation of said program, by use of at least one of letter, image, sound, and vibration, in the instance that said managing unit permits said operation of said program.

Preferably, in the fifth aspect, said mobile terminal further comprises a request-transmitting unit for transmitting a preparation request for preparing transmission of said program, to said managing server.

Preferably, in the fifth aspect, said mobile terminal further comprises a completion notice-receiving unit for receiving a completion notice for notifying completion of preparing transmission in response to said preparation request, from said managing server, and a notifying unit for notifying that said program is ready for transmission, by use of at least one of letter, image, sound, and vibration, when said completion notice is received.

According to a sixth aspect there has been described a program, said program permitting a computer of a managing server for managing programs in a communication network, which contains a mobile terminal to transmit coordination information, which is used in said mobile terminal for determining conditions of at least one of start of a program and communication of data with said program in the instance that said program is requested to execute an operation when another program, which is other than said program, is under execution, to said mobile terminal.

Preferably, in the sixth aspect, said program further permits said computer of said managing server to prepare certificate information for certifying correctness of at least one of a program, which is executed in said mobile station, and said coordination information, and transmit said certificate.

According to a seventh aspect there has been described a program, said program permitting a computer of a mobile terminal to obtain coordination information concerning control of coordinated operations of programs, and determine conditions of at least one of start of a program and communication of data with said program in the instance that said program is requested to execute an operation when another program, which is other than said program, is under execution.

Preferably, in the seventh aspect, said program further permits said computer of said mobile terminal to obtain certificate information for certifying correctness of at least one of said program, said other program, and said coordination information, and permit or prohibit operations of at least one of said program and said other program on the basis of said certificate information.

According to an eighth aspect there has been described a record medium, said medium containing a program for permitting a computer of a managing server for managing programs in a communication network, which contains a mobile terminal to transmit coordination information, which is used in said mobile terminal for determining conditions of at least one of start of a program and communication of data with said program in the instance that said program is requested to execute an operation when another program, which is other than said program, is under execution, to said mobile terminal.

According to a ninth aspect there has been described a record medium, said medium containing a program according to the eighth aspect, said program further permitting said computer of said managing server to prepare certificate information for certifying correctness of at least one of a program, which is executed in said mobile station, and said coordination information, and transmit said certificate.

According to a tenth aspect there has been described a record medium, said medium containing a program for permitting a computer of a mobile terminal to obtain coordination information concerning control of coordinated operations of programs, and determine conditions of at least one of start of a program and communication of data with said program in the instance that said program is requested to execute an operation when another program, which is other than said program, is under execution.

According to an eleventh aspect there has been described a record medium, said medium containing a program according to the tenth aspect, said program further permitting said computer of said mobile terminal to obtain certificate information for certifying correctness of at least one of said program, said other program, and said coordination information, and permit or prohibit operations of at least one of said program and said other program on the basis of said certificate information.

## Claims

1. Mobile terminal (11) in an application delivery system for receiving and storing at least one application in combination with reliability information, comprising:
a memory controller (35) configured to enable access to at least one of data and features associated with an first and second application already stored in the mobile terminal (11) as a function of the reliability information of the received first and second application,
wherein the reliability information is a reliability index and the mobile terminal is configured to compare a value of the reliability index of a first application to a value of the reliability index of a second application, the mobile terminal further configured to enable the first application to access at least one of features and data associated with the second application when the value of the reliability index of the second application is one of equal and less than the value of the reliability index of the first application.

2. Application delivery system for transmitting at least one application to a mobile terminal, comprising:
a management server (16) in an application delivery system for receiving a first and second application to be transmitted to at least one mobile terminal and storing data on the first and second application, comprising:
- a user information storing unit (53) configured to store information to recognize which application is already distributed to the mobile terminal (11) and which application is to be distributed to the mobile terminal;
- an application information storage unit (52) configured to store reliability information indicating the operational relationship with at least one further application; and
at least one mobile terminal (11) for receiving and storing the first and second application from the management server in combination with the reliability information, comprising:
- a memory controller (35) configured to enable access data and features associated with the first and second application already stored in the mobile terminal as a function of the reliability information of the first and second application; and
wherein the reliability information is a reliability index and the mobile terminal is configured to compare a value of the reliability index of a first application to a value of the reliability index of a second application, the mobile terminal further configured to enable the first application to access at least one of features and data associated with the second application when the value of the reliability index of the second application is one of equal and less than the value of the reliability index of the first application.

3. Method for a mobile terminal (11) in an application delivery system for receiving and storing at least one application in combination with reliability information, comprising:
enabling access to at least one of data and features associated with an application already stored in the mobile terminal (11) as a function of the reliability information of the received application, wherein the reliability information is a reliability index;
comparing a value of the reliability index of a first application to a value of the reliability index of a second application; and
enabling the first application to access at least one of features and data associated with the second application when the value of the reliability index of the second application is one of equal and less than the value of the reliability index of the first application.
